# EUROPÄISCHE PATENTSCHRIFT

(11) **EP 3 244 331 B1**
(45) Veröffentlichungstag und Bekanntmachung des Hinweises auf die Patenterteilung: **06.03.2019**
(21) Anmeldenummer: 17170136.0
(22) Anmeldetag: 09.05.2017
(51) Int. Cl.: G06F 21/31

(54) **VERFAHREN ZUM LESEN VON ATTRIBUTEN AUS EINEM ID-TOKEN**
METHOD FOR READING ATTRIBUTES FROM AN ID TOKEN
PROCÉDÉ DE LECTURE D'ATTRIBUTS À PARTIR D'UN JETON D'IDENTIFICATION

(30) Priorität: 10.05.2016 DE 102016208040
(43) Veröffentlichungstag der Anmeldung: 15.11.2017
(73) Patentinhaber: Bundesdruckerei GmbH, 10969 Berlin (DE)
(72) Erfinder: Wirth, Klaus-Dieter, 12683 Berlin (DE); Scholze, Steffen, 13469 Berlin (DE); Schwan, Matthias, 10437 Berlin (DE); Müller, Frank, 10435 Berlin (DE); Filzhuth, Elke, 12359 Berlin (DE)
(74) Vertreter: Richardt Patentanwälte PartG mbB

(56) Entgegenhaltungen:
- "Advanced Security Mechanisms for Machine Readable Travel Documents and eIDAS Token - Part 2", , 16. Dezember 2014 (2014-12-16), XP055257174, Gefunden im Internet: URL:www.bsi.bund.de/SharedDocs/Downloads [gefunden am 2016-03-10]
- "Technical Guideline eID-Server", , 15. Januar 2014 (2014-01-15), XP055256439, Gefunden im Internet: URL:https://www.bsi.bund.de/SharedDocs/Dow nloads/DE/BSI/Publikationen/TechnischeRich tlinien/TR03130/TR-03130_TR-eID-Server_Par t1.pdf?__blob=publicationFile

## Beschreibung

Die Erfindung betrifft ein Verfahren zum Lesen von Attributen aus einem ID-Token, einen ID-Token und ein Computersystem.

Aus dem Stand der Technik sind verschiedene Verfahren zur Verwaltung der so genannten digitalen Identität eines Benutzers bekannt:
Microsoft Windows CardSpace ist ein Client-basiertes digitales Identitätssystem, welches es Internetbenutzern ermöglichen soll, deren digitale Identität gegenüber Online-Diensten mitzuteilen. Nachteilig ist hierbei unter anderem, dass der Nutzer seine digitale Identität manipulieren kann.

Bei OPENID handelt es sich dagegen um ein Server-basiertes System. Ein so genannter Identity-Server speichert eine Datenbank mit den digitalen Identitäten der registrierten Nutzer. Nachteilig ist hieran unter anderem ein mangelhafter Datenschutz, da die digitalen Identitäten der Nutzer zentral gespeichert werden und das Nutzerverhalten aufgezeichnet werden kann.

Aus US 2007/0294431 A1 ist ein weiteres Verfahren zur Verwaltung der digitalen Identitäten bekannt, welches ebenfalls eine Nutzerregistrierung erfordert.

Aus DE 10 2008 000 067 A1 ist ein Verfahren zum Lesen von zumindest einem Attribut aus einem ID-Token bekannt, von dem die vorliegende Erfindung als dem nächstkommenden Stand der Technik ausgeht. Weiterbildungen dieses Verfahrens sind in den Patentanmeldungen DE 10 2008 040 416, DE 10 2008 042 262, DE 10 2009 026 953, DE 10 2009 027 723, DE 10 2009 027 681 und DE 10 2010 028133 offenbart.

Die Technische Richtlinie TR-03 110-2 "Advanced Security Mechanisms for Machine Readable Travel Documents and eIDAS Token - Part 2" beschreibt die Verwendung des elektronischen Personalausweises. Sie zeigt ein Verfahren zum Lesen und Aktualisieren von Attributen aus einem ID-Token (eIDAS), bei dem fehlende Attribute nach einer gegenseitigen Authentifizierung von einem Attribut-Provider bereitgestellt werden. Der Erfindung liegt demgegenüber die Aufgabe zugrunde, ein verbessertes Verfahren zum Lesen von Attributen aus einem ID-Token zu schaffen einen entsprechenden ID-Token, ein entsprechendes Attribut-Provider-Verzeichnis-Computersystem, ein entsprechendes Attribut-Provider-Computersystem, ein entsprechendes Nutzer-Computersystem und Computersystem.

Die der Erfindung zugrunde liegenden Aufgaben werden jeweils mit den Merkmalen der unabhängigen Patentansprüche gelöst. Ausführungsformen der Erfindung sind in den abhängigen Ansprüchen angegeben. Ausführungsformen der Erfindung sind frei miteinander kombinierbar sofern sie sich nicht gegenseitig ausschließen. Unter einem "ID-Token" wird hier insbesondere ein tragbares elektronisches Gerät verstanden, welches zumindest einen geschützten elektronischen Datenspeicher zur Speicherung der Attribute und eine Kommunikations-Schnittstelle zum Auslesen der Attribute aufweist. Der Speicherbereich ist geschützt, um zu verhindern, dass das in dem Speicherbereich gespeicherte Attribut in unerlaubter Weise verändert oder ohne die dafür erforderliche Berechtigung ausgelesen wird. Mit anderen Worten kann auf den Speicherbereich nur dann zugegriffen werden, wenn eine hierzu erforderliche Zugriffberechtigung gegeben ist.

Insbesondere kann es sich bei dem ID-Token um einen USB-Stick handeln oder ein Dokument, insbesondere ein Wert- oder Sicherheitsdokument. Unter einem "Dokument" werden erfindungsgemäß papierbasierte und/oder kunststoffbasierte Dokumente verstanden, wie zum Beispiel elektronische Ausweisdokumente, insbesondere Reisepässe, Personalausweise, Visa sowie Führerscheine, Fahrzeugscheine, Fahrzeugbriefe, Firmenausweise, Gesundheitskarten oder andere ID-Dokumente sowie auch Chipkarten, Zahlungsmittel, insbesondere Banknoten, Bankkarten und Kreditkarten, Frachtbriefe oder sonstige Berechtigungsnachweise, in die ein Datenspeicher zur Speicherung des zumindest einen Attributs integriert ist.

Bei dem ID-Token kann es sich um einen Hardwaretoken handeln oder um einen Softtoken, wenn dieser kryptografisch an einen Hardwaretoken, das heißt beispielsweise an ein sogenanntes Secure Element, gebunden ist.

Insbesondere kann ein solcher kryptografisch an ein Secure Element gebundener Softtoken gemäß DE 10 2011 082 101, deren Offenbarungsgehalt voll umfänglich zum Offenbarungsgehalt der vorliegenden Patentanmeldung gemacht wird, erzeugt werden.

Unter einem "ID-Provider-Modul" wird hier ein Programmlogik-Modul verstanden, welches dazu ausgebildet ist, Attribute aus dem ID-Token eines Nutzers auszulesen und eine Attributspezifikation in den ID-Token zu schreiben. Das ID-Provider-Modul kann z.B. als Softwarekomponente aber auch als Computersystem ausgebildet sein. Das ID-Provider-Modul kann z.B. als ID-Provider-Computersystem ausgebildet sein welches vorzugsweise in einem sogenannten Trustcenter betrieben wird, um ein möglichst hohes Maß an Sicherheit zu schaffen. In manchen Ausführungsformen gehören das ID-Provider-Modul und das Dienst-Computersystem zur gleichen IT-Infrastruktur, z.B. zum gleichen Intranet einer Firma. Es ist sogar möglich, dass das ID-Provider-Modul auf dem Dienst-Computersystem installiert und ausgeführt wird, sodass es sich in diesem Fall bei dem ID-Provider-Modul und dem Dienst-Computersystem, bzw. dem auf diesem betriebenen elektronischen Dienst in diesem Fall dann um funktional unterschiedliche, miteinander interoperierende Module handelt. Ein ID-Provider-Modul verfügt z.B. über spezifische Berechtigungsnachweise, z.B. Zertifikate oder kryptographische Schlüssel oder dergleichen, die dem ID-Provider-Modul einen Zugriff auf bestimmte ausgewählte Speicherbereiche eines ID-Tokens erlauben.

Unter einem "Attribut-Provider-Computersystem" oder "AP-Computersystem" wird hier ein Computersystem verstanden, welches dazu ausgebildet ist, Attribute auf Antrage bereitzustellen. Insbesondere kann die Bereitstellung attributklassenspezifisch und/oder spezifisch für einen bestimmten Nutzer eines ID-Tokens erfolgen. Vorzugsweise ist ein Attribut-Provider-Computersystem dazu ausgebildet, eine Attributspezifikation aus dem ID-Token eines Nutzers auszulesen und Attribute in den ID-Token zu schreiben.

Unter einem "Attribut-Provider-Verzeichnis-Computersystem" oder "APV-Computersystem" wird hier ein Computersystem verstanden, welches dazu ausgebildet ist, für bestimmte Klassen von Attributen ein oder mehrere Attribut-Provider-Computersysteme zu identifizieren, welche in der Lage sind, Attribute dieser Klassen vollständig oder zumindest teilweise bereitzustellen. Nach manchen Ausführungsformen können neben der Identität der Attribut-Provider-Computersysteme selbst auch noch weitere Informationen wie z.B. eine Kontaktadresse, Leistungsdaten, historische Verfügbarkeitsdaten bezüglich der jeweiligen Attribut-Provider-Computersysteme identifiziert und an das anfragende System kommuniziert werden.

Bei den Attributklassen kann es sich um (beliebig) vordefinierte Gruppen von Attributen handeln. Die Klassen können disjunkt oder überlappend sein. Beispiele für verschiedene Attributklassen sind: Adressdaten eines Nutzers; medizinische Daten eines Nutzers; Bankdaten eines Nutzers; Informationen, die über die Kreditwürdigkeit eines Nutzers Auskunft geben; und andere.

Unter einem "Attribut" werden hier insbesondere Daten verstanden, die den Nutzer des ID-Tokens oder den ID-Token selbst betreffen, insbesondere Personalisierungsdaten, wie zum Beispiel persönliche Daten des Nutzers, eine Gültigkeitsdauer oder den Herausgeber des ID-Tokens oder eine Zahlungsinformation, wie zum Beispiel Kreditkartendaten oder andere Daten für ein elektronisches Bezahlsystem.

Unter einer "Attributspezifikation" wird hier eine Beschreibung von denjenigen Attributen verstanden, die zum Beispiel von einem Dienst-Computersystem zur Erbringung eines Dienstes benötigt werden. Die Attribute können über Feldnamen von Datenfeldern identifiziert werden, in denen die jeweiligen Attributwerte gespeichert sind, und/oder über ein semantisches Netz, d.h. eine Konvention, wie Attribute systemübergreifend bezeichnet werden.

Unter einem "Dienst-Computersystem" wird hier ein Computersystem verstanden, welches über eine Netzwerk-Schnittstelle zur Verbindung mit dem Netzwerk verfügt, sodass mithilfe eines Internetbrowsers oder eines anderen Anwendungsprogramms auf von dem Dienst-Computersystem gespeicherte oder generierte Internetseiten zugegriffen werden kann. Insbesondere kann es sich bei dem DienstComputersystem um einen Internetserver zur Verfügungstellung einer eCommerce- oder eGovernment-Anwendung handeln, insbesondere einen Onlineshop oder einen Behördenserver.

Unter einem "Nutzer-Computersystem" wird hier ein Computersystem verstanden, auf welches der Nutzer Zugriff hat. Hierbei kann es sich zum Beispiel um einen Personal Computer (PC), ein Tablet-PC oder ein Mobilfunkgerät, insbesondere ein Smartphone, mit einem üblichen Internetbrowser, wie zum Beispiel Microsoft Internet Explorer, Safari, Google Chrome, Firefox oder einem anderen Anwendungsprogramm zum Zugriff auf das Dienst-Computersystem handeln. Das Nutzer-Computersystem hat eine Schnittstelle zur Verbindung mit dem Netzwerk, wobei es sich bei dem Netzwerk um ein privates oder öffentliches Netzwerk handeln kann, insbesondere das Internet. Je nach Ausführungsform kann diese Verbindung auch über ein Mobilfunknetz hergestellt werden.

Unter einem "Lesegerät" wird hier ein elektronisches Gerät verstanden, welches einen Lesezugriff und auch einen Schreibzugriff auf den ID-Token ermöglicht, insbesondere ein sogenanntes Chipkartenterminal. Das Lesegerät kann einen integralen Bestandteil des Nutzer-Computersystems bilden oder als separate Komponente ausgeführt sein, beispielsweise als Peripheriegerät des Nutzer-Computersystems. Insbesondere kann es sich bei dem Lesegerät um ein sogenanntes Klasse 1, 2 oder 3 Chipkartenlesegerät handeln.

Unter einem "nichtflüchtigen elektronischen Speicher" wird hier ein Speicher zur Speicherung von Daten, insbesondere von Attributen, verstanden, der auch als Non-Volatile Memory (NVM) bezeichnet wird. Insbesondere kann es sich hierbei um ein EEPROM, beispielsweise ein Flash-EEPROM, kurz als Flash bezeichnet, handeln.

Unter einem "geschützten Speicherbereich" wird hier ein Bereich eines elektronischen Speichers verstanden, auf den ein Zugriff, das heißt ein Lesezugriff oder ein Schreibzugriff, von einem mit dem Speicher gekoppelten Prozessor nur dann ermöglicht wird, wenn eine hierzu erforderliche Bedingung erfüllt ist. Hierbei kann es sich zum Beispiel um eine kryptografische Bedingung, insbesondere eine erfolgreiche Authentisierung und/oder eine erfolgreiche Berechtigungsprüfung, handeln.

Unter einem "Prozessor" wird hier eine Logikschaltung verstanden, die zur Ausführung von Programminstruktionen dient. Die Logikschaltung kann auf einem oder mehreren diskreten Bauelementen implementiert sein, insbesondere auf einem Chip.

Unter einem "Zertifikat" wird hier ein digitales Zertifikat verstanden, welches auch als Public-Key-Zertifikat bezeichnet wird. Bei einem Zertifikat handelt es sich um strukturierte Daten, die dazu dienen, einen öffentlichen Schlüssel eines asymmetrischen Kryptosystems einer Identität, wie zum Beispiel einer Person oder einer Vorrichtung, zuzuordnen. Alternativ sind auch Zertifikate basierend auf zero-knowledge Kryptosystemen möglich. Beispielsweise kann das Zertifikat dem Standard X.509 oder einem anderen Standard entsprechen. Beispielsweise handelt es sich bei dem Zertifikat um ein Card Verifiable Certificate (CVC).

In dem Zertifikat kann spezifiziert sein, für welches Attribut oder welche Attribute des Nutzers, die in dem geschützten Speicherbereich des ID-Tokens gespeichert sind, das ID-Provider-Modul bzw. das Attribut-Provider-Computersystem zur Durchführung des Lesezugriffs berechtigt ist. Ferner können auch die jeweiligen Schreibrechte für Attributspezifikationen oder Attribute in einem Zertifikat definiert sein. Ein solches Zertifikat wird auch als Berechtigungszertifikat bezeichnet. Das Berechtigungszertifikat kann als CVC Zertifikat (card verifiable certificate) ausgebildet sein.

Unter einem "gesicherten", "geschützten" oder "sicheren" "Übertragungskanal" wird hier ein Übertragungskanal verstanden, der kryptografisch abgesichert ist, um ein Ausspähen und/oder eine Manipulation der Übertragung zu verhindern, wobei hierzu ein sogenanntes Secure-Messaging-Verfahren eingesetzt werden kann.

Die Prüfung von Lese- und Schreibrechten kann z.B. attributklassenspezifisch erfolgen. Jeder ermittelten Attributklasse kann z.B. ein Bereich, auch "Sektor" genannt, auf dem geschützten Speicherbereich des ID-Tokens zugewiesen sein. Das Berechtigungszertifikat kann das AP-Computersystem beispielsweise selektiv zum Schreiben von Attributen einer bestimmten Attributklasse auf einen bestimmten, attributklassenspezifischen Sektor des Speicherbereichs des ID-Tokens berechtigen, wohingegen die Attribute einer anderen Klasse in einem anderen Sektor gespeichert werden, auf welchen das AP-Computersystem nicht zugreifen kann. In anderen Ausführungsformen kann ein AP-Computersystem auf den Sektor seiner Attributklasse nicht nur Attribute schreiben, sondern auch eine dort gespeicherte Attributspezifikation lesen und eine neue Version dieser Spezifikation zurückschreiben, wobei die neue Version nur noch diejenigen Attribute dieser Klasse spezifiziert, die von diesem AP-Computersystem nicht bereitgestellt werden konnten.

Beispielsweise kann ein geschützter Übertragungskanal zwischen einem ID-Token, z.B. einem Chip, und einem entfernten Computer (z.B. Dienst-Computersystem, Attribut-Providersystem) oder einem lokalen Computer (z.B. Nutzer-Computersystem) aufgebaut werden, z.B. mittels eines PACE Protokolls. Geschützte Verbindungen zwischen Computersystemen können z.B. mittels SSL/TLS aufgebaut werden. Unter einem "lokalen" Übertragungskanal wird hier ein Übertragungskanal verstanden, der zwischen dem ID-Token und dem Nutzer-Computersystem über das Lesegerät aufgebaut wird, wobei insbesondere die Verbindung zwischen dem ID-Token und dem Lesegerät kontaktbehaftet oder kontaktlos ausgebildet sein kann, letzteres insbesondere gemäß einem NFC- oder RFID-Standard.

Unter Ende-zu-Ende-Verschlüsselung wird hier eine Verschlüsselung übertragener Daten über alle Übertragungsstationen hinweg verstanden. Die zu übertragenden Daten werden auf Senderseite ver- und erst beim Empfänger wieder entschlüsselt. Zwischenstationen können die übertragenen Inhalte nicht entschlüsseln.

In einem Aspekt betrifft die Erfindung ein Verfahren zum Lesen von Attributen aus einem ID-Token, der einem Nutzer zugeordnet ist. Der ID-Token weist einen nichtflüchtigen elektronischen Speicher mit einem geschützten Speicherbereich auf. Ein Zugriff auf den geschützten Speicherbereich ist nur über einen Prozessor des ID-Tokens möglich. Das Verfahren umfasst folgende Schritte:
- Senden einer Dienstanforderung eines Nutzers von einem Nutzer-Computersystem an ein Dienst-Computersystem, welches mit einem ID-Provider-Modul gekoppelt ist;
- In Antwort auf den Empfang der Dienstanforderung, Senden einer ersten Attributspezifikation von dem Dienst-Computersystem an das ID-Provider-Modul, wobei die erste Attributspezifikation diejenigen Attribute spezifiziert, die das Dienst-Computersystem zur Erbringung des mit der Dienstanforderung angeforderten Dienstes benötigt, und gegenseitige Authentifizierung des ID-Provider-Moduls und des ID-Tokens;
- Nach erfolgreicher gegenseitiger Authentifizierung von ID-Provider-Modul und des ID-Token, Schreiben der ersten Attributspezifikation in den geschützten Speicherbereich des ID-Tokens durch das ID-Provider-Modul und Senden einer ersten Nachricht, dass die erste Attributspezifikation geschrieben wurde, von dem Dienst-Computersystem an das Nutzer-Computersystem;
- In Antwort auf den Erhalt der ersten Nachricht, Senden eines Triggersignals von dem Nutzer-Computersystem an ein APV-Computersystem, wobei das APV-Computersystem ein Attribut-Provider-Verzeichnis-Computersystem ist, wobei das erste Triggersignal frei ist von der ersten Attributspezifikation und von deren Teilen und eine Adresse des ID-Tokens beinhaltet;
- In Antwort auf Empfang des Triggersignals, gegenseitige Authentifizierung des APV-Computersystems und des ID-Tokens unter Verwendung der Adresse;
- Nach erfolgreicher gegenseitiger Authentifizierung von APV-Computersystems und des ID-Token, Lesen der ersten Attributspezifikation aus dem geschützten Speicherbereich des ID-Tokens und Aufteilen der gelesenen ersten Attributspezifikation in zumindest eine zweite und eine dritte Attributspezifikation durch das APV-Computersystem;
- Senden der zweiten Attributspezifikation und der Adresse von dem APV-Computersystem an ein erstes AP-Computersystem welches dazu ausgebildet ist, die in der zweiten Attributspezifikation spezifizierten Attribute bereitzustellen, wobei das erste AP-Computersystem ein erstes Attribut-Provider-Computersystem ist, und Senden der dritten und jeder weiteren Attributspezifikation und der Adresse des ID-Token von dem APV-Computersystem an je ein weiteres AP-Computersystem welches jeweils dazu ausgebildet ist, die in der dritten oder weiteren Attributspezifikation spezifizierten Attribute bereitzustellen;
- In Antwort auf Empfang der zweiten Attributspezifikation und der Adresse durch das erste AP-Computersystem, Ermittlung einer ersten Menge von Attributen, die in der zweiten Attributspezifikation spezifiziert sind, und Initialisierung einer gegenseitigen Authentifizierung des ersten AP-Computersystems und des ID-Tokens unter Verwendung der Adresse;
- Nach der gegenseitigen Authentifizierung des ersten AP-Computersystems und des ID-Tokens, Schreiben der ersten Attributmenge durch das erste AP-Computersystem auf den geschützten Speicherbereich des ID-Tokens und Senden eines Bestätigungssignals von dem ersten Attribut-Provider-Computersystem an das Attribut-Provider-Verzeichnis-Computersystem;
- Nach Erhalt eines Bestätigungssignals, welches anzeigt, dass das jeweilige AP-Computersystem die von diesem zu ermittelnde Attributmenge vollständig bereitstellen und in den geschützten Speicher des ID-Token schreiben konnte, von dem ersten und jedem der weiteren AP-Computersysteme, Senden eines Terminierungs-Signals von dem APV-Computersystem an das Nutzer-Computersystem;
- In Antwort auf den Empfang des Terminierungs-Signals, Senden einer zweiten Nachricht von dem Nutzer-Computersystem an das Dienst-Computersystem um das Dienst-Computersystem zu veranlassen, die geschriebenen Attributmengen über das erste ID-Provider-Modul aus dem geschützten Speicherbereich auszulesen.

Dies kann vorteilhaft sein, da eine Vielzahl von Attributen, die von unterschiedlichen Attributprovidern bereitgestellt werden, in einzigen Verfahren abgefragt und einem berechtigten Dienst zur Verfügung gestellt werden können. Es ist also möglich, Nutzerspezifische Attribute dezentral in einer Vielzahl von Attribut Provider Computersystemen zu speichern. Dies kann die Datensicherheit erhöhen, da keiner der Attributprovider über sämtliche personenbezogenen Attribute des Nutzers verfügt. Außerdem werden Attribute oftmals dezentral erhoben (Gesundheitsdaten, Daten bezüglich der Kreditwürdigkeit, Adressdaten, Daten bezüglich des Alters, Daten bezüglich des Vorliegens einer Fahrerlaubnis und andere). Somit ist es möglich, dezentral erhobene Daten einem Dienst zur Verfügung zu stellen, ohne diese Attribute zunächst zusätzlich in einem zentralen Speicher zusammen zu führen. Dies erhöht die Datensicherheit, da ein doppeltes Vorhalten der Daten vermieden wird. Außerdem wird die hierfür nötige Übertragung von Daten (zum Beispiel über Netzwerk) vermieden. Dies reduziert auch weitere Probleme, die bei der Verwendung eines einzelnen zentralen AP-Computersystems auftreten, nämlich das Problem, dass die zentral gespeicherten Attribute oftmals veraltet sind, weil die Übermittlung aktualisierter Attribute (Änderungen der Kreditwürdigkeit, der Wohnadresse, der Erlaubnis zum Führen eines Fahrzeugs etc.) oftmals nur zeitverzögert, unvollständig oder aus Datenschutzgründen überhaupt nicht von behördlichen Zweigstellen oder privaten Stellen an einen zentralen Server übermittelt werden. Erfindungsgemäß wird gar nicht erst der Versuch gemacht, alle Attribute eines Nutzers, die für Dienste möglicherweise relevant sind, zentral zu speichern. Vielmehr wird ein einheitliches Verfahren bereitgestellt, dass die Bereitstellung dezentral und verteilt gespeicherter Attribute an einen Dienst ermöglicht, und das in einer möglichst effizienten Weise, die dem Nutzer möglichst hohen Schutz bezüglich der Anonymität seiner Daten bzw. bezüglich des angefragten Dienstes bietet.

Viele ID-Token wie zum Beispiel Smartcards sind als passive Elemente zudem nicht in der Lage, die Kommunikation mit mehreren anderen Kommunikationspartnern zu steuern. Andererseits soll kein anderer Kommunikationsteilnehmer Einsicht in sämtliche Attribute und Attributspezifikationen bekommen, sodass sich das Problem ergibt, wie ein anderer Kommunikationsteilnehmer die Kontrolle übernehmen kann. Das Nutzercomputersystem beispielsweise hat keinen Einblick in die übertragenen Attributspezifikationen oder die übertragenen Attribute, was eine Kontrolle der Kommunikation zum Beispiel durch das Nutzer-Computersystem erschwert.

Vorliegend kommunizieren das Dienstcomputersystem, das APV-Computersystem und das Nutzer-Computersystem so miteinander, dass ein koordinierter Datenfluss zwischen einer Vielzahl von Kommunikationsteilnehmern ermöglicht wird, ohne dass das Nutzer-Computersystem Einblick in die übertragenen Attributspezifikationen oder Attribute erhält.

Die oben dargestellten Schritte haben den Vorteil, dass es dem Dienstcomputersystem ermöglicht wird, die von ihm benötigten Attribute in Form einer ersten Attributspezifikation auf dem ID-Token zu speichern und danach die Steuerung an andere Komponenten, insbesondere das Nutzercomputersystem, zu übergeben, welches wiederum mittels Trigger-Signalen die Steuerung an das APV-Computersystem übergibt, welches mit dem ID-Token eine gegenseitige Authentifizierung durchgeführt. Somit wird eine komplexe Koordination des Datenaustausches durch Middleware-Komponenten ermöglicht, ohne dass diese Komponenten hierfür Einblick in die Attributspezifikationen bzw. Attribute haben müssten. Dies erhöht die Datensicherheit. Es wird somit ein komplexes und gleichzeitig sicheres Verfahren zur Bereitstellung verteilt gespeicherter, personenbezogene Attribute an einen Dienst bereitgestellt, welches auch auf passive ID-Token anwendbar ist.

Zum Beispiel kennt das APV-Computersystem für Klassen von Attributen ein oder mehrere AP-Computersysteme, die die in der ersten Attributspezifikation spezifizierten Attribute bereitstellen können. Das APV-Computersystem verwaltet selbst vorzugsweise keine Attribute.

Nach Ausführungsformen ist der ID-Token frei von einer Software- oder Hardwarebasierten Programmlogik, die dazu ausgebildet ist, in Abhängigkeit vom Inhalt des geschützten Speicherbereiches den Aufbau neuer oder die Aktivierung bestehender Kommunikationskanäle zu dem Nutzer-Computersystem, dem ID-Provider-Modul, dem APV-Computersystem und/oder dem ersten AP-Computersystem zu initiieren. Mit anderen Worten, der ID-Token ist ein passiver ID-Token, der über keine eigene Energieversorgung verfügt und nicht in der Lage ist, aktiv den Aufbau von einem oder mehreren Kommunikationskanälen zu verschiedenen Computersystemen zu initiieren und das nicht in der Lage ist die Verwendung von mehreren solcher Kommunikationskanäle zu koordinieren.

Nach Ausführungsformen initialisiert das ID-Provider-Modul nach erfolgreicher gegenseitiger Authentifizierung von ID-Provider-Modul und ID-Token den Aufbau eines ersten geschützten Übertragungskanals zwischen dem ID-Provider-Modul und dem ID-Token. Das Schreiben der ersten Attributspezifikation erfolgt über den ersten geschützten Übertragungskanal. Nach erfolgreicher gegenseitiger Authentifizierung von APV-Computersystems und ID-Token initialisiert das APV-Computersystem den Aufbau eines zweiten geschützten Übertragungskanals zwischen dem APV-Computersystem und dem ID-Token. Das Lesen der ersten Attributspezifikation aus dem geschützten Speicherbereich des ID-Token erfolgt über den zweiten geschützten Übertragungskanal.

Nach erfolgreicher gegenseitiger Authentifizierung von erstem AP-Computersystems und ID-Token, initialisiert das erste AP-Computersystem den Aufbau eines dritten geschützten Übertragungskanals zwischen dem ersten AP-Computersystem und dem ID-Token. Das Schreiben der ersten Attributmenge in den geschützten Speicherbereich des ID-Token erfolgt über den dritten geschützten Übertragungskanal erfolgt. Das Schreiben aller weiteren Attributmengen, die jeweils von einem der weiteren AP-Computersysteme ermittelt werden, in den geschützten Bereich des ID-Tokens erfolgt nur nach erfolgreicher gegenseitiger Authentifikation des jeweiligen weiteren AP-Computersystems und des ID-Tokens und nur über einen nach gegenseitiger Authentifikation jeweils aufgebauten weiteren geschützten Übertragungskanal.

Die Übertragung der Attribute bzw. Attributspezifikationen über geschützte Übertragungskanäle erhöht die Datensicherheit. Insbesondere hat somit das APV-Computersystem und das Nutzer-Computersystem keine Möglichkeit auf die übertragenen Attribute bzw. Attributspezifikationen zuzugreifen.

Nach Ausführungsformen sind Daten, die über den ersten, zweiten oder dritten geschützten Übertragungskanal übertragen werden, vor dem Zugriff des Nutzer-Computersystems geschützt. Der Schutz kann z.B. auf einer Verschlüsselung der übertragenen Daten beruhen, z.B. auf einer Ende-zu-Ende Verschlüsselung.

Nutzer-Computersysteme, zum Beispiel Smartphones, Notebooks oder Desktop-PCs sind oftmals einer Vielzahl von Angriffen ausgesetzt. Viren und Trojaner können über USB Sticks oder E-Mails auf das Nutzer-Computersystem übertragen werden. Sogar wenn das Nutzer-Computersystem von einem an sich berechtigten Nutzer, dem die übertragenen Attribute gehören, bedient wird, ist es dennoch sehr vorteilhaft, dass das Nutzer-Computersystem nicht auf diese sensiblen Daten zugreifen kann, da nie mit völliger Sicherheit ausgeschlossen werden kann, dass sich auf dem Nutzer-Computersystem Schadsoftware befindet, die die übertragenen Daten nach außen kommunizieren könnte.

Nach Ausführungsformen umfasst der Aufbau des ersten geschützten Übertragungskanals den Aufbau eines lokalen geschützten Übertragungskanals zwischen dem Nutzer-Computersystem und ID-Token; der Aufbau des lokalen geschützten Übertragungskanals kann z.B. über einen Diffie-Hellmann Schlüsselaustausch erfolgen. Ferner umfasst der Aufbau des ersten geschützten Übertragungskanals die Durchführung der gegenseitigen Authentifizierung des Nutzer-Computersystems und des ID-Tokens, wobei Authentifizierungsdaten über den lokalen geschützten Übertragungskanal übermittelt werden.

Der lokale geschützte Datenübertragungskanal ermöglicht somit insbesondere die sichere Übermittlung von Authentifizierungsdaten des Nutzers, zum Beispiel einer PIN, an den ID-Token.

Nach Ausführungsformen sendet das Nutzer-Computersystem in Antwort auf den Empfang des Terminierungs-Signals ein Umschaltkommando "SC[CA]#1" von dem Nutzer-Computersystem an den ID-Token um den ID-Token zu veranlassen, den ersten geschützten Übertragungskanal "SM[CA]#1" zu aktivieren. Das Umschaltkommando kann also z.B. den Kanal, auf welchen umgeschaltet werden soll, spezifizieren. Das ID-Provider-Modul liest die geschriebenen Attributmengen aus dem geschützten Speicherbereich über den aktivierten geschützten ersten Übertragungskanal aus.

Somit übt das Nutzer-Computersystem Kontrolle über die Datenübertragung aus, ohne dass es selbst die übertragenen Attribute analysieren müsste um festzustellen, ob sämtliche vom Dienst benötigten Attribute bereits erfolgreich ermittelt und an den ID-Token übertragen wurden. Dieses "Wissen" wird vielmehr über das Triggersignal kommuniziert.

Nach Ausführungsformen sendet das APV-Computersystem nach erfolgtem Schreiben der ersten Attributspezifikation in dem geschützten Speicherbereich ein Umschaltkommando "(SC[PACE])" an den ID-Token über den ersten geschützten Kommunikationskanal, wobei das Umschaltkommando "SC[PACE]" den ID-Token dazu veranlasst, den lokalen geschützten Übertragungskanal "SM[PACE]" zu aktivieren. In Antwort auf den Erhalt des Terminierungs-Signals durch das Nutzer-Computersystem sendet das Nutzer-Computersystem ein weiteres Umschaltkommando "SC[CA]#1" über den aktivierten lokalen Übertragungskanal an den ID-Token. Das weitere Umschaltkommando "SC[CA]#1" veranlasst den ID-Token dazu, den ersten geschützten Übertragungskanal "SM[CA]#1" zu aktivieren. Das ID-Provider-Modul liest daraufhin die geschriebenen Attributmengen aus dem geschützten Speicherbereich über den aktivierten geschützten ersten Übertragungskanal "SM[CA]#1" aus.

Somit wird auch bei passiven ID-Token sichergestellt, dass sobald alle vom Dienst benötigten Attribute erfolgreich auf dem ID-Token gespeichert wurden ein Auslesen dieser Attribute durch das ID-Providermodul eingeleitet wird, welches wiederum die Attribute dem Dienst-Computersystem zur Verfügung stellt.

Manche ID-Token unterstützen nur einen aktiven Kanal. Bei diesen ID-Token kann eine Aktivierung eines von mehreren Kommunikationskanälen, z.B. in Antwort auf ein Umschaltsignal, die Deaktivierung aller anderen Kanäle beinhalten. "Deaktivierung" bedeutet hier, dass ein deaktivierter Kanal mit einem geringeren rechnerischen Aufwand wieder aktiviert werden kann als dies z.B. für den Aufbau eines dieses Kanals de novo erforderlich wäre.

Nach Ausführungsformen sendet das erste AP-Computersystem nach erfolgtem Schreiben der ersten Attributmenge in dem geschützten Speicherbereich ein Umschaltkommando "SC[PACE]" an den ID-Token über den dritten geschützten Kommunikationskanal. Das Umschaltkommando "SC[PACE]" veranlasst den ID-Token dazu, den lokalen geschützten Übertragungskanal "SM[PACE]" zu aktivieren. Alternativ dazu kann der ID-Token auch automatisch nach jedem erfolgten Schreibzugriff den lokalen Kanal SM[PACE] reaktivieren, also vom inaktiven in den aktiven Zustand überführen.

Für die gegenseitige Authentifizierung des nächstverwendeten der weiteren AP-Computersysteme und des ID-Tokens wird der aktivierte lokale geschützten Übertragungskanal zwischen ID-Token und Nutzer-Computersystem und das Netzwerk zwischen weiteren AP-Computersystem und dem Nutzer-Computersystem zur Übermittlung von Authentifizierungsdaten verwendet. Der Umstand, dass nach Ausführungsformen auch die einzelnen AP-Computersysteme dazu ausgebildet sind, Umschaltsignale an den ID-Token zu übermitteln ermöglicht also die schnelle und ressourcenschonende (Re-) Aktivierung des lokalen Kommunikationskanals, sodass über diesen sensible Authentifizierungsdaten zwischen dem nächsten zu verwendenden AP-Computersystem und dem ID-Token ausgetauscht werden können.

Nach Ausführungsformen speichert der ID-Token die kryptographischen Schlüssel, die zum Aufbau eines jeden der geschützten Kanäle verwendet wurden. Der ID-Token ist dazu konfiguriert, in Abhängigkeit eines Umschaltkommandos "SC[PACE]", "SC[CA]#1", "SC[CA]#2", ..., "SC[CA]#n" jeden der einmal aufgebauten, geschützten Übertragungskanäle zu aktivieren und zu deaktivieren. Eine Aktivierung eines Kommunikationskanals beinhaltet die Wiederverwendung des gespeicherten kryptographischen Schlüssels des zu aktivierenden Übertragungskanals.

Dies kann die Geschwindigkeit des Verfahrens ganz erheblich beschleunigen und die Rechenlast für den ID-Token reduzieren, da die Generierung kryptographischer Schlüssel und der Aufbau geschützter Kommunikationskanäle z.B. durch Durchführung kryptographischer Protokolle zeitintensiv und rechenaufwändig ist.

Nach Ausführungsformen analysiert das APV-Computersystem die erste Attributspezifikation um alle Klassen von Attributen zu ermitteln, denen zumindest eines der in der ersten Attributspezifikation spezifizierten Attribute angehört. Ferner ermittelt das APV-Computersystem das erste, zweite und jedes weiteren der AP-Computersysteme aus einer Vielzahl anderer AP-Computersysteme als diejenigen AP-Computersysteme, die dazu ausgebildet sind, auf den Nutzer bezogene Attribute einer der ermittelten Attributklassen bereitzustellen.

Nach Ausführungsformen ist das APV-Computersystem dazu ausgebildet, mehrere erste AP-Computersysteme zu identifizieren, die jeweils zur Bereitstellung von Attributen einer bestimmten Attributklasse ausgebildet sind. Beispielsweise kann es sich bei den Attributen einer Klasse um Daten bezüglich der Kreditwürdigkeit handeln und die mehreren ersten AP-Computersysteme können Computersysteme verschiedener Banken und anderer Institutionen (z.B. Schufa) sein, die Informationen bezüglich der Kreditwürdigkeit einer Person besitzen. Die zweite Attributspezifikation (AR1) und die Adresse (#106) des ID-Tokens wird vorzugsweise selektiv an dasjenige der identifizierten ersten AP-Computersysteme gesendet, welches hinsichtlich eines der folgenden Kriterien einen höheren Wert als die anderen identifizierten ersten AP-Computersysteme aufweist:
∘ Anzahl der in der zweiten Attributspezifikation spezifizierten Attribute, die bereitgestellt werden können; Somit kann die Anzahl der kontaktierten AP-Computersysteme und entsprechend die Dauer des Verfahrens und die über das Netzwerk übertragene Datenmenge reduziert werden;
∘ gewährtes Vertrauensniveau der bereitgestellten Attribute; somit kann erreicht werden, dass die Attribute von einem besonders vertrauenswürdigen AP-Computersystem stammen, das z.B. über hohe Sicherheitsstandards in seinem Rechenzentrum verfügt;
∘ Menge aktuell verfügbarer Datenverarbeitungsressourcen; dies kann ggf. die Dauer bis zur Bereitstellung der Attribute verkürzten;
∘ Grad der bisher beobachteten Zuverlässigkeit und Verfügbarkeit des identifizierten ersten AP-Computersystems. Beispielweise kann eine Log-Datei oder eine ähnliche Datenquelle bezüglich früherer Attributanfragen automatisch ausgewertet werden um die Zuverlässigkeit, gemessen z.B. in Anzahl oder relativem Anteil der Anfragen, die zu einer erfolgreichen Bereitstellung der angeforderten Attribute führten, zu ermitteln.

Nach Ausführungsformen kann jedes der identifizierten ersten Attribut-Provider-Computersysteme lediglich einen Teil der in der zweiten Attributspezifikation spezifizierten Attribute bereitstellen. Bezüglich des Beispiels zur Kreditwürdigkeit kann z.B. ein Bank-AP-Computersystem einer ersten Bank nur Auskunft über die zuverlässige Bedienung laufender Kredite bei dieser ersten Bank geben während ein Bank-AP-Computersystem einer zweiten Bank nur Auskunft über die zuverlässige Bedienung laufender Kredite bei dieser zweiten Bank geben kann; Gemäß einem anderen Beispiel kann es sich bei den Attributen einer Klasse um Gesundheitsdaten handeln und ein erstes AP-Computersystem stellt Patientendaten zur Verfügung, die von einem Kardiologen erfasst wurden während ein zweites AP-Computersystem Patientendaten zur Verfügung stellt, die von einem Allgemeinmediziner erhoben wurden. Das APV-Computersystem veranlasst in mehreren Iterationen jeweils eines der identifizierten ersten AP-Computersysteme dazu, möglichst viele der in der zweiten Attributspezifikation spezifizierten Attribute bereitzustellen und in dem ID-Token zu speichern und dazu, für die nächste Iteration eine neue Version der zweiten Attributspezifikation in dem ID-Token zu speichern, wobei die neue Version selektiv nur noch diejenigen Attribute der ursprünglichen zweiten Attributspezifikation beinhaltet, die in keiner der bisher durchgeführten Iterationen bereitgestellt wurden. Dies kann insbesondere dann vorteilhaft sein, wenn die Attribute einer Klasse von mehreren unterschiedlichen Stellen (dezentral) erhoben werden. Der Dienst muss sich nicht darum kümmern, woher er alle benötigten Daten beziehen kann. Noch nicht einmal das APV-Computersystem muss für jedes einzelne Attribut einer Klasse wissen, welches der ersten AP-Computersysteme ein bestimmtes Attribut bereitstellen kann. Es reicht aus, dass das APV Computersystem diejenigen AP-Computersysteme kennt, die in ihrer Gesamtheit die angeforderten Attribute bereitstellen können, wobei der jeweilige Beitrag der einzelnen APs sich dynamisch während der Abarbeitung des Verfahrens ergibt. Das Verfahren ist also auch sehr flexibel und besonders für die Einbindung mehrerer Daten- bzw. Attributquellen ohne zentrales Datenpooling geeignet.

Nach Ausführungsformen beinhaltet die Adresse des ID-Tokens eine URL, die einen Zugriff auf den ID-Token über das Netzwerk mittels eines an das Nutzer-Computersystem gekoppelten Lesegeräts ermöglicht. Die URL beinhaltet die Adresse des ID-Tokens, also z.B. eine IP Adresse des Nutzer-Computersystems und eine Portnummer, über welche das Lesegerät an das Nutzer-Computersystem angeschlossen ist, sodass der ID-Token in dem Lesegerät eindeutig identifizierbar und adressierbar ist.

Beispielsweise kann das erste Attribut-Provider-Computersystem die URL in dem Request nutzen, um sich gegenüber dem in der URL spezifizierten ID-Token zu authentifizieren und nach erfolgreicher Authentifizierung die zweite Attributmenge über den geschützten dritten Kommunikationskanal in den ID-Token zu schreiben.

Die Übermittlung der Attributspezifikationen an die jeweiligen AP-Computersysteme kann z.B. parallel erfolgen, was die Geschwindigkeit des Verfahrens erhöht. In analoger Weise kann das Speichern der jeweils ermittelten Attributmengen durch das erste und zweite AP-Computersystem parallel erfolgen. Dies kann insbesondere dann vorteilhaft sein, wenn die zweite und dritte Attributspezifikation disjunkte Attributmengen spezifizieren.

Die Übermittlung der Attributspezifikationen kann in anderen Ausführungsformen jedoch auch sequenziell erfolgen, zum Beispiel für AP-Computersysteme, die Attribute der gleichen Attributklasse bereitstellen. Dies kann insbesondere dann von Vorteil sein, wenn ein AP-Computersystem nur noch diejenigen Attribute bereitstellt, die nicht bereits von einem anderen AP-Computersystem der gleichen Attributklasse in dem ID-Token gespeichert wurden.

Nach Ausführungsformen überträgt das erste AP-Computersystem eine erste Signaturanfrage zur Erzeugung einer digitalen Signatur der zweiten Attributspezifikation an den ID-Token. In Antwort auf diese Anfrage erzeugt der ID-Token die digitale Signatur der zweiten Attributspezifikation und übermittelt diese an das erste AP-Computersystem. Das erste AP-Computersystem prüft die digitale Signatur mit einem öffentlichen Signaturprüfschlüssel. Das erste AP-Computersystem ermittelt die erste Menge Attribute gemäß der zweiten Attributspezifikation nur dann, wenn die Prüfung ergibt, dass die digitale Signatur valide ist. Entsprechend wird auch nur in diesem Fall die ersten Menge Attribute in dem ID-Token gespeichert.

Dies kann vorteilhaft sein, wenn das Attribut-Provider-Computersystem zur Erstellung der Attribute oder für spätere Nachweise der korrekten Attributerstellung gegenüber Dritten nachweisen muss, dass wirklich eine Anfrage eines ID-Tokens vorliegt oder vorgelegen hat. Damit wird der Situation vorgebeugt, dass ein Attribut-Provider-Computersysteme unberechtigterweise Daten in Form von Attributen sammelt, die nicht von ID-Tokens erfragt wurden. Da allerdings bei diesem Vorgehen die Anonymität der Attribute leidet, wird dieses Verfahren vorzugsweise nur dann eingesetzt, wenn der Schutz vor unberechtigten Anfragen bezüglich nutzerspezifischer Attribute wichtiger ist als völlige Anonymität der Attribute.

Nach Ausführungsformen erstellt der ID-Token Signaturen über Attributspezifikationen nur dann, wenn der Nutzer dieser Signatur durch eine PIN-Eingabe zugestimmt hat. In diesem Fall fordert das Lesegerät oder das Nutzer-Computersystem den Nutzer zur Eingabe einer Signatur-PIN für die Freischaltung einer Signaturfunktion des ID-Tokens für die Erzeugung einer digitalen Signatur der zweiten Attributspezifikation und/oder dritten Attributspezifikation auf. Die Aufforderung zur PIN-Eingabe ("Signaturbestätigungsanfrage") wird vom ersten AP-Computersystem an das Nutzer-Computersystem versendet, das an entsprechende Eingabemittel gekoppelt ist. Die eingegebene PIN selbst wird vom Nutzer-CS zum AP-Computersystem und von dort über den geschützten Übertragungskanal SM[CA]#3 an den ID-Token übermittelt.

In analoger weise kann gemäß manchen Ausführungsformen der Erfindung das zweite AP-Computersystem eine zweite Aufforderung zur PIN-Eingabe an das Nutzer-Computersystem übertragen.

Nach Ausführungsformen ist in dem geschützten Speicherbereich des ID-Tokens für jeden der AP-Computersysteme ein eigener privater Signierschlüssel gespeichert, der einem der AP-Computersysteme zugeordnet ist. Jedes der AP - Computersysteme hat Zugriff auf einen öffentlichen Signaturprüfschlüssel, welcher mit dem privaten Signierschlüssel, der dem AP-Computersystem zugeordnet ist, ein asymmetrisches kryptographisches Schlüsselpaar bildet. Der öffentliche Signaturprüfschlüssel ist dazu ausgebildet, eine von dem korrespondierenden privaten Signierschlüssels generierte digitale Signatur auf deren Validität hin zu überprüfen.

Nach Ausführungsformen beinhaltet der ID-Token eine Kommunikationsschnittstelle zur Kommunikation mit einem Lesegerät des Nutzer-Computersystems. Die Kommunikationsschnittstelle des ID-Token ist zur drahtlosen Kommunikation und zur drahtlosen Einkopplung von Energie in den ID-Token durch das Lesegerät ausgebildet, um den ID-Token mit der für seinen Betrieb erforderlichen elektrischen Energie zu versorgen. Beispielsweise ist der ID-Token ein passiver ID-Token, z.B. ein passiver Transponder, also ein ID-Token, der nicht über eine eigene interne Energieversorgung verfügt.

Nach Ausführungsformen beinhaltet der ID-Token einen flüchtigen elektronischen Speicher, in dem die erste Attributspezifikation gespeichert wird. Der ID-Token oder dessen flüchtiger Speicher ist so konfiguriert, sodass die erste Attributspezifikation aus dem flüchtigen elektronischen Speicher gelöscht wird, wenn der ID-Token aus der Reichweite des Lesegeräts entfernt wird. Dies kann die Datensicherheit erhöhen.

Ein neuer Protokollablauf ist in diesem Fall zu starten falls das Token vor Bereitstellung aller angeforderten Attribute aus der Reichweite des Lesegeräts entfernt wird. Hierdurch wird vermieden, dass sich der ID-Token in einem undefinierten Zustand befindet, wenn zum Beispiel das Token nach Speicherung der zweiten Attributspezifikation aus der Reichweite des Lesegeräts entfernt wird.

Die aufgrund des Schreibzugriffs der ersten und zweiten Attribut-Provider-Computersysteme in dem ID-Token gespeicherten ersten und zweiten und weiteren Mengen der Attribute werden in dem nichtflüchtigen elektronischen Speicher gespeichert, sodass auf diese durch einen nachfolgenden weiteren Lesezugriff aufgrund einer weiteren Dienstanforderung zugegriffen werden kann.

Die aufgrund des Schreibzugriffs der ersten und zweiten AP-Computersysteme in dem ID-Token gespeicherten ersten und zweiten Mengen der Attribute werden in dem nichtflüchtigen elektronischen Speicher gespeichert, sodass auf diese durch einen nachfolgenden weiteren Lesezugriff aufgrund einer weiteren Dienstanforderung zugegriffen werden kann. Alternativ dazu werden die erste Attributspezifikation und die erste und zweite Menge der Attribute in dem nicht-flüchtigen Speicher gespeichert.

Nach Ausführungsformen fordert das Nutzer-Computersystem oder das Lesegerät den Nutzer zur Eingabe einer Signatur-PIN für die Freischaltung einer Signaturfunktion des ID-Tokens für die Erzeugung einer digitalen Signatur der ersten, zweiten und/oder dritten Attributspezifikation durch das Lesegerät oder das Nutzer-Computersystem auf.

Nach Ausführungsformen erfolgt die Authentifizierung des ID-Provider-Moduls gegenüber dem ID-Token mithilfe eines Berechtigungszertifikats des ID-Provider-Moduls. In diesem Berechtigungszertifikat sind Leserechte des ID-Provider-Moduls zum Lesen von Attributen aus dem ID-Token spezifiziert. Der ID-Token führt vor der Genehmigung einer Leseoperation des ID-Provider-Moduls, also vor der Bereitstellung der Attribute an das ID-Provider Modul durch den Prozessor des ID-Token eine Prüfung der Leseberechtigung des ID-Provider-Moduls mithilfe des Berechtigungszertifikats durch. In dem Berechtigungszertifikat sind ferner Schreibrechte des ID-Provider-Moduls zum Schreiben der ersten Attributspezifikation in dem ID-Token spezifiziert. Der ID-Token führt vor der Genehmigung der Schreiboperation des ID-Provider-Moduls, also vor der Durchführung einer Schreiboperation der von dem ID-Provider Modul zur Verfügung gestellten Daten durch den Prozessor des ID-Tokens, eine Prüfung der Schreibberechtigung des ID-Provider-Moduls mithilfe des Berechtigungszertifikats durch.

Nach Ausführungsformen erfolgt die Authentifizierung des ersten AP-Computersystems gegenüber dem ID-Token mithilfe eines Berechtigungszertifikats des ersten AP -Computersystems, in welchem Schreibrechte des ersten AP Computersystems zum Schreiben der ersten Menge der Attribute in dem ID-Token spezifiziert sind. Der ID-Token führt eine Prüfung der Schreibberechtigung des ersten AP Computersystems mithilfe des Berechtigungszertifikats durch bevor der ID-Token dem ersten AP-Computersystem das Schreiben der ersten Attributmenge genehmigt.

Nach Ausführungsformen weist das Berechtigungszertifikat des ersten AP-Computersystems dem ersten AP-Computersystem weder eine Berechtigung zum Lesen der ersten Attributspezifikation noch zum Lesen von Attributen, die in dem geschützten Speicherbereich des ID-Tokens gespeichert sind, zu.

Nach alternativen Ausführungsformen weist das Berechtigungszertifikat des ersten AP-Computersystems dem ersten AP-Computersystem zusätzlich noch eine Berechtigung zum Lesen von nur einem bestimmten Teil der ersten Attributspezifikation, der selektiv nur Attribute einer bestimmten Attributklasse spezifiziert, zu.

Nach Ausführungsformen enthält der geschützte Speicherbereich des ID-Token mehrere Unterbereiche. Jeder der Unterbereiche ist einer Attributklasse spezifisch zugeordnet. Der ID-Token ermöglicht einen lesenden und/oder schreibenden Zugriff des ersten AP-Computersystems auf einen der Unterbereiche nur dann, wenn das Berechtigungszertifikat des ersten AP-Computersystems einen Nachweis einer Lese- und/oder Schreibberechtigung für diesen Unterbereich beinhaltet. Das Berechtigungszertifikat des ersten Attribut-Provider-Computersystems räumt dem ersten AP-Computersystem eine Berechtigung zum Schreiben der zweiten Attributmenge und optional auch zum Lesen von Attributspezifikationen nur auf denjenigen der Unterbereiche ein, welchem diejenige Attributklasse zugewiesen ist, zu deren Bereitstellung der erste Attribut-Provider ausgebildet ist. Dadurch wird sichergestellt, dass ein AP-Computersystem weder die von den anderen AP-Computersystemen bereitgestellten Attribute noch die entsprechenden Attributspezifikationen lesen kann. Das AP-Computersystem enthält also keinen Einblick in personenbezogene Daten, die ihm nicht bereits vorliegen, und kann auch keine Rückschlüsse auf die Art des angeforderten Dienstes anhand der Attributspezifikation vornehmen.

Nach Ausführungsformen handelt es sich bei dem ID-Token um ein Wert- oder Sicherheitsdokument, insbesondere ein Ausweisdokument, das heißt ein ID-Dokument, insbesondere einen elektronischen Personalausweis, Reisepass, Führerschein, Firmenausweis oder ein Zahlungsmittel, wie zum Beispiel eine Banknote, eine Kreditkarte oder einen sonstigen Berechtigungsnachweis, wie zum Beispiel eine Eintrittskarte, einen Frachtbrief oder ein Visum, insbesondere eine Chipkarte, insbesondere mit RFID- und/oder NFC-Schnittstelle.

In einem weiteren Aspekt betrifft die Erfindung einen ID-Token, der einem Nutzer zugeordnet ist, wobei der ID-Token einen elektronischen Speicher mit einem geschützten Speicherbereich aufweist, in dem Attribute gespeichert sind. Ein Zugriff auf den geschützten Speicherbereich ist nur über einen Prozessor des ID-Tokens möglich. Der ID-Token weist eine Kommunikationsschnittstelle zur Kommunikation mit einem Lesegerät eines Nutzer-Computersystems auf. Das Nutzer-Computersystem ist an ein ID-Provider-Modul über ein Netzwerk gekoppelt. Der ID-Token ist zur Durchführung der folgenden Schritte konfiguriert:
- Gegenseitige Authentifizierung des ID-Provider-Moduls und des ID-Tokens in Interoperation mit dem ID-Provider-Modul;
- Aufbau eines ersten geschützten Übertragungskanals mit Ende-zu-Ende-Verschlüsselung zwischen dem ID-Token und dem ID-Provider-Modul über das Netzwerk;
- Empfang einer ersten Attributspezifikation von dem ID-Provider-Modul und Speichern der empfangenen ersten Attributspezifikation in einen geschützten Speicherbereich des ID-Tokens, wobei die erste Attributspezifikation diejenigen Attribute spezifiziert, die das Dienst-Computersystem zur Erbringung des mit der Dienstanforderung angeforderten Dienstes benötigt;
- Gegenseitige Authentifizierung eines APV-Computersystems und des ID-Tokens;
- Nach gegenseitiger Authentifizierung des APV-Computersystems und des ID-Tokens, Prüfung eines APV-Computersystem-spezifischen Berechtigungszertifikats um festzustellen, ob das APV-Computersystem zum Lesen der ersten Attributspezifikation von dem geschützten Speicherbereich berechtigt ist; Falls das APV-Computersystem zum Lesen der ersten Attributspezifikation berechtigt ist, Erlaubnis des Lesezugriffs zum Auslesen der ersten Attributspezifikation um dem APV-Computersystem ein Aufteilen der gelesenen ersten Attributspezifikation in zumindest eine zweite und eine dritte Attributspezifikation zu ermöglichen;
- Gegenseitige Authentifizierung eines ersten AP-Computersystems, das zur Bereitstellung von Attributen, die in der zweiten Attributspezifikation spezifizierten Attribute ausgebildet ist, und des ID-Tokens;
- Nach gegenseitiger Authentifizierung des ersten AP-Computersystems und des ID-Tokens, Prüfung eines ersten AP-Computersystem-spezifischen Berechtigungszertifikats um festzustellen, ob das erste AP-Computersystem zum Lesen der ersten Attributspezifikation von dem geschützten Speicherbereich berechtigt ist; Falls das erste AP-Computersystem zum Schreiben von Attributen in den geschützten Speicherbereich des ID-Tokens berechtigt ist, Erlaubnis des Schreibzugriffs des ersten AP-Computersystems auf den geschützten Speicherbereich zur Speicherung einer ersten Attributmenge in dem ID-Token, wobei die erste Menge aus Attributen besteht, die in der zweiten Attributspezifikation spezifiziert sind und von dem ersten Attribut-Provider-Computersystem ermittelt wurden.

Nach Ausführungsformen ist der ID-Token dazu ausgebildet, sich mit einem zweiten und ein oder mehreren weiteren AP-Computersystemen, die jeweils zur Bereitstellung von Attributen einer bestimmten Attributklasse ausgebildet sind, jeweils gegenseitig zu authentifizieren, wobei der ID-Token hierbei von dem sich authentifizierenden Attribut-Provider-Computersystemen ein AP-Computersystemen-spezifisches Berechtigungszertifikat empfängt und dieses zur Berechtigungsprüfung für jeden Schreibzugriff zum Schreiben von Attributmengen verwendet.

Die Kommunikationsschnittstelle des ID-Token ist beispielsweise zur drahtlosen Kommunikation und zur drahtlosen Einkopplung von Energie in den ID-Token durch das Lesegerät ausgebildet, um den ID-Token mit der für seinen Betrieb erforderlichen elektrischen Energie zu versorgen.

Nach Ausführungsformen weist der ID-Token einen flüchtigen elektronischen Speicher auf, in dem die erste Attributspezifikation gespeichert wird, sodass die erste Attributspezifikation aus dem flüchtigen elektronischen Speicher gelöscht wird, wenn der ID-Token aus der Reichweite des Lesegeräts entfernt wird, und wobei die aufgrund des Schreibzugriffs der ersten und zweiten AP-Computersysteme in dem ID-Token gespeicherten ersten und zweiten Mengen der Attribute in dem nichtflüchtigen elektronischen Speicher gespeichert werden, sodass auf diese durch einen nachfolgenden weiteren Lesezugriff aufgrund einer weiteren Dienstanforderung zugegriffen werden kann. Alternativ dazu werden die erste Attributspezifikation und die erste und zweite Menge der Attribute in dem nicht-flüchtigen Speicher gespeichert.

In einem weiteren Aspekt betrifft die Erfindung ein AP-Computersystem mit einer Netzwerk-Schnittstelle zum Zugriff auf einen ID-Token über ein Netzwerk. Das AP-Computersystem ist ein Attribut-Provider-Computersystem und zur Durchführung der folgenden Schritte konfiguriert:
- Empfang einer zweiten Attributspezifikation, die eine Teilmenge der in einer ersten, von einem Dienst-Computersystem generierten Attributspezifikation ist, von einem APV-Computersystem, wobei das APV-Computersystem ein Attribut-Provider-Verzeichnis-Computersystem ist, das zur Teilung der ersten Attributspezifikation in die zweite und weitere Attributspezifikationen ausgebildet ist, und Empfang einer Adresse des ID-Tokens von dem APV-Computersystem;
- In Antwort auf Empfang der zweiten Attributspezifikation und der Adresse, Ermittlung einer ersten Menge von Attributen, die in der zweiten Attributspezifikation spezifiziert sind, und Initialisierung einer gegenseitigen Authentifizierung des AP-Computersystems und des ID-Tokens unter Verwendung der Adresse;
- Nach der gegenseitigen Authentifizierung des AP-Computersystems und des ID-Tokens, Schreiben der ersten Attributmenge durch das AP-Computersystem auf den geschützten Speicherbereich des ID-Tokens und Senden eines Bestätigungssignals von dem AP-Computersystem an das APV-Computersystem;
- Senden eines Bestätigungssignals, welches anzeigt ob das AP-Computersystem die erste Attributmenge vollständig bereitstellen und in den geschützten Speicher des ID-Token schreiben konnte, von dem AP-Computersystem an das APV-Computersystem.

Nach Ausführungsformen überträgt das das AP-Computersystem eine Signaturanfrage an den ID-Token, um den ID-Token zu veranlassen, die zweite Attributspezifikation digital zu signieren. In Antwort auf den Erhalt der Signaturanfrage signiert der ID-Token die zweite Attributspezifikation. Das AP-Computersystem empfängt die Signatur der zweiten Attributspezifikation von dem ID-Token und führt eine Signaturprüfung der signierten zweiten Attributspezifikation durch. Vorzugsweise bauen das AP-Computersystem und der ID-Token nach erfolgreicher gegenseitiger Authentifizierung einen geschützten Kommunikationskanal (SM[CA]#2) auf und verwenden diesen um die Attributspezifikation, die Attribute, die Signaturanfrage und die Signatur über den geschützten Kommunikationskanal (SM[CA]#3) zu übertragen. Die in der gelesenen zweiten Attributspezifikation spezifizierte erste Attributmenge wird nur dann von dem AP-Computersystem ermittelt und in dem ID-Token gespeichert, wenn die Signaturprüfung ergibt, dass die Signatur der zweiten Attributspezifikation valide ist.

Nach Ausführungsformen beinhaltet das AP-Computersystem ein Berechtigungszertifikat zur Authentifizierung gegenüber dem ID-Token. In dem Berechtigungszertifikat sind Rechte des AP-Computersystems zum Schreiben der ersten Attributmenge in den ID-Token spezifiziert. Vorzugsweise erlaubt das Berechtigungszertifikat dem AP-Computersystems keinen Lesezugriff auf Attribute, die in dem ID-Token gespeichert sind. Optional beinhaltet das Berechtigungszertifikat Rechte des AP-Computersystems zum Lesen und Schreiben verschiedener Versionen der zweiten Attributspezifikation.

Vorzugsweise bezieht sich die Lese- und/oder Schreibberechtigung selektiv nur auf einen Unterbereich des Speicherbereichs des ID-Tokens, der einer Attributklasse zugewiesen ist, zu deren Bereitstellung das AP-Computersystem ausgebildet ist.

In einem weiteren Aspekt betrifft die Erfindung ein Attribut-Provider-Verzeichnis-Computersystem, auch als "APV-Computersystem" bezeichnet, das über ein Netzwerk mit einem Nutzer-Computersystem, einem ersten AP-Computersystem und einem zweiten AP-Computersystem verbunden ist. Das Nutzer-Computersystem ist über ein Lesegerät an einen ID-Token gekoppelt, der einen nichtflüchtigen elektronischen Speicher mit einem geschützten Speicherbereich aufweist. Ein Zugriff auf den geschützten Speicherbereich ist nur über einen Prozessor des ID-Tokens möglich. Das APV-Computersystem ist zur Durchführung des folgenden Verfahrens konfiguriert:
- Empfang eines Triggersignals von dem Nutzer-Computersystem, wobei das erste Triggersignal frei ist von einer ersten Attributspezifikation und von deren Teilen und eine Adresse des ID-Tokens beinhaltet, wobei die erste Attributspezifikation nutzerbezogene Attribute spezifiziert, die ein von einem Nutzer des Nutzer-Computersystems angeforderter Dienst zu seiner Erbringung benötigt;
- In Antwort auf Empfang des Triggersignals, gegenseitige Authentifizierung des APV-Computersystems und des ID-Tokens unter Verwendung der Adresse;
- Nach erfolgreicher gegenseitiger Authentifizierung von APV-Computersystems und des ID-Token, Lesen der ersten Attributspezifikation aus dem geschützten Speicherbereich des ID-Tokens und Aufteilen der gelesenen ersten Attributspezifikation in zumindest eine zweite und eine dritte Attributspezifikation durch das APV-Computersystem;
- Senden der zweiten Attributspezifikation und der Adresse von dem APV-Computersystem an ein erstes AP-Computersystem welches dazu ausgebildet ist, die in der zweiten Attributspezifikation spezifizierten Attribute bereitzustellen, wobei das erste AP-Computersystem ein erstes Attribut-Provider-Computersystem ist, und Senden der dritten Attributspezifikation und der Adresse des ID-Token von dem APV-Computersystem an das zweite AP-Computersystem welches dazu ausgebildet ist, die in der dritten Attributspezifikation spezifizierten Attribute bereitzustellen;
- In Antwort auf einen Erhalt von Bestätigungssignalen, welches anzeigen, dass das erste, zweite und jedes weitere AP-Computersystem, das von dem APV-Computersystem eine Teilmenge der ersten Attributspezifikation erhalten hat, die von diesem AP-Computersystem jeweils zu ermittelnde Attributmenge vollständig bereitgestellt und in den geschützten Speicher des ID-Token geschrieben hat, Senden eines Terminierungs-Signals (SAPV) an das Nutzer-Computersystem.

In einem weiteren Aspekt betrifft die Erfindung ein Computersystem mit einem ID-Token nach einer der hier beschriebenen Ausführungsformen, mit zumindest einem ersten und einem zweiten AP-Computersystem gemäß einer der hier beschriebenen Ausführungsformen, mit einem APV-Computersystem nach einer der hier beschriebenen Ausführungsformen sowie mit einem Nutzer-Computersystem und einem ID-Provider-Modul nach einer der hier beschriebenen Ausführungsformen. Das Nutzer-Computersystem ist über ein Lesegerät an den ID-Token und über ein Netzwerk an ein Dienst-Computersystem und zumindest an das APV-Computersystem gekoppelt. Das ID-Provider-Modul ist Bestandteil des Dienst-Computersystems oder an das Dienst-Computersystem über ein Netzwerk operativ gekoppelt.

Die Identifikation und Einbeziehung mehrerer erster und/oder zweiter Attribut-Provider-Computersysteme kann mehrere Vorteile beinhalten: zum einen wird dadurch die Ausfallsicherheit erhöht, falls z.B. eines der Attribut-Provider-Systeme aus technischen oder anderen Gründen aktuell nicht verfügbar ist, die Attribute aber von einem anderen Attribut-Provider-Computersystem bezogen werden können. Eine parallele Anforderung von Attributen bei mehreren Attribut-Provider-Computersystemen gleichzeitig hat den Vorteil, dass die Geschwindigkeit der Attributermittlung erhöht werden kann, insbesondere, wenn die jeweils angeforderten Attributmengen disjunkt sind. Eine sequentielle, iterative Anforderung von Attributen bei mehreren Attribut-Provider-Computersystemen so lange, bis alle Attribute einer bestimmten Klasse oder alle in der ersten Attributspezifikation spezifizierten Attribute ermittelt und in dem ID-Token gespeichert sind, kann vorteilhaft sein, da durch Einbeziehung einer Vielzahl von Attribut-Provider-Computersystemen eine sehr breite Palette an Attributen bereitgestellt werden kann. Dies dient auch dem Datenschutz, denn es ist nun möglich, dass einzelne Attribut-Provider nur einen sehr kleinen Ausschnitt der Attribute einer Person kennen.

Im Weiteren werden Ausführungsformen der Erfindung mit Bezugnahme auf die Zeichnungen näher erläutert. Es zeigen:
- Figur 1: ein Blockdiagramm einer Ausführungsform eines erfindungsgemäßen Computersystems,
- Figur 2: ein Blockdiagramm einer Ausführungsform eines erfindungsgemäßen Computersystems unter Berücksichtigung der ausgetauschten Daten,
- Figur 3: ein Flussdiagramm einer Ausführungsform eines erfindungsgemäßen Verfahrens mit zumindest einem Attribut-Provider-Computersystem,
- Figur 4: ein Schema des Datenaustauschs gemäß einer Ausführungsform des erfindungsgemäßen Verfahrens.

Elemente der nachfolgenden Ausführungsformen, die einander gleichen oder einander entsprechen, sind jeweils mit identischen Bezugszeichen gekennzeichnet.

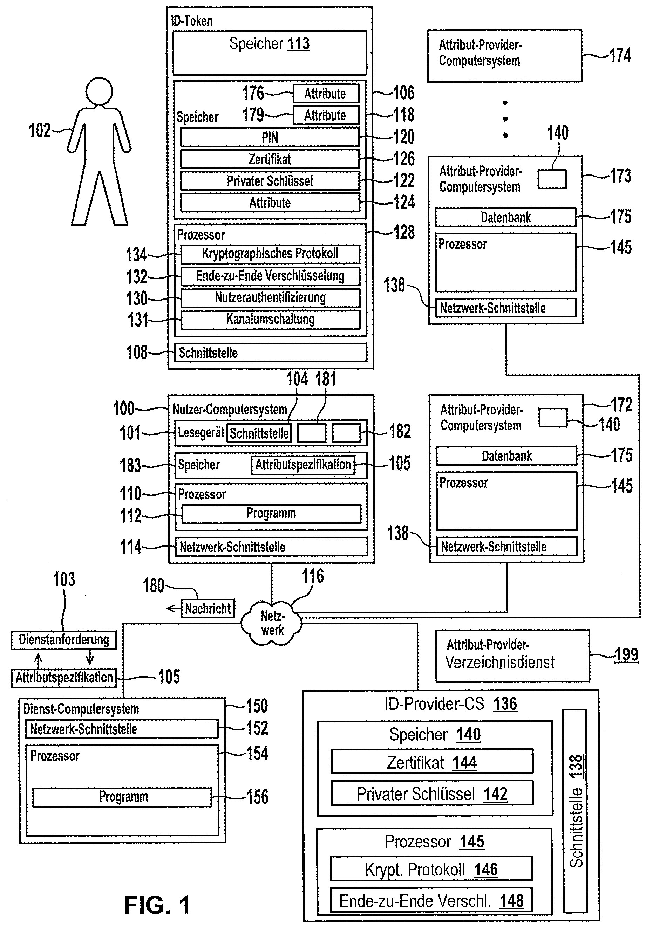

Die **Figur 1** zeigt ein Nutzer-Computersystem 100 eines Nutzers 102. Bei dem Nutzer-Computersystem 100 kann es sich um einen Personalcomputer, einen tragbaren Computer, wie zum Beispiel einen Laptop oder Palmtop-Computer, einen Personal Digital Assistant, ein mobiles Telekommunikationsgerät, insbesondere ein Smart Phone, oder dergleichen handeln. Das Nutzer-Computersystem 100 hat ein Lesegerät 101 mit einer Schnittstelle 104 zur Kommunikation mit einem ID-Token 106, der eine entsprechende Schnittstelle 108 aufweist.

Das Nutzer-Computersystem 100 hat zumindest einen Prozessor 110 zur Ausführung von Programminstruktionen 112 sowie eine Netzwerk-Schnittstelle 114 zur Kommunikation über ein Netzwerk 116. Bei dem Netzwerk kann es sich um ein Computernetzwerk, wie zum Beispiel das Internet, handeln.

Der ID-Token 106 hat einen elektronischen Speicher 118 mit geschützten Speicherbereichen 120, 122 und 124. Der geschützte Speicherbereich 120 dient zur Speicherung eines Referenzwerts, der für die Authentifizierung des Nutzers 102 gegenüber dem ID-Token 106 benötigt wird. Bei diesem Referenzwert handelt es sich beispielsweise um eine Kennung, insbesondere eine so genannte Personal Identification Number (PIN), oder um Referenzdaten für ein biometrisches Merkmal des Nutzers 102, welches für die Authentifizierung des Nutzers gegenüber dem ID-Token 106 verwendet werden kann.

Der geschützte Bereich 122 dient z.B. zur Speicherung eines privaten Schlüssels und der geschützte Speicherbereich 124 dient z.B. zur Speicherung von Attributen, zum Beispiel des Nutzers 102, wie zum Beispiel dessen Name, Wohnort, Geburtsdatum, Geschlecht, und/oder von Attributen, die den ID-Token selbst betreffen, wie zum Beispiel die Institution, die den ID-Token erstellt oder ausgegeben hat, die Gültigkeitsdauer des ID-Tokens, einen Identifikator des ID-Tokens, wie zum Beispiel eine Passnummer oder eine Kreditkartennummer. Die Adressdaten 176 des Nutzers können beispielsweise einer anderen Attributklasse angehören und von einem anderen AP-Computersystem bereitgestellt werden als die Attribute, die den ID-Token näher spezifizieren oder als Attribute 179, die zum Beispiel Gesundheitsdaten spezifizieren.

Der elektronische Speicher 118 kann ferner einen Speicherbereich 126 zur Speicherung eines Zertifikats aufweisen. Das Zertifikat beinhaltet einen öffentlichen Schlüssel, der dem in dem geschützten Speicherbereich 122 gespeicherten privaten Schlüssel zugeordnet ist. Das Zertifikat kann nach einem Public Key Infrastruktur (PKI) Standard erstellt worden sein, beispielsweise nach dem X.509 Standard.

Das Zertifikat muss nicht zwangsläufig in dem elektronischen Speicher 118 des ID-Tokens 106 gespeichert sein. Alternativ oder zusätzlich kann das Zertifikat auch in einem öffentlichen Verzeichnisserver gespeichert sein.

Der ID-Token 106 hat einen Prozessor 128. Der Prozessor 128 dient zur Ausführung von Programminstruktionen 130, 132 und 134. Die Programminstruktionen 130 dienen zur Nutzerauthentifizierung, d.h. zur Authentifizierung des Nutzers 102 gegenüber dem ID-Token.

Bei einer Ausführungsform mit PIN gibt der Nutzer 102 seine PIN zu seiner Authentifizierung ein, beispielsweise in das Nutzer-Computersystem 100. Durch Ausführung der Programminstruktionen 130 wird dann auf den geschützten Speicherbereich 120 zugegriffen, um die eingegebene PIN mit dem dort gespeicherten Referenzwert der PIN zu vergleichen. Für den Fall, dass die eingegebene PIN mit dem Referenzwert der PIN übereinstimmt, gilt der Nutzer 102 als authentifiziert.

Alternativ wird ein biometrisches Merkmal des Nutzers 102 erfasst. Beispielsweise hat der ID-Token 106 hierzu einen Fingerabdrucksensor oder ein Fingerabdrucksensor ist an das Nutzer-Computersystem 100 angeschlossen. Die von dem Nutzer 102 erfassten biometrischen Daten werden durch Ausführung der Programminstruktionen 130 bei dieser Ausführungsform mit den in dem geschützten Speicherbereich 120 gespeicherten biometrischen Referenzdaten verglichen. Bei hinreichender Übereinstimmung der von dem Nutzer 102 erfassten biometrischen Daten mit den biometrischen Referenzdaten gilt der Nutzer 102 als authentifiziert.

Die Programminstruktionen 134 dienen zur Ausführung der den ID-Token 106 betreffenden Schritte eines kryptographischen Protokolls zur Authentifizierung eines ID-Provider-Moduls 136 gegenüber dem ID-Token 106. Bei dem kryptographischen Protokoll kann es sich um ein Challenge-Response-Protokoll basierend auf einem symmetrischen Schlüssel oder einem asymmetrischen Schlüsselpaar handeln.

Beispielsweise wird durch das kryptographische Protokoll ein Extended Access Control-Verfahren implementiert, wie es für maschinenlesbare Reisedokumente (machine-readable travel documents - MRTD) von der internationalen Luftfahrtbehörde (ICAO) spezifiziert ist. Durch erfolgreiche Ausführung des kryptographischen Protokolls authentifiziert sich das ID-Provider-Modul 136 gegenüber dem ID-Token und weist dadurch seine Leseberechtigung zum Lesen der in dem geschützten Speicherbereich 124 gespeicherten Attribute, die bereits auf dem ID-Token vorhanden und/oder von ein oder mehreren der AP-Computersysteme 172, 173, 174 zur Verfügung gestellt wurden, nach. Die Authentifizierung kann auch gegenseitig sein, d.h. auch der ID-Token 106 muss sich dann gegenüber dem ID-Provider-Modul 136 nach demselben oder einem anderen kryptographischen Protokoll authentifizieren. Die Programminstruktionen 132 dienen zur Ende-zu-Ende-Verschlüsselung von zwischen dem ID-Token 106 und dem ID-Provider-Modul 136 übertragenen Daten, zumindest aber der von dem ID-Provider-Modul 136 aus dem geschützten Speicherbereich 124 ausgelesenen Attribute. Für die Ende-zu-Ende-Verschlüsselung kann ein symmetrischer Schlüssel verwendet werden, der beispielsweise anlässlich der Ausführung des kryptographischen Protokolls zwischen dem ID-Token 106 und dem ID-Provider-Modul 136 vereinbart wird.

Alternativ zu der in der Figur 1 dargestellten Ausführungsform kann das Nutzer-Computersystem 100 mit seiner Schnittstelle 104 nicht unmittelbar mit der Schnittstelle 108 kommunizieren, sondern über ein an die Schnittstelle 104 angeschlossenes Lesegerät für den ID-Token 106. Über dieses Lesegerät, wie zum Beispiel einen so genannten Klasse 2-Chipkarten-Terminal, kann auch die Eingabe der PIN erfolgen.

Das ID-Provider-Modul 136 hat eine Netzwerk-Schnittstelle 138 zur Kommunikation über das Netzwerk 116. Das ID-Provider-Modul 136 hat ferner einen Speicher 140, in dem ein privater Schlüssel 142 des ID-Provider-Moduls 136 sowie das entsprechende Zertifikat 144 gespeichert ist. Auch bei diesem Zertifikat kann es sich beispielsweise um ein Zertifikat nach einem PKI-Standard, wie zum Beispiel X.509 handeln.

Das ID-Provider-Modul 136 hat ferner zumindest einen Prozessor 145 zur Ausführung von Programminstruktionen 146 und 148. Durch Ausführung der Programminstruktionen 146 werden die das ID-Provider-Modul 136 betreffende Schritte des kryptographischen Protokolls ausgeführt. Insgesamt wird also das kryptographische Protokoll durch Ausführung der Programminstruktionen 134 durch den Prozessor 128 des ID-Tokens 106 sowie durch Ausführung der Programminstruktionen 146 durch den Prozessor 145 des ID-Provider-Moduls 136 implementiert.

Die Programminstruktionen 148 dienen zur Implementierung der Ende-zu-Ende-Verschlüsselung auf Seiten des ID-Provider-Moduls 136, beispielsweise basierend auf dem symmetrischen Schlüssel, der anlässlich der Ausführung des kryptographischen Protokolls zwischen dem ID-Token 106 und dem ID-Provider-Modul 136 vereinbart worden ist. Prinzipiell kann jedes an sich vorbekannte Verfahren zur Vereinbarung des symmetrischen Schlüssels für die Ende-zu-Ende-Verschlüsselung verwendet werden, wie zum Beispiel ein Diffie-Hellman-Schlüsselaustausch.

Das ID-Provider-Modul 136 befindet sich vorzugsweise in einer besonders geschützten Umgebung, insbesondere in einem so genannten Trust-Center, sodass das ID-Provider-Modul 136 in Kombination mit der Notwendigkeit der Authentifizierung des Nutzers 102 gegenüber dem ID-Token 106 den Vertrauensanker für die Authentizität der aus dem ID-Token 106 ausgelesenen Attribute bildet.

Ein Dienst-Computersystem 150 kann zur Entgegennahme einer Bestellung oder eines Auftrags für eine Dienstleistung oder ein Produkt, insbesondere eine Online-Dienstleistung, ausgebildet sein. Beispielsweise kann der Nutzer 102 online über das Netzwerk 116 ein Konto bei einer Bank eröffnen oder eine andere Finanz- oder Bankdienstleistung in Anspruch nehmen. Das Dienst-Computersystem 150 kann auch als Online-Warenhaus ausgebildet sein, sodass der Benutzer 102 beispielsweise online ein Mobiltelefon oder dergleichen erwerben kann. Ferner kann das Dienst-Computersystem 150 auch zur Lieferung von digitalen Inhalten ausgebildet sein, beispielsweise für den Download von Musik- und/oder Videodaten oder als Behördenserver für eine eGovernment Anwendung.

Das Dienst-Computersystem 150 hat hierzu eine Netzwerk-Schnittstelle 152 zur Verbindung mit dem Netzwerk 116. Ferner hat das Dienst-Computersystem 150 zumindest einen Prozessor 154 zur Ausführung von Programminstruktionen 156. Durch Ausführung der Programminstruktionen 156 werden beispielsweise dynamische HTML-Seiten generiert, über die der Nutzer 102 seinen Auftrag oder seine Bestellung eingeben kann.

Je nach der Art des beauftragten oder bestellten Produkts oder der Dienstleistung muss das Dienst-Computersystem 150 Attribute des Nutzers 102 und/oder dessen ID-Token 106 anhand eines oder mehrerer vorgegebener Kriterien überprüfen. Nur wenn diese Prüfung bestanden wird, wird die Bestellung oder der Auftrag des Nutzers 102 entgegengenommen und/oder ausgeführt.

Beispielsweise ist es für die Eröffnung eines Bankkontos oder den Kauf eines Mobiltelefons mit einem dazugehörigen Vertrag erforderlich, dass der Nutzer 102 seine Identität gegenüber dem Dienst-Computersystem 150 offenbart, und dass diese Identität überprüft wird. Im Stand der Technik muss der Nutzer 102 hierzu beispielsweise seinen Personalausweis vorlegen. Dieser Vorgang wird durch das Auslesen der digitalen Identität des Nutzers 102 aus seinem ID-Token 106 ersetzt.

Je nach Anwendungsfall können für die Erbringung des Dienstes weitere Attribute erforderlich sein, die in dem ID-Token zunächst nicht vorhanden sind. Hierzu kann das in der Figur 1 gezeigte Computersystem AP-Computersysteme 172 und 173 und ein APV-Computersystem 199 aufweisen. Die AP-Computersysteme können prinzipiell gleich aufgebaut sein wie das ID-Provider-Modul oder ein solches beinhalten oder an dieses operativ gekoppelt sein (um z.B. mit dem ID-Token eine gegenseitige Authentifizierung durchführen und einen Ende-zu-Ende verschlüsselten Kanal aufbauen zu können) und verfügen über zusätzliche Funktionalitäten zum Empfangen von Attributspezifikationen von einem APV-Computersystem 199 sowie zum Schreiben von Attributen in den ID-Token.

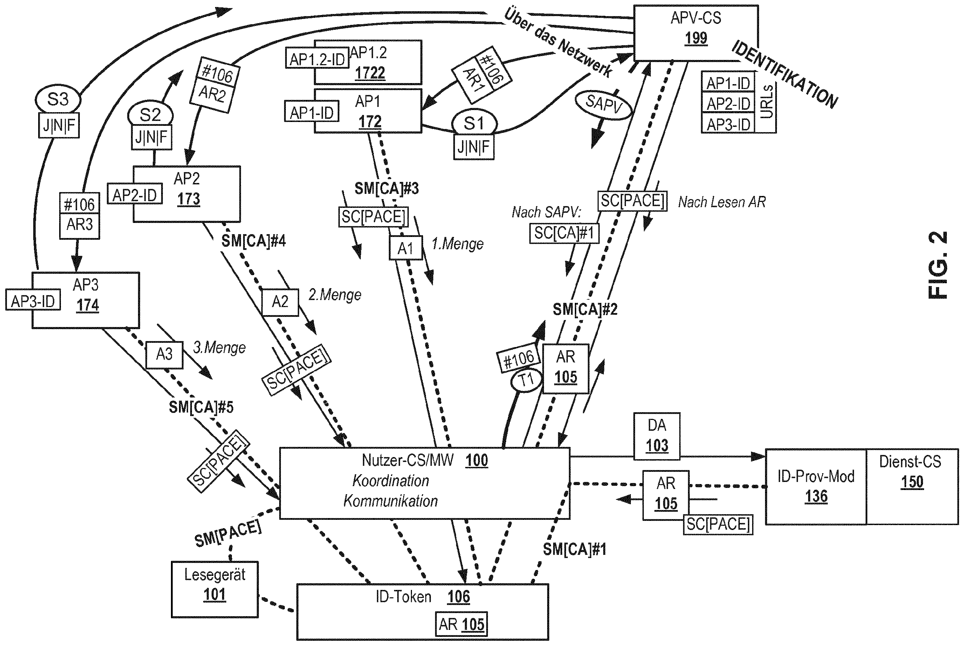

**Figur 2** zeigt eine Ausführungsform eines verteilten Systems, welches im Wesentlichen die bereits in Figur 1 beschriebenen Komponenten und Computersysteme beinhaltet. Die durch Ende-zu-Ende Verschlüsslung geschützten Übertragungskanäle zwischen dem ID-Token und den jeweiligen Kommunikationspartnern (ID-Provider-Modul, diverse AP-Computersysteme, Nutzer-Computersystem, APV-Computersystem) sind durch gestrichelte Linien dargestellt. Das APV-Computersystem kann z.B. mittels Protokollumsetzung eine Funktion als Relais-Station wahrnehmen und den Aufbau der einzelnen Kanäle initiiere, es ist jedoch nicht Endpunkt in den Ende-zu-Ende verschlüsselten Kommunikationsverbindungen.

Zur Inanspruchnahme eines von dem Dienst-Computersystem 150 zur Verfügung gestellten Dienstes wird beispielsweise wie folgt vorgegangen (wobei im Folgenden Bezug genommen wird auf die **Figuren 1****,** **2** **und** **3**):
- Der Nutzer 102 baut zunächst mithilfe seines Nutzer-Computersystems 100 eine Internetsession über das Netzwerk 116 zu dem Dienst-Computersystem 150 auf. Über diese Internetsession wird in Schritt 200 eine Dienstanforderung 103 von dem Nutzer-Computersystem 100 an das Dienst-Computersystem 150 übertragen, womit der Nutzer 102 die Erbringung eines Dienstes des Dienst-Computersystems 150 anfordert. Das Dienst-Computersystem 150 reagiert auf diese Dienstanforderung 103 mit der Übermittlung einer Attributspezifikation 105 (über ein Netzwerk oder innerhalb eines einzelnen Computersystems an das ID-Provider-Modul in Schritt 202. Die Attributspezifikation wird auch als "erste Attributspezifikation" bezeichnet;
- Der Empfang der ersten Attributspezifikation durch das ID-Provider-Modul leitet die gegenseitige Authentifizierung von ID-Provider-Modul und ID-Token in Schritt 204 und den Aufbau eines ersten geschützten Übertragungskanals SM[CA]#1 zwischen ID-Provider-Modul und ID-Token in Schritt 206 ein; damit wird der erste gesicherte Übertragungskanal zum aktiven Datenübertragungskanal des ID-Tokens;
- In Schritt 208 schreibt das ID-Provider Modul 136 die erste Attributspezifikation 105, die diejenigen Attribute spezifiziert, die für die Erbringung des mit der Dienstanforderung 103 angeforderten Dienstes zu erfüllen sind, in den geschützten Speicher 183 des ID-Token. Die erste Attributspezifikation 105 wird dabei über den ersten geschützten Übertragungskanal SM[CA]#1 übermittelt.
- In Schritt 210 überträgt das ID-Provider-Modul zusammen mit der ersten Attributspezifikation oder auch nach Übertragung der ersten Attributspezifikation ein Umschaltsignal SC[CA]PACE an den ID-Token um diesen zu veranlassen, auf den lokalen Kanal SM[PACE] umzuschalten. Das Umschalten auf den lokalen Kanal, der eine geschützte Kommunikationsverbindung zwischen Nutzer-Computersystem und dem ID-Token über das Lesegerät darstellt, ermöglicht es weiteren Computersystemen, z.B. dem APV-Computersystem 199, eine gegenseitige Authentifizierung mit dem ID-Token und den Aufbau einer Ende-zu-Ende Verschlüsselung zwischen diesem weiteren Computersystem und dem ID-Token über das Nutzer-Computersystem herzustellen. Das Nutzer-Computersystem kann über das Netzwerk 116 Daten von den weiteren Computersystemen empfangen und über den geschützten lokalen Kommunikationskanal an den ID-Token weiterleiten;
- Das Nutzer-Computersystem erhält von dem Dienst-Computersystem, dem ID-Provider-Modul oder dem ID-Token ein Signal, dass die erste Attributspezifikation in dem ID-Token gespeichert wurde;
- In Schritt 212 sendet das Nutzer-Computersystem daraufhin die Adresse des ID-Token 106# und ein Triggersignal T1 an das APV-Computersystem. Die Adresse 106# kann z.B. eine IP-Adresse des Nutzer-Computersystems und eine Portnummer, über welches das ID-Token über das Lesegerät adressiert werden kann, enthalten. Das Triggersignal T1 beinhaltet die Information, dass die erste Attributspezifikation erfolgreich in dem ID-Token gespeichert wurde. Das Triggersignal und die Adresse können zusammen oder sequentiell versendet werden. Die Token-Adresse kann Bestandteil des Triggersignals sein;
- In Antwort auf den Empfang des Triggersignals T1 und der Adresse 106# führen das APV-Computersystem und der ID-Token in Schritt 214 (auf Initiative des APV-Computersystems) eine gegenseitige Authentifizierung durch; dies kann über das Netzwerk und das Nutzer-Computersystem erfolgen, zu welchem das ID-Token ja über den aktiven lokalen Kommunikationskanal verbunden ist. Hierbei wird die Adresse #106 des ID-Tokens, zum Beispiel eine URL mit Portangabe, verwendet;
- In Schritt 226 folgt nach gegenseitiger erfolgreicher Authentifizierung der Aufbau eines zweiten geschützten Kommunikationskanals SM[PACE] zwischen dem APV-Computersystem und dem ID-Token; damit wird der zweite gesicherte Übertragungskanal zum aktiven Datenübertragungskanal des ID-Tokens;
- In Schritt 218 liest das APV-Computersystem 199 die erste Attributspezifikation 105 aus dem ID-Token über den zweiten geschützten Kommunikationskanal aus;
- In Schritt 220 sendet das APV-Computersystem ein Umschaltsignal an den ID-Token, welches den ID-Token veranlasst, den geschützten lokalen Kommunikationskanal SM[PACE] zu reaktivieren;
- In Schritt 222 analysiert das APV-Computersystem die erste Attributspezifikation 105 und ermittelt mehrere APV-Computersysteme, die in der Lage sind, zumindest Teile der in der Attributspezifikation 105 spezifizierten Attribute bereitzustellen. Beispielsweise kann die Analyse beinhalten, mehrere Attributklassen zu identifizieren, welchen die spezifizierten Attribute jeweils angehören (beispielsweise Adressdaten, Gesundheitsdaten, Daten zum Alter, zur Kreditwürdigkeit und Ähnliches). Sodann werden AP-Computersysteme, die in der Lage sind, Attribute der betreffenden Klassen zur Verfügung zu stellen, ermittelt. Beispielsweise kann das APV-Computersystem die AP-Computersysteme 172,173 und 174 identifizieren, die jeweils Attribute einer anderen Attributklasse bereitstellen können. Außerdem unterteilt das APV-Computersystem die erste Attributspezifikation 105 in mehrere Teil-Attributspezifikationen AR1, AR2, AR3, die jeweils nur diejenigen Attribute spezifizieren, die einer bestimmten Attributklasse angehören oder die von einem der ermittelten AP-Computersysteme bereitgestellt werden können. Das APV-Computersystem sendet nun eine diese Teilspezifikationen, auch "zweite Attributspezifikation" AR1 genannt über das Netzwerk an ein entsprechendes erstes AP-Computersystem 172. Das AP-Computersystem 172 erfährt also nicht die Gesamtheit der angefragten Attribute, sondern erhält nur einen Ausschnitt der angefragten Attribute, der in der Regel keine Rückschlüsse auf den anfragenden Dienst zulässt. Vorzugsweise erfolgt die Übertragung der Attributspezifikation verschlüsselt, zum Beispiel über das Internet mittels des HTTPS Protokolls. Außerdem übermittelt das APV-Computersystem die Token-Adresse 106#an das erste HP-Computersystem 172;
- In Antwort auf den Erhalt der zweiten Attributspezifikation und der Adresse ermittelt das erste AP-Computersystem in Schritt 224 die in der zweiten Attributspezifikation AR1 spezifizierten Attribute. Beispielsweise werden die Attribute aus einer Datenbank 175, die operativ an das AP1-Computersystem gekoppelt ist, gelesen; in Schritt 226 führt das AP1-Computersystem und der ID-Tokens eine gegenseitige Authentifizierung durch. Dies wird dadurch ermöglicht, dass das in Schritt 220 verschickte Umschaltsignal den lokalen Kommunikationskanal zwischen dem ID-Token und dem Nutzer-Computersystem wieder reaktiviert hat, sodass ein Datenaustausch zwischen dem AP1-Computersystem und dem Nutzer-Computersystem 100 über das Netzwerk 116 bzw. zwischen dem Nutzer-Computersystem 100 und dem ID-Token 106 über den lokalen Datenkommunikationskanal möglich sind;
- In Schritt 228 erfolgt nach erfolgreicher gegenseitiger Authentifizierung von AP1 - Computersystem und dem ID-Token Aufbau eines dritten gesicherten Übertragungskanals SM[CA]#3 zwischen dem AP1-Computersystem und dem ID-Token; damit wird der dritte gesicherte Übertragungskanal zum aktiven Datenübertragungskanal des ID-Tokens;
- Der dritte gesicherte Übertragungskanal SM[CA]#3 wird von dem AP1-Computersystem in Schritt 230 dazu genutzt, die ermittelte erste Attributmenge A1 in einen geschützten Speicherbereich des Speichers 118 des ID-Token zu speichern;
- Nach der erfolgreichen Speicherung sendet in Schritt 232 das AP1-Computersystem ein Umschaltsignal an den ID-Token welches den ID-Token veranlasst, den geschützten lokalen Kommunikationskanal SM[PACE] zu reaktivieren;
- Außerdem sendet in Schritt 232 das AP1-Computersystem ein Bestätigungssignal S1 an das APV-Computersystem 199. Wie in Figur 2 dargestellt, beinhaltet das Bestätigungssignal Informationen darüber, ob die erste Attributmenge A1 erfolgreich ermittelt und in das ID-Token geschrieben werden konnte. Obwohl weder Nutzer-Computersystem noch das APV-Computersystem die Daten, die über die geschützten ersten, zweiten, dritten und weiteren Kanäle übertragen werden nicht lesen können und somit nicht feststellen können, ob und wann die in der zweiten Attributspezifikation AR1 spezifizierten Attribute erfolgreich ermittelt und in dem ID-Token gespeichert wurden, ermöglicht also das Bestätigungssignal eine Koordination des Datenaustauschs über das Nutzer-Computersystem durch das APV-Computersystem. Dies wird dadurch gelöst, dass das AP1-Computersystem das erste Bestätigungssignal S1 an das Nutzer-Computersystem 100 sendet, sobald die erste Menge Attribute A1 erfolgreich in den ID-Token 106 geschrieben wurde oder sobald ein Fehler auftrat. Der Fehler kann auch in der Überschreitung einer maximalen Zeit für den Schreibzugriff liegen. Das Bestätigungssignal S1 zeigt dem APV-Computersystem vorzugsweise an, ob sämtliche in der zweiten Attributspezifikation AR1 spezifizierten Attribute erfolgreich ermittelt und in dem ID-Token geschrieben wurden. Optional kann das Bestätigungssignal weitere Informationen, zum Beispiel Fehlercodes oder ähnliches enthalten, die einen Rückschluss auf Fehlerursachen zulassen. Das Bestätigungssignal könnte z.B. den Wert "F" enthalten falls gar kein Attribut ermittelt werden konnte, "N" falls eine Teilmenge der in der für den jeweiligen AP bestimmten Attributspezifikation ermittelt werden konnte und "J" falls das AP1-Computersystem sämtliche der in der Attributspezifikation AR1 spezifizierten Attribute ermitteln konnte;

Die Schritte 222-234 werden nun für jedes der ermittelten AP-Computersysteme 173, 174, ..., wiederholt. Hierbei wird zum Beispiel die dritte Attributspezifikation AR2 an das zweite Attribut Provider-Computersystem AP2 173 über das Netzwerk, vorzugsweise verschlüsselt, kommuniziert, es wird nach gegenseitiger Authentifizierung zwischen dem AP2-Computersystem und dem ID-Token ein vierter geschützter Datenübertragungskanal SM[CA]#4 aufgebaut, eine zweite Attributmenge A2 durch das AP2-Computersystem übermittelt, die zweite Attributmenge über den vierten geschützten Datenübertragungskanal in das ID-Token 106 geschrieben, ein zweites Bestätigungssignal S2 von dem AP2-Computersystem an das APV-Computersystem gesendet und ein Umschaltsignal zum Reaktivieren des lokalen Datenübertragungskanals an das ID-Token gesendet. In analoger Weise wird zum Beispiel die vierte Attributspezifikation AR3 an das dritte Attribut Provider-Computersystem AP3 174 über das Netzwerk, vorzugsweise verschlüsselt, kommuniziert, es wird nach gegenseitiger Authentifizierung zwischen dem AP3-Computersystem und dem ID-Token ein fünfter geschützter Datenübertragungskanal SM[CA]#5 aufgebaut, eine dritte Attributmenge A3 durch das AP3-Computersystem übermittelt, die dritte Attributmenge über den fünften geschützten Datenübertragungskanal in das ID-Token 106 geschrieben, ein drittes Bestätigungssignal S3 von dem AP3-Computersystem an das APV-Computersystem gesendet und ein Umschaltsignal zum Reaktivieren des lokalen Datenübertragungskanals an das ID-Token gesendet.

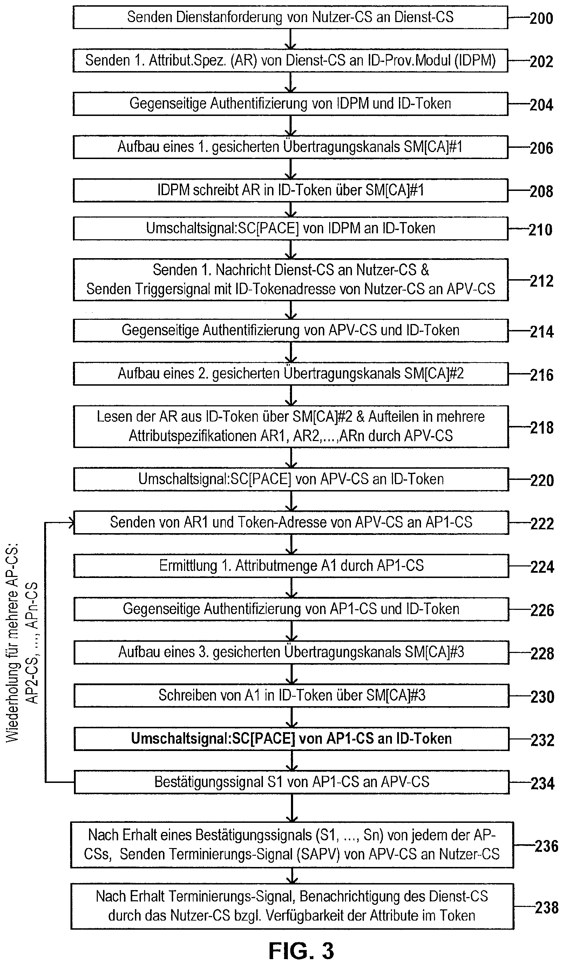

Nach manchen Ausführungsformen erfolgt die Wiederholung der Schritte 222-234 sequenziell wie in Figur 3 dargestellt. Beispielsweise versendet das APV-Computersystem die dritte Attributspezifikation AR2 an das AP2-Computersystem erst nach Empfang des Bestätigungssignals S1 und die vierte Attributspezifikation AR3 an das AP3-Computersystem erst nach Empfang des Bestätigungssignals S2.

Nach alternativen Ausführungsformen sendet das APV-Computersystem die erzeugten Teil-Attributspezifikationen AR1, AR2, AR3 usw. parallel an die jeweiligen AP-Computersysteme 172, 173, 174, sodass eine parallele Ermittlung der jeweiligen Attributmengen möglich ist. Um einen vollständigen Transfer der Attribute von den jeweiligen AP-Computersystemen an das ID-Token zu sichern reserviert der ID-Token seinen zugehörigen geschützten Übertragungskanal bei dem Lesegerät und dem daran gekoppelten Nutzer-Computersystem zumindest so lange bis der geschützte Kanal zum ID-Token aufgebaut oder reaktiviert wurde, der Schreibvorgang der Attribute beendet wurde und optional der Kontext des geschützten Kanals (also generierte kryptographische Schlüssel, Sitzungsschlüssel etc.) zur schnellen Reaktivierung des Kanals gespeichert wurde. Danach gibt das AP-Computersystem das ID-Token an andere AP-Computersysteme "frei". Nach Ausführungsformen ist das ID-Token so konfiguriert, dass es ein quasi-paralleles Schreiben über logische Kanäle unterstützt, so dass die Attribute oder die Attributmengen jeweils atomar (also nach dem ASIC Modell für Datentransaktionen) geschrieben werden.

Das APV-Computersystem 199 prüft nach jedem Empfang eines Bestätigungssignals S1, S2, S3 ... ob von jedem der ermittelten AP-Computersysteme, die eine Teil-Attributspezifikation AR1, AR2, AR3 erhielten, bereits ein entsprechendes Bestätigungssignal empfangen wurde. Falls das APV-Computersystem in Schritt 236 feststellt, dass von jedem dieser AP-Computersysteme ein Bestätigungssignal empfangen wurde, die für alle der ermittelten AP-Computersysteme anzeigen, dass die jeweils spezifizierten Attribute erfolgreich ermittelt und in dem ID-Token gespeichert werden konnten, sendet das APV-Computersystem ein Terminierungssignal SAPV an das Nutzer-Computersystem über das Netzwerk 116. Falls von einem der AP-Computersysteme ein Bestätigungssignal mit einer Fehlermeldung empfangen wurde, kann das APV-Computersystem das gesamte Verfahren mit einer Fehlermeldung an das Dienst-Computersystem abbrechen. Alternativ dazu kann es die Teil-Attributspezifikation, für die keine oder nicht alle Attribute ermittelt werden konnten, an ein Ersatz-AP-Computersystem senden, welches dazu in der Lage ist, die Attribute bereitzustellen, die ursprünglich das AP-Computersystem liefern sollte, bei dem der Fehler auftrat;
- In Antwort auf den Empfang des Terminierungs-Signals sendet das Nutzer-Computersystem eine "zweite" Nachricht an das Dienst-Computersystem um das Dienst-Computersystem davon in Kenntnis zu setzen, dass sämtliche für den Dienst relevanten und in der ersten Attributspezifikation 105 spezifizierten Attribute erfolgreich ermittelt wurden und sich nun in dem ID-Token befinden. Dies ermöglicht es dem ID-Provider-Modul des Dienst-Computersystems, den ersten Datenübertragungskanal zu reaktivieren und über diesen sämtliche auf dem ID-Token gespeicherten und in der ersten Attributspezifikation spezifizierten Attribute auszulesen und dem Dienst zur Verfügung zu stellen. Der Dienst kann nun die Attribute analysieren und den Dienst in Abhängigkeit vom Ergebnis dieser Analyse dem Nutzer 102 bereitstellen.

Um den oben genannten geschützten ersten Übertragungskanal vom ID-Provider-Modul des Dienst-Computersystems zum ID-Token aufzubauen, können mehrere Schritte notwendig sein. So kann nach manchen Ausführungsformen das Nutzer-Computersystem 100 den Nutzer 102 dazu auffordern, sich gegenüber dem ID-Token 106 zu authentifizieren. Hierzu gibt der Nutzer 102 seine PIN zum Beispiel über das Lesegerät 101 oder eine Tastatur des Nutzer-Computersystems 100 ein. Zur Verifikation der PIN wird zwischen dem Nutzer-Computersystem 100, das heißt dessen Lesegerät 101, und dem ID-Token 106 ein lokaler gesicherter Übertragungskanal SM[PACE] aufgebaut, beispielsweise mithilfe eines Diffie-Hellman Schlüsselaustausches, insbesondere nach dem vom Bundesamt für Sicherheit in der Informationsverarbeitung (BSI) spezifizierten PACE-Protokoll. Über das Nutzer-Computersystem 100 baut der ID-Provider-Modul 136 einen geschützten Übertragungskanal SM[CA]#1 über das Netzwerk 116 auf, über den sich das ID-Provider-Modul 136 gegenüber dem ID-Token 106 authentifiziert, und zwar unter Verwendung des Zertifikats 144.

Optional kann das ID-Provider-Modul 136 zunächst versuchen, sämtliche Attribute, die in der ersten Attributspezifikation spezifiziert sind und die bereits in dem ID-Token gespeichert vorliegen, auszulesen und an das Dienst-Computersystem zu übertragen und die erste Attributspezifikation durch eine neue Version zu ersetzen, welche die bereits ausgelesenen Attribute nicht mehr spezifiziert. Die ausgelesenen Attribute werden hierbei über den ersten geschützten Übertragungskanal SM[CA]#1 übertragen.

Vorzugsweise erfolgt eine gegenseitige Authentifizierung des IT-Tokens 106 und dem jeweiligen Authentifizierungspartner (also z.B. ID-Provider-Modul 136, APV-Computersystem und AP1, AP2 und AP3 Computersystem) unter Verwendung von Zertifikaten, das heißt es erfolgt eine sogenannte CA und eine TA. Hierbei wird auch ein Session Key vereinbart, mit dem der jeweils aufgebaute geschützte Übertragungskanal mit Ende-zu-Ende-Verschlüsselung zwischen dem ID-Token 106 und dem Authentifizierungspartner über das Nutzer-Computersystem 100 und das Netzwerk 116 aufgebaut wird, wobei der lokale geschützte Übertragungskanal SM[PACE] in manchen Ausführungsformen zusätzlich zum jeweils aufgebauten ersten, zweiten oder dritten geschützten Datenkommunikationskanal SM[CA]X bestehen bleibt.

Bei dem ID-Provider Modul des Dienst-CS kann es sich um eine integrale Komponente des Dienst-Computersystems oder eine externe Komponente handeln die mit dem Dienst-CS interoperabel ist. Nach Ausführungsformen verwendet jedes der AP-Computersysteme und auch das APV-Computersystem ebenfalls jeweils ein ID-Provider-Modul (das als interne oder externe Komponente des AP- bzw. APV-Computersystems ausgebildet sein kann), zum Datenaustausch mit dem ID-Token. Dabei verwenden das Dienst-Computersystem, die AP-Computersysteme und das APV-Computersystem jeweils eigene ID-Provider-Module um den Datenschutz der ausgetauschten Attribute zu gewährleisten.

Gemäß einer Ausführungsform ist der geschützte Speicher des ID-Tokens in verschiedene Sektoren untergliedert, wobei jeder Sektor einer bestimmten Attributklasse zugeordnet ist und wobei die Schreibrechte für die einzelnen AP-Computersysteme auf einzelne Sektoren beschränkt sind. Vorzugsweise speichern die AP-Computersysteme die von ihnen jeweils generierten Attributmengen, die in der zweiten AR1, dritten AR2 und vierten AR3 Attributspezifikation spezifiziert sind, selektiv jeweils in einem Sektor, der einer bestimmten Attributklasse zugeordnet ist. Ein AP-Computersystem, das Attribute einer bestimmten Attributklasse bereitstellt, kann in diesem Fall selektiv aus den ihm zugeordneten Sektor Attributmengen schreiben und optional in manchen Ausführungsformen zudem auch auf dort gespeicherte Attributspezifikationen lesend und/oder schreibend zugreifen. Letzteres kann insbesondere dann vorteilhaft sein, wenn mehrere AP-Computersysteme 1722, 172, ggf. sequentiell, Attribute einer bestimmten Klasse bereitstellen sollen, wobei jedes dieser AP-Computersysteme nach dem Schreiben der von ihm ermittelten Attribute auf den Sektor eine Attributspezifikation in dem ID-Token speichert die selektiv die Attribute spezifiziert die nicht von dem schreibenden AP-Computersystem ermittelt werden konnten.

Die Kommunikation zwischen dem Nutzer-Computersystem 100 und dem ID-Token 106 erfolgt vorzugsweise über den lokalen Übertragungskanal SM[PACE]. Die Kommunikation zwischen dem ID-Token und dem ID-Provider-Modul 136 erfolgt über einen ersten geschützten Übertragungskanal SM[CA]#1. Die Kommunikation zwischen dem ID-Token und dem APV-Computersystem 199 erfolgt über einen zweiten geschützten Übertragungskanal SM[CA]#2. Die Kommunikation zwischen dem ID-Token und jeweils einem der AP-Computersysteme 172, 173, 174 erfolgt jeweils über einen entsprechenden dritten SM[CA]#3, vierten SM[CA]#4 und fünften SM[CA]#5 geschützten Übertragungskanal.

In manchen - im Hinblick auf die Schritte 236 und 238 alternativen - Ausführungsformen aktiviert das APV-Computersystem unmittelbar nach Erhalt eines Bestätigung-Signals S1, S2, S3 von einem jeden der AP-Computersysteme zunächst den ersten geschützten Übertragungskanal SM[CA]#1 (z.B. durch Senden eines entsprechenden Umschaltkommandos), um dem ID-Provider-Modul 136 ein sofortiges Auslesen der von diesem einen Attribut-Provider-Computersystem ermittelten Attribute zur Übertragung an das Dienst-Computersystem zu ermöglichen. Nach einem erfolgreichen Auslesen einer Teilmenge A1, A2, A3 der Attribute sendet das ID-Provider-Modul jeweils eine Lesebestätigung an das APV-Computersystem. Daraufhin sendet das APV-Computersystem ein Umschaltsignal SC[CA]PACE an den ID-Token um diesen zum Umschalten auf den lokalen Kanal zu veranlassen und sendet eine der Teil-Attributspezifikationen AR2 sowie die Adresse des Tokens 106# an ein weiteres 173 der AP-Computersysteme, das bisher noch nicht angefragt wurde. Nach erfolgreicher gegenseitiger Authentifizierung wird für dieses AP-Computersystem ein geschützter Übertragungskanal SM[CA]#3, SM[CA]#4 SM[CA]#5 aufgebaut wie zuvor beschrieben. Dieser geschützte Übertragungskanal wird zum aktiven Kanal, der erste sichere SM[CA]#1 zu dem ID-Provider-Modul wird dadurch zu einem inaktiven Übertragungskanal.

Ein inaktiver Übertragungskanal ist ein Kanal, für welchen eine Sitzung und eine gesicherte, zum Beispiel verschlüsselte Verbindung aufrechterhalten wird, obwohl dieser Kanal nicht aktuell zur Datenübertragung genutzt wird. Ein aktiver Kanal ist ein Kanal, der aktuell für die Datenübertragung genutzt wird. Der Übertragungskanal kann also durch ein Umschaltkommando sehr schnell und ressourcenschonend wieder aktiviert werden, ohne dass neue Sitzungsschlüssel ausgehandelt werden müssen. Bei diesem sequenziellen bereitstellen von Attributmengen A1, A2, A3 und dem sofortigen auslesen dieser Attributmengen unmittelbar nach deren Bereitstellung durch das ID-Provider-Modul aktiviert und deaktiviert das Nutzer-Computersystem den ersten sicheren Kanal zu dem ID-Provider-Modul in Abhängigkeit vom Empfang von Umschaltsignalen von dem ID-Provider-Modul und in Abhängigkeit vom Empfang von Bestätigung-Signalen S1, S2, S3 von den jeweiligen Attribut-Provider-Computersystemen. Dies beschleunigt das Verfahren, da keine neuen Sitzungsschlüssel zur Etablierung des ersten geschützten Übertragungskanals zwischen IT-Token und ID-Provider-Modul ausgehandelt werden müssen, was insbesondere angesichts der begrenzten Prozessorleistung vieler ID-Token von großem Vorteil sein kann.

In manchen Ausführungsformen ist das APV-Computersystem so konfiguriert, dass es zunächst über den geschützten Kommunikationskanal SM[CA]#2 für alle generierten Teil-Attributspezifikationen (also die zweite AR1, dritte AR2, vierte AR3 usw. Attributspezifikation) eine Signaturanfrage an das ID-Token sendet. Die Signaturanfrage kann zusammen mit den Teil-Attributspezifikationen an das ID-Token übermittelt werden. Das ID-Token signiert (optional: nach einer expliziten Bestätigung der Signatur durch den Nutzer z.B. durch eine PIN-Eingabe) jede der Teil-Attributspezifikationen. Das APV Computersystem empfängt die signierten Teil-Attributspezifikationen AR1_{sign}, AR2_{sign}, AR3_{sign}, ..., oder nur die jeweils generierte Signatur von dem ID-Token und leitet die signierten Teil-Attributspezifikationen bzw. Signaturen jeweils an dasjenige der AP-Computersysteme weiter, welches zur Bereitstellung der betreffenden Teil-Attributspezifikation ausgebildet ist. Jedes der AP-Computersysteme erhält vom APV-Computersystem also "seine" Teil-Attributspezifikation bereits in einer vom ID-Token signierten Form und prüft, bevor es die darin spezifizierten Attribute ermittelt, die Validität der Signatur, z.B. mittels eines öffentlichen Signaturprüfschlüssels, der dem ID-Token zugeordnet ist. Beispielsweise kann das Token vom Nutzer bereits so konfiguriert sein, Attributspezifikationen, die von einem bestimmten APV Computersystem bereitgestellt werden oder eine bestimmte Attributklasse betreffen immer automatisch zu signieren.

Dieses Verfahren ist vorteilhaft, da die einzelnen AP Computersysteme prüfen können, ob die Attribute berechtigterweise (also mit Wissen und Wollen des Nutzers) angefragt wurden schon bevor sie eine Kommunikationsverbindung mit dem ID-Token aufbauen bzw. die entsprechenden Attribute bereitstellen. Dies reduziert den Verbrauch von Rechenkapazitäten seitens der AP-Computersysteme und beschleunigt das Verfahren. Zudem kann bei Signatur-Invalidität der Aufbau des Kanals bzw. die Attributermittlung von vorneherein unterbleiben. Für den Datenschutz ist es außerdem vorteilhaft, dass bei Signaturinvalidität kein Lese-oder Schreibzugriff auf den geschützten Speicher des ID-Tokens erfolgt.

Nach einer alternativen Ausführungsform vergewissern sich die einzelnen AP-Computersysteme selbst, ob die Attribute wirklich mit Wissen und Wollen des Nutzers angefragt wurden. Nachdem ein AP-Computersystem (z.B. AP1) eine entsprechende Teil-Attributspezifikation (z.B. AR1) vom APV Computersystem erhalten und einen geschützten Kommunikationskanal (z.B. SM[CA]#3) zu dem ID-Token aufgebaut hat, sendet das AP-Computersystem die Teil-Attributspezifikation über den geschützten Kanal an das ID-Token zusammen mit einer Signaturanfrage. Das ID-Token signiert, optional nach einer expliziten Bestätigung der Signatur durch den Nutzer z.B. durch eine PIN-Eingabe, die Teil-Attributspezifikation. Das AP-Computersystem empfängt die signierten Teil-Attributspezifikationen AR1 von dem ID-Token über den geschützten Kanal (z.B. SM[CA]#3) und führt eine Signaturprüfung der signierten Teil-Attributspezifikation durch, z.B. mittels eines öffentlichen Signaturprüfschlüssels des ID-Tokens. Das AP-Computersystem ermittelt die in der signierten Teil-Attributspezifikation nur dann, wenn die Signatur valide ist.

Dieses Verfahren hat den Vorteil, dass jedes AP-Computersystem individuell festlegen kann ob eine Signaturprüfung vor Bereitstellung der Attribute erfolgen soll, sodass eine größere Flexibilität der Datensicherheit z.B. in Abhängigkeit von der Vertraulichkeit der bereitzustellenden Attribute möglich ist. Allerdings wird bei diesem Vorgehen zunächst der sichere Kanal zwischen AP-Computersystem und ID-Token aufgebaut ganz gleich ob das Token die Attributspezifikation signieren wird oder nicht. Zudem besteht die Gefahr, dass andere (Teil)Attributspezifikationen oder gar Attribute, die möglicherweise im Token gespeichert sind, vom AP-Computersystem ausgelesen werden.

In manchen Ausführungsformen generiert das Computersystem, das die Signaturanfrage erstellt (also das APV Computersystem oder ein AP-Computersystem 172, 173, 174), eine Signaturbestätigungsanfrage und sendet diese Signaturbestätigungsanfrage an das Nutzer-Computersystem 100. Die Signaturbestätigungsanfrage ist eine Anfrage an den Nutzer 102 des Nutzer-Computersystems, dem auch der ID-Token zugewiesen ist, die Signierung einer Attributspezifikation durch das ID-Token zu genehmigen. Beispielsweise kann die Signaturbestätigungsanfrage einen Hinweis auf die vom Dienst angefragten und in einer Attributspezifikation spezifizierten Attribute enthalten, die dem Nutzer über das Display des Nutzer-Computersystems angezeigt wird. Eine Signaturbestätigungsanfrage ermöglicht es dem Nutzer, explizit dem ID-Token die Erlaubnis zu erteilen, eine Attributspezifikation in Antwort auf eine Signaturanfrage zu signieren. Die Erlaubnis kann z.B. dadurch eingeholt werden, dass das Nutzer-Computersystem den Nutzer zur Eingabe einer PIN auffordert, um sich mit dieser gegenüber dem ID-Token als Inhaber des ID-Tokens zu authentifizieren. Falls der Nutzer die Erlaubnis zur Signierung einer Attributspezifikation erteilt, signiert das ID-Token die Attributspezifikation, für welche auch die Signaturbestätigung des Nutzers 102 vorliegt.

Der ID-Token erzeugt die Signatur jeweils durch Ausführung von Programminstruktionen 135 durch den Prozessor 128 des ID-Tokens 106, welcher einen Generator zur Erzeugung digitalen Signaturen bildet, wobei dies unter Verwendung zum Beispiel des privaten Schlüssels 122 des ID-Token erfolgt. Die Signaturberechtigungsanfrage kann als Abfrage einer Signatur-PIN von dem Nutzer 102 ausgebildet sein. .Die PIN Eingabe kann zum Beispiel über eine Nutzerschnittstelle, wie zum Beispiel eine Tastatur des Nutzer-Computersystems 100 oder des Lesegeräts 101 erfolgen. Zur Freischaltung der Ausführung der Programminstruktionen 135 prüft der ID-Token 106, ob die von dem Nutzer 102 eingegebene Kennung mit dem in dem Speicher 118 gespeicherten Referenzwert für die Signatur-PIN (SPIN), der in dem geschützten Speicherbereich 121 gespeichert ist, übereinstimmt.

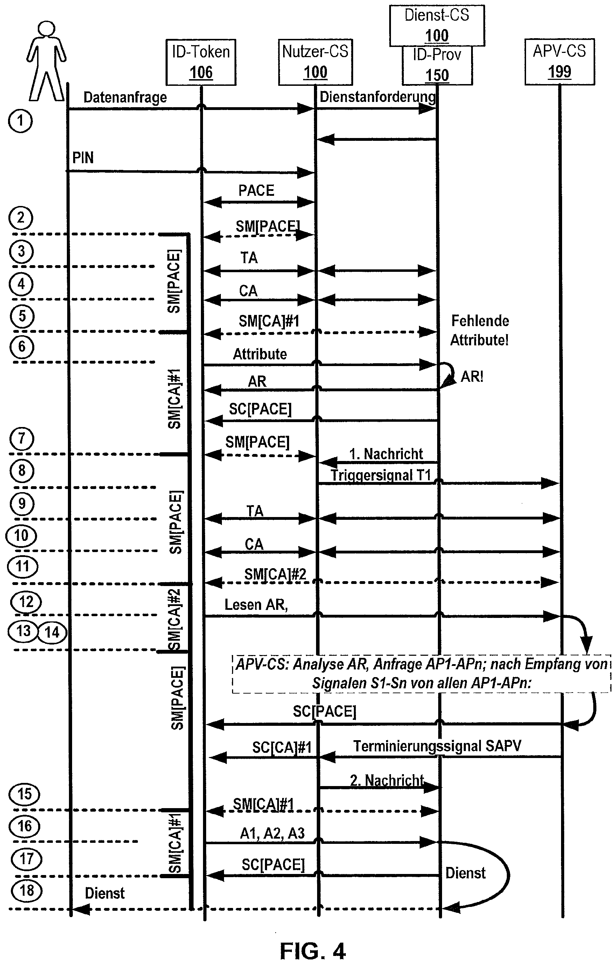

Der ID-Token 106 sendet die signierte zweite Attributspezifikation oder nur die Signatur derselben an das AP1-Computersystem 172. Das AP1 Computersystem 172 prüft die Validität der Signatur und ermittelt die darin spezifizierten Attribute nur dann, wenn die Prüfung ergibt, dass die Signatur valide ist. In analoger Weise können auch die weiteren AP-Computersysteme 173, 174, 1722 eine Signatur der jeweils gelesenen Attributspezifikationen erhalten und prüfen und ggf. im Falle der Validität der Signatur die in der jeweils erhaltenen Attributspezifikation spezifizierten Attribute ermitteln. Nach gegenseitiger Authentifizierung des jeweiligen AP Computersystems und des ID-Tokens wird ein entsprechender geschützter Kommunikationskanal SM[CA]#3, SM[CA]#4, SM[CA]#5 aufgebaut über welchen die Attribute in das ID-Token geschrieben werden. Nach erfolgreichem Schreibvorgang sendet das jeweilige AP-Computersystem ein Bestätigungssignal S1-Sn an das APV Computersystem. Die weiteren Schritte einschließlich eines Versands eines Terminierungssignals an das Dienst-Computersystem sind z.B. in der Beschreibung von Fig. 4 erläutert.

In Antwort auf den Erhalt des Terminierungssignals kann das Dienst-Computersystem die im Speicher 118 des ID-Token gespeicherten Attribute über das ID-Provider-Modul 136 aus dem ID-Token auslesen und den mit der Dienstanforderung 103 angeforderten Dienst erbringen. Das Dienst-Computersystem empfängt die Attribute von dem ID-Provider-Modul 136 nach manchen Ausführungsformen über ein Netzwerk, z.B. das Internet, insb. wenn das Modul 136 als eigenständiges ID-Provider Computersystem ausgebildet ist. Alternativ dazu können die Attribute auch über einen System-Bus eines Dienst-Computersystems an den Dienst bzw. an mit dem Dienst assoziierte Programmodule des Dienst-Computersystems übermittelt werden, z.B. falls das ID-Provider-Modul integraler Bestandteil des Dienst-Computersystems ist.

Die AP-Computersysteme 172, 173, 174, 1722 ... können analog zu dem ID-Provider-Modul 136 aufgebaut sein, das heißt sie verfügen jeweils über eine Netzwerk-Schnittstelle 138, einen Prozessor 145 zur Ausführung von Programminstruktionen 146, 148 und einen Speicher 140, in dem ein Zertifikat und ein privater Schlüssel gespeichert sind. Bei dem Zertifikat handelt es sich vorzugsweise um ein Berechtigungszertifikat, in dem jeweils eine Berechtigung für Schreibzugriffe auf den ID-Token 106 bzw. einzelne Sektoren spezifiziert ist.

Das APV-Computersystem 199 hat vorzugsweise nur Rechte zum Lesen der ersten Attributspezifikation vom ID-Token, hat aber kein Recht, eine Attributspezifikation selbst im ID-Token zu speichern oder bereits gespeicherte Attribute (insb. anderer Sektoren) zu lesen.

Vorzugsweise hat auch das Nutzer-Computersystem 100 weder Lese-noch Schreibrechte bezüglich der Attributspezifikationen und der Attribute des ID-Tokens.

Zusätzlich zu dem ersten Attribut-Provider-Computersystem 172, welches Attribute einer bestimmten Klasse, zum Beispiel Adressdaten, bereitstellen kann, umfasst das verteilte System noch weitere Attribut-Provider-Computersysteme 1722, die ebenfalls dazu ausgebildet sind, Attribute der gleichen Klasse bereitzustellen wie das erste Attribut-Provider-Computersystem 172. Falls beispielsweise das AP-Computersystem 172 nicht dazu in der Lage ist, sämtliche in der zweiten Attributspezifikation AR1 spezifizierten Attribute bereitzustellen, generiert das AP-Computersystem 172 eine neue Version der zweiten Attributspezifikation AR1', welche nur noch diejenigen Attribute der ursprünglichen zweiten Attributspezifikation AR1 spezifiziert, welche nicht durch das AP-Computersystem 172 bereitgestellt werden konnten. Das Nutzer-Computersystem 100 bzw. die darauf installierte Middleware (MW) koordiniert daraufhin die Bereitstellung der noch fehlenden Attribute dieser Attributklasse durch die zusätzlichen AP-Computersysteme 1722 und, ggf. auch 1723. Bei jeder Iteration wird die aktuelle Version der zweiten Attributspezifikation, wie sie in dem ID-Token 106 gespeichert ist, durch eine noch aktuellere Version ersetzt, die nur noch eine Teilmenge der in der Vorversion spezifizierten Attribute spezifiziert, die noch nicht bereitgestellt werden konnten.

**Figur 4** zeigt eine schematische Darstellung eines Verfahrens gemäß Ausführungsform der Erfindung.

In Schritt (1) sendet das Nutzer-Computersystem 100 eine Dienstanforderung 103 eines Nutzers 102 über ein Netzwerk 116 einer Dienst-Computersystem 150, das mit einem ID-Provider-Modul 136 gekoppelt ist. Hierzu gibt der Nutzer beispielsweise eine URL in einen Internetbrowser seines Nutzer-Computersystems ein, um eine sogenannte Internetsession mit dem Dienst-Computersystem aufzubauen. Bei dem Dienst-Computersystem kann es sich zum Beispiel um einen Onlineshop oder ein anderes eCommerce-Portal oder einen Behördenserver, der eine eGovernment-Anwendung zur Verfügung stellt, handeln. Bei der Dienstanforderung des Nutzers kann es sich um die Übertragung einer Kaufentscheidung des Nutzers handeln, die der Nutzer zum Beispiel durch Anklicken eines virtuellen Bedienelements auf der Webseite des Dienst-Computersystems, wie zum Beispiel "Kaufen" oder "buy now" eingibt, wobei diese Dienstanforderung zum Beispiel als http-Request oder https-Request über die Internetsession an das Dienst-Computersystem übertragen werden kann. Bei einer eGovernment-Anwendung kann es sich analog dazu bei der Dienstanforderung um die Übertragung einer Anforderung des Nutzers eines behördlichen Vorgangs, wie zum Beispiel die Ausstellung einer Meldebescheinigung, die Anmeldung eines Kraftfahrzeugs oder die Meldung einer Wohnortänderung oder dergleichen handeln.

Das Dienst-Computersystem benötigt für die Erbringung des mit der Dienstanforderung angeforderten Dienstes Attribute des Nutzers und -je nach Anwendungsfall - auch Attribute des ID-Tokens selbst. Diese können vom Dienst-Computersystem in einer ersten Attributspezifikation 105 ("AR") spezifiziert sein. Beispielsweise kann die erste Attributspezifikation die Attribute Name, Geburtsdatum, Anschrift des Nutzers, Kontonummer des Nutzers, Kreditwürdigkeit des Nutzers sowie Gültigkeitsdauer des ID-Token beinhalten. Die Attribute gemäß dieser ersten Attributspezifikation benötigt das Dienst-Computersystem also zur Erbringung des Dienstes für den Nutzer.

In Antwort auf den Empfang der Dienstanforderung sendet das Dienstcomputersystem 150 in Schritt 304 die erste Attributspezifikation 105 an das ID-Provider-Modul 136. Die erste Attributspezifikation spezifiziert diejenigen Attribute, die das Dienst-Computersystem zur Erbringung des angeforderten Dienstes benötigt. Die Übertragung kann über das Netzwerk erfolgen. Alternativ ist das ID-Provider-Modul ein integraler Bestandteil des Dienst-Computersystems, sodass das Senden der ersten Attributspezifikation zum Beispiel über einen internen Datenbus oder eine LAN-Verbindung erfolgt.

In einem weiteren Schritt authentifiziert sich der Nutzer 102 gegenüber dem ID-Token. Hierzu gibt der Nutzer eine geheime Kennung, wie zum Beispiel die sogenannte Personal Identification Number (PIN) ein. Dies kann je nach Ausführungsform unmittelbar durch Eingabe in den ID-Token erfolgen, durch Eingabe in das Lesegerät oder durch Eingabe in das Nutzer-Computersystem. Vorzugsweise erfolgt die Authentifizierung des Nutzers gegenüber dem ID-Token mittels einer "Fernüberprüfung", worunter hier jedes Verfahren verstanden wird, bei dem die zu überprüfende Kennung nicht in den ID-Token unmittelbar eingegeben wird, um sie mit der dort gespeicherten Kennung zu vergleichen, sondern bei dem die Überprüfung mittels eines das Lesegerät und den ID-Token involvierenden Protokolls erfolgt, bei dem die Kennung, die in das Lesegerät eingegeben wird, nicht an den ID-Token übertragen werden muss. Entsprechende Protokolle sind an sich aus dem Stand der Technik bekannt, wie zum Beispiel Strong Password Only Authentication Key Exchange (SPEKE), Diffie-Hellman Encripted Key Exchange (DH-EKE), Bellovin-Merritt Protokoll oder Password Authenticated Connection Establishment (PACE). Das SPEKE-Protokoll ist beispielsweise bekannt aus www.jablon.ora/speke97.html, US 6,792,533 B2 und US 7,139,917 B2. Unter anderem ebenfalls aus www.jablon.org/speke97.html ist das DH-EKE-Protokoll bekannt. Unter anderem aus US 5,241,599 ist das Bellovin-Merritt-Protokoll bekannt. Aus Technical Guideline TR-03110 des Bundesamt für Sicherheit in der Informationstechnik ist das PACE-Protokoll bekannt, welches sich besonders für elliptische Kurven-Kryptographie eignet, vergleiche hierzu auch DE 102007000587 A1 und DE 102013202001 A1. Vorzugsweise authentifiziert sich neben dem Nutzer auch das Nutzer-Computersystem gegenüber dem ID-Token, wobei in Schritt (2) auch ein lokaler gesicherter Übertragungskanal SM[PACE], das heißt ein sogenannter Secure Messaging-Kanal, zwischen dem ID-Token und dem Nutzer-Computersystem aufgebaut werden kann, beispielsweise indem ein Session Key nach einem Diffie-Hellman-Protokoll zwischen dem ID-Token und dem Nutzer-Computersystem vereinbart wird. Der lokale Übertragungskanal ist somit nun der aktive Übertragungskanal.

Das ID-Provider-Modul und der ID-Token authentifizieren sich gegenseitig. Das ID-Provider-Modul authentifiziert sich gegenüber dem ID-Token beispielsweise über das Netzwerk 116 und weist vorzugsweise auch seine Berechtigung für einen Lesezugriff oder Schreibzugriff nach, indem es beispielsweise sein Berechtigungszertifikat über das Netzwerk an den ID-Token überträgt. Auch der ID-Token authentifiziert sich gegenüber dem ID-Provider-Modul, das heißt, es erfolgt sowohl die sogenannte Terminal Authentication (TA) des ID-Provider-Moduls gegenüber dem ID-Token in Schritt (3) und die Chip Authentication (CA) des ID-Tokens, das heißt des in dem ID-Token beinhalteten Chips mit dem Prozessor, gegenüber dem ID-Provider-Modul in Schritt (4). Die TA und die CA können gemäß BSI TR-03110 durchgeführt werden.

Hierbei kann in Schritt (5) ein erster gesicherter Übertragungskanal SM[CA]#1 nach einem Secure-Messaging-Verfahren aufgebaut werden, indem bei der TA und/oder der CA ein Session Key zwischen dem ID-Token und dem ID-Provider-Modul für eine Ende-zu-Ende-Verschlüsselung vereinbart wird, wobei der lokale geschützte Übertragungskanal bestehen bleibt.

Nach erfolgreicher gegenseitiger Authentifizierung kann in einem optionalen Schritt das ID-Provider-Modul einen Lesezugriff auf den ID-Token durchführen um die vom Dienst benötigten Attribute auszulesen. Falls die benötigten Attribute nicht ausgelesen können, oder per Default, schreibt das ID-Provider-Modul in Schritt 6 die erste Attributspezifikation AR 105 in einen geschützten Speicherbereich des ID-Tokens. Dabei kann bei Speicherung der AR im nicht-flüchtigen Speicher des ID-Tokens eine aus vorherigen Protokollsitzungen gespeicherte Attributspezifikation ersetzt werden. Das ID-Provider-Modul erzeugt dann ein erstes Umschaltkommando. Das erste Umschaltkommando wird von dem ID-Provider-Modul an den ID-Token über den ersten geschützten Übertragungskanal gesendet. Das Umschaltkommando bewirkt eine Umschaltung von dem ersten geschützten Übertragungskanal SM[CA]#1 auf den lokalen geschützten Übertragungskanal SM[PACE] in Schritt (7). Nachdem das Dienst-Computersystem über das ID-Provider Modul die erste Attributspezifikation erfolgreich in dem ID-Token gespeichert hat erzeugt es zudem eine "erste Nachricht" welche die Information beinhaltet, dass eine erste Attributspezifikation in dem ID-Token gespeichert ist, deren Attribute nicht aus dem Token gelesen werden konnten und die bearbeitet werden muss. Die erste Nachricht wird vom Dienst-Computersystem an das Nutzer-Computersystem übermittelt.

In Schritt (8) sendet das Nutzer-Computersystem in Antwort auf den Erhalt der ersten Nachricht ein Triggersignal T1 mit der Adresse des Tokens an ein APV-Computersystem 199. Das erste Triggersignal beinhaltet keinerlei Information bezüglich der vom Dienst angeforderten Attribute und beinhaltet somit weder die erste Attributspezifikation noch Teile derselben. Somit ist die Vertraulichkeit der angeforderten Attribute und auch die Art des angeforderten Dienstes gewährleistet falls das Triggersignal von unberechtigten Dritten abgefangen werden sollte. Das Triggersignal T1 beinhaltet jedoch eine Adresse #106 des ID-Tokens 106, zum Beispiel eine URL in Kombination mit einer Portnummer, die es dem ersten Attribut-Provider-Computersystem ermöglicht, mit dem ID-Token in Kontakt zu treten und eine gegenseitige Authentifizierung einzuleiten. Dieses veranlasst das APV-Computersystem, in Schritten (9) und (10) wie bereits beschrieben eine TA und eine CA mit dem ID-Token durchzuführen und nach erfolgreicher gegenseitiger Authentifikation in Schritt (11) einen zweiten geschützten Kommunikationskanal SM[CA]#2 aufzubauen. Hierbei kann ein zweiter gesicherter Übertragungskanal SM[CA]#2 mit Ende-zu-Ende-Verschlüsselung zwischen dem ID-Token und dem APV-Computersystem aufgebaut werden, wobei der erste geschützte Übertragungskanal inaktiviert wird.

In Schritt (12) liest das APV-Computersystem die erste Attributspezifikation AR aus dem ID-Token über den zweiten geschützten Kanal aus, analysiert diese, teilt sie in mehrere Teil-Attributspezifikationen AR1, AR2, AR3 auf und identifiziert mehrere AP-Computersysteme 172, 173, 174, die in der Lage sind, die in der Spezifikation AR spezifizierten Attribute bereitzustellen. Beispielsweise können Adressdaten von AP-Computersystem 172, Kreditwürdigkeitsinformationen von AP-Computersystem 173 bereitgestellt werden.

In mehreren nun folgenden Schritten (13), ..., (14) leitet das APV-Computersystem die Teil-Attributspezifikationen jeweils an eines der ermittelten AP-Computersysteme zusammen mit einer Adresse 106# des ID-Tokens weiter und veranlasst jeweils vorher das ID-Token über ein Umschaltkommando SC[CA]PACE den lokalen Kommunikationskanal zu reaktivieren, sodass über diesen eine gegenseitige Authentifizierung des ID-Tokens und des entsprechenden AP-Computersystems erfolgen kann. Der ID-Token und jedes dieser AP-Computersysteme bauen jeweils einen geschützten Kanal zueinander auf über den die vom AP-Computersystem gemäß der jeweils empfangenen Teil-Attributspezifikation ermittelten Attribute in den geschützten Speicherbereich des ID-Tokens geschrieben werden (in Fig. 4: gestrichelte Box). Beispielweise wird nach einer erfolgreichen gegenseitigen Authentifizierung zwischen dem ersten AP-Computersystem 172 und dem ID-Token 106 ein gesicherter Übertragungskanal SM[CA]#3 zwischen den beiden Kommunikationspartnern mittels Ende-zu-Ende-Verschlüsselung aufgebaut. Vorzugsweise bleibt dabei der erste geschützte Übertragungskanal SM[CA]#1 bestehen und wird inaktiviert. Im Zuge der gegenseitigen Authentifizierung wird vorzugsweise sowohl eine Terminal-Authentifikation (TA) als auch eine Chip Authentifikation (CA) durchgeführt. Das erste AP-Computersystem ermittelt die in der zweiten Attributspezifikation spezifizierten Attribute und schreibt diese in einen geschützten Speicherbereich des IT Tokens 106. Die geschriebenen Attribute werden hierbei über den dritten geschützten Übertragungskanal SM[CA]#3 an den ID-Token übertragen und sind damit vor unberechtigten Zugriff Dritter und auch vor dem Zugriff des Nutzer-Computersystems geschützt.

Wenn das APV-Computersystem von allen AP1-APn-Computersystemen, an die eine Teil-Attributspezifikation versandt wurde, ein Bestätigungssignal S1-Sn erhalten hat, welches das erfolgreiche Schreiben der jeweils ermittelten Attribute im ID-Token bestätigt, sendet das APV-Computersystem ein Terminierungssignal SAPV an das Nutzer-Computersystem, welches wiederum ein Umschaltkommando zur Reaktivierung des ersten Kommunikationskanals an den ID-Token und eine "zweite" Nachricht an das Dienstcomputersystem sendet. Die zweite Nachricht beinhal-tet, dass die Attribute nun vorliegen und aus dem Token gelesen werden können. In Schritt (15) reaktiviert das ID-Token in Antwort auf das Umschaltkommando den ersten geschützten Kommunikationskanal SM[CA]#1 und ermöglicht es dadurch dem ID-Provider-Modul des Dienst-Computersystems, die Attribute in Schritt (16) aus dem Token auszulesen.

Das Umschalten auf den geschützten ersten Übertragungskanal SM[CA]#1 kann z.B. so erfolgen, dass der ID-Token nach dem Schreibzugriff eines AP-Computersystems automatisch auf den lokalen gesicherten Kanal SM[PACE] "zurückfällt", d.h., nach einem erfolgreichen Schreibzugriff den lokalen gesicherten Kanal automatisch reaktiviert. Das Nutzer-Computersystem schaltet nach Erhalt eines Terminierungssignals SAPV von dem Kanal des zuletzt schreibenden AP-Computersystem (oder vom lokalen gesicherten Kommunikationskanal) auf den gesicherten ersten Übertragungskanal SM[CA]#1 um, indem es ein Umschaltkommando UK über den lokalen Übertragungskanal SM[PACE] an den ID-Token sendet, und den ID-Token dadurch veranlasst, auf den ersten gesicherten Übertragungskanal umzuschalten. Der ID-Token ist bei den Umschaltvorgängen also passiv und zur automatischen Umschaltung ("Rückfall") auf den lokalen Kanal wie oben beschrieben konfiguriert.

Optional kann das Dienst-Computersystem in Schritt (17) ein weiteres Umschaltkommando an den ID-Token senden um den lokalen Kanal zu reaktivieren. In Schritt (18) erbringt das Dienst-Computersystem den angeforderten Dienst, sofern die gelesenen Attribute valide sind.

Mögliche vorteilhafte Ausführungsformen umfassen die folgenden Merkmalskombinationen:
1. Verfahren zum Lesen von Attributen aus einem ID-Token, der einem Nutzer zugeordnet ist, wobei der ID-Token einen nichtflüchtigen elektronischen Speicher mit einem geschützten Speicherbereich aufweist, wobei ein Zugriff auf den geschützten Speicherbereich nur über einen Prozessor des ID-Tokens möglich ist, mit folgenden Schritten:
   - Senden einer Dienstanforderung eines Nutzers von einem Nutzer-Computersystem an ein Dienst-Computersystem, welches mit einem ID-Provider-Modul gekoppelt ist;
   - In Antwort auf den Empfang der Dienstanforderung, Senden einer ersten Attributspezifikation von dem Dienst-Computersystem an das ID-Provider-Modul, wobei die erste Attributspezifikation diejenigen Attribute spezifiziert, die das Dienst-Computersystem zur Erbringung des mit der Dienstanforderung angeforderten Dienstes benötigt, und gegenseitige Authentifizierung des ID-Provider-Moduls und des ID-Tokens;
   - Nach erfolgreicher gegenseitiger Authentifizierung von ID-Provider-Modul und des ID-Token, Schreiben der ersten Attributspezifikation in den geschützten Speicherbereich des ID-Tokens durch das ID-Provider-Modul und Senden einer ersten Nachricht, dass die erste Attributspezifikation geschrieben wurde, von dem Dienst-Computersystem an das Nutzer-Computersystem;
   - In Antwort auf den Empfang der ersten Nachricht, Senden eines Triggersignals von dem Nutzer-Computersystem an ein APV-Computersystem, wobei das APV-Computersystem ein Attribut-Provider-Verzeichnis-Computersystem ist, wobei das erste Triggersignal frei ist von der ersten Attributspezifikation und von deren Teilen und eine Adresse des ID-Tokens beinhaltet;
   - In Antwort auf Empfang des Triggersignals, gegenseitige Authentifizierung des APV-Computersystems und des ID-Tokens unter Verwendung der Adresse;
   - Nach erfolgreicher gegenseitiger Authentifizierung von APV-Computersystems und des ID-Token, Lesen der ersten Attributspezifikation aus dem geschützten Speicherbereich des ID-Tokens und Aufteilen der gelesenen ersten Attributspezifikation in zumindest eine zweite und eine dritte Attributspezifikation durch das APV-Computersystem;
   - Senden der zweiten Attributspezifikation und der Adresse von dem APV-Computersystem an ein erstes AP-Computersystem welches dazu ausgebildet ist, die in der zweiten Attributspezifikation spezifizierten Attribute bereitzustellen, wobei das erste AP-Computersystem ein erstes Attribut-Provider-Computersystem ist, und Senden der dritten und jeder weiteren Attributspezifikation und der Adresse des ID-Token von dem APV-Computersystem an je ein weiteres AP-Computersystem welches jeweils dazu ausgebildet ist, die in der dritten oder weiteren Attributspezifikation spezifizierten Attribute bereitzustellen;
   - In Antwort auf Empfang der zweiten Attributspezifikation und der Adresse durch das erste AP-Computersystem, Ermittlung einer ersten Menge von Attributen, die in der zweiten Attributspezifikation spezifiziert sind, und Initialisierung einer gegenseitigen Authentifizierung des ersten AP-Computersystems und des ID-Tokens unter Verwendung der Adresse;
   - Nach der gegenseitigen Authentifizierung des ersten AP-Computersystems und des ID-Tokens, Schreiben der ersten Attributmenge durch das erste AP-Computersystem auf den geschützten Speicherbereich des ID-Tokens und Senden eines Bestätigungssignals von dem ersten Attribut-Provider-Computersystem an das Attribut-Provider-Verzeichnis-Computersystem;
   - Nach Erhalt eines Bestätigungssignals, welches anzeigt, dass das jeweilige AP-Computersystem die von diesem zu ermittelnde Attributmenge vollständig bereitstellen und in den geschützten Speicher des ID-Token schreiben konnte, von dem ersten und jedem der weiteren AP-Computersysteme, Senden eines Terminierungs-Signals von dem APV-Computersystem an das Nutzer-Computersystem;
   - In Antwort auf den Empfang des Terminierungs-Signals, Senden einer zweiten Nachricht von dem Nutzer-Computersystem an das Dienst-Computersystem um das Dienst-Computersystem zu veranlassen, die geschriebenen Attributmengen über das erste ID-Provider-Modul aus dem geschützten Speicherbereich auszulesen.
2. Verfahren nach Punkt 1, wobei der ID-Token frei ist von einer software- oder hardwarebasierten Programmlogik, die dazu ausgebildet ist, in Abhängigkeit vom Inhalt des geschützten Speicherbereiches den Aufbau neuer oder die Aktivierung bestehender Kommunikationskanäle zu dem Nutzer-Computersystem, dem ID-Provider-Modul, dem APV-Computersystem und/oder dem ersten AP-Computersystem zu initiieren.
3. Verfahren nach einem der vorhergehenden Punkte, ferner mit:
   - Nach erfolgreicher gegenseitiger Authentifizierung von ID-Provider-Modul und ID-Token, Initialisierung des Aufbaus eines ersten geschützten Übertragungskanals zwischen dem ID-Provider-Modul und dem ID-Token durch das ID-Provider-Modul, wobei das Schreiben der ersten Attributspezifikation über den ersten geschützten Übertragungskanal erfolgt;
   - Nach erfolgreicher gegenseitiger Authentifizierung von APV-Computersystems und ID-Token, Initialisierung des Aufbaus eines zweiten geschützten Übertragungskanals zwischen dem APV-Computersystem und dem ID-Token durch das APV-Computersystem, wobei das Lesen der ersten Attributspezifikation aus dem geschützten Speicherbereich des ID-Token über den zweiten geschützten Übertragungskanal erfolgt;
   - Nach erfolgreicher gegenseitiger Authentifizierung von erstem AP-Computersystems und ID-Token, Initialisierung des Aufbaus eines dritten geschützten Übertragungskanals zwischen dem ersten AP-Computersystem und dem ID-Token durch das erste AP-Computersystem, wobei das Schreiben der ersten Attributmenge in den geschützten Speicherbereich des ID-Token über den dritten geschützten Übertragungskanal erfolgt;
   - wobei das Schreiben aller weiteren Attributmengen, die jeweils von einem der weiteren AP-Computersysteme ermittelt werden, in den geschützten Bereich des ID-Tokens nur nach erfolgreicher gegenseitiger Authentifikation des jeweiligen weiteren AP-Computersystems und des ID-Tokens und nur über einen nach gegenseitiger Authentifikation jeweils aufgebauten weiteren geschützten Übertragungskanal erfolgt.
4. Verfahren nach Punkt 3, wobei Daten, die über den ersten, zweiten oder dritten geschützten Übertragungskanal übertragen werden, vor dem Zugriff des Nutzer-Computersystems geschützt sind.
5. Verfahren nach Punkt 3 oder 4, wobei der Aufbau des ersten geschützten Übertragungskanals umfasst:
   - Aufbau oder Reaktivierung eines lokalen geschützten Übertragungskanals zwischen dem Nutzer-Computersystem und ID-Token;
   - Durchführung der gegenseitigen Authentifizierung des Nutzer-Computersystems und ID-Token um den ersten geschützten Übertragungskanal aufzubauen, wobei Authentifizierungsdaten über den lokalen geschützten Übertragungskanal übermittelt werden.
6. Verfahren nach einem der vorigen Punkte, ferner mit:
   - In Antwort auf den Empfang des Terminierungs-Signals, Senden eines Umschaltkommandos von dem Nutzer-Computersystem an den ID-Token um den ID-Token zu veranlassen, den ersten geschützten Übertragungskanal zu aktivieren;
   - Auslesen der geschriebenen Attributmengen aus dem geschützten Speicherbereich durch das ID-Provider-Modul über den aktivierten geschützten ersten Übertragungskanal.
7. Verfahren nach einem der vorigen Punkte, ferner mit:
   - Nach erfolgtem Schreiben der ersten Attributspezifikation in dem geschützten Speicherbereich, Senden eines Umschaltkommandos von dem APV-Computersystem an den ID-Token über den ersten geschützten Kommunikationskanal, wobei das Umschaltkommando den ID-Token dazu veranlasst, den lokalen geschützten Übertragungskanal zu aktivieren; und/oder
   - In Antwort auf den Erhalt des Terminierungs-Signals durch das Nutzer-Computersystem, Senden eines weiteren Umschaltkommandos über den aktivierten lokalen Übertragungskanal, wobei das weitere Umschaltkommando den ID-Token dazu veranlasst, den ersten geschützten Übertragungskanal zu aktivieren
   - Auslesen der geschriebenen Attributmengen aus dem geschützten Speicherbereich durch das ID-Provider-Modul über den aktivierten geschützten ersten Übertragungskanal.
8. Verfahren nach einem der Punkte 3-7, ferner mit:
   - Nach erfolgtem Schreiben der ersten Attributmenge in dem geschützten Speicherbereich, Senden eines Umschaltkommandos von dem ersten AP-Computersystem an den ID-Token über den dritten geschützten Kommunikationskanal, wobei das Umschaltkommando den ID-Token dazu veranlasst, den lokalen geschützten Übertragungskanal zu aktivieren;
   - Verwendung des aktivierten lokalen geschützten Übertragungskanals zur Übermittlung von Authentifizierungsdaten über den lokalen geschützten Übertragungskanal im Zuge der gegenseitigen Authentifizierung des nächstverwendeten der weiteren AP-Computersysteme und des ID-Tokens.
9. Verfahren nach einem der Punkte 3-8, ferner mit:
   - Speicherung der kryptographischen Schlüssel, die zum Aufbau eines jeden der geschützten Kanäle verwendet wurden,
   - wobei der ID-Token dazu konfiguriert ist, in Abhängigkeit eines Umschaltkommandos jeden der geschützten Übertragungskanäle zu aktivieren und zu deaktivieren, wobei eine Aktivierung die Wiederverwendung des gespeicherten kryptographischen Schlüssels des zu aktivierenden Übertragungskanals beinhaltet.
10. Verfahren nach einem der vorhergehenden Punkte, ferner mit:
   - Analyse der ersten Attributspezifikation durch das APV-Computersystem zur Ermittlung aller Klassen von Attributen, denen zumindest eines der in der ersten Attributspezifikation spezifizierten Attribute angehört; und
   - Ermitteln des ersten, zweiten und jedes weiteren der AP-Computersysteme als diejenigen AP-Computersysteme, die dazu ausgebildet sind, auf den Nutzer bezogene Attribute einer der ermittelten Attributklassen bereitzustellen.
11. Verfahren nach einem der vorhergehenden Punkte,
   - wobei das APV-Computersystem dazu ausgebildet ist, mehrere erste AP-Computersysteme zu identifizieren, die jeweils zur Bereitstellung von Attributen einer bestimmten Attributklasse ausgebildet sind; und
   - wobei das Senden der zweiten Attributspezifikation und der Adresse selektiv an dasjenige der identifizierten ersten AP-Computersysteme erfolgt, welches hinsichtlich eines der folgenden Kriterien einen höheren Wert als die anderen identifizierten ersten AP-Computersysteme aufweist:
      ∘ Anzahl der in der zweiten Attributspezifikation spezifizierten Attribute, die bereitgestellt werden können;
      ∘ gewährtes Vertrauensniveau der bereitgestellten Attribute,
      ∘ Menge aktuell verfügbarer Datenverarbeitungsressourcen;
      ∘ Grad der bisher beobachteten Zuverlässigkeit und Verfügbarkeit des identifizierten ersten AP-Computersystems.
12. Verfahren nach Punkt 11,
   - wobei jedes der identifizierten ersten Attribut-Provider-Computersysteme lediglich einen Teil der in der zweiten Attributspezifikation spezifizierten Attribute bereitstellen kann;
   - wobei das APV-Computersystem in mehreren Iterationen jeweils eines der identifizierten ersten AP-Computersysteme dazu veranlasst, möglichst viele der in der zweiten Attributspezifikation spezifizierten Attribute bereitzustellen und in dem ID-Token zu speichern und dazu veranlasst, für die nächste Iteration eine neue Version der zweiten Attributspezifikation in dem ID-Token zu speichern, wobei die neue Version selektiv nur noch diejenigen Attribute der ursprünglichen zweiten Attributspezifikation beinhaltet, die in keiner der bisher durchgeführten Iterationen bereitgestellt wurden.
13. Verfahren nach einem der vorhergehenden Punkte, wobei die Adresse des ID-Tokens eine URL beinhaltet, die einen Zugriff auf den ID-Token über das Netzwerk mittels eines an das Nutzer-Computersystem gekoppelten Lesegeräts ermöglicht, wobei die URL die Adresse des ID-Tokens beinhaltet.
14. Verfahren nach einem der vorhergehenden Punkte, ferner umfassend:
   - Übertragung einer ersten Signaturanfrage von dem ersten AP-Computersystem an den ID-Token zur Erzeugung einer digitalen Signatur der zweiten Attributspezifikation;
   - Erzeugung der digitalen Signatur der zweiten Attributspezifikation durch den ID-Token;
   - Übermittlung der erzeugten digitalen Signatur an das erste AP-Computersystem;
   - Prüfung der übermittelten digitalen Signatur durch das erste AP-Computersystem mit einem öffentlichen Signaturprüfschlüssel, wobei die Ermittlung der ersten Menge Attribute gemäß der zweiten Attributspezifikation durch das erste AP-Computersystem und die Speicherung der ersten Menge Attribute in dem ID-Token nur dann erfolgt, wenn die Prüfung ergibt, dass die digitale Signatur valide ist.
15. Verfahren nach Punkt 14, wobei in dem geschützten Speicherbereich des ID-Tokens für jeden der AP-Computersysteme ein eigener privater Signierschlüssel gespeichert ist, der einem der AP-Computersysteme zugeordnet ist, wobei jedes der AP -Computersysteme Zugriff auf einen öffentlichen Signaturprüfschlüssel hat, welcher mit dem privaten Signierschlüssel, der dem AP-Computersystem zugeordnet ist, ein asymmetrisches kryptographisches Schlüsselpaar ausbildet, wobei der öffentliche Signaturprüfschlüssel dazu ausgebildet ist, eine von dem korrespondierenden privaten Signierschlüssels generierte digitale Signatur auf deren Validität hin zu überprüfen.
16. Verfahren nach einem der vorhergehenden Punkte, wobei der ID-Token eine Kommunikationsschnittstelle zur Kommunikation mit einem Lesegerät des Nutzer-Computersystems aufweist,
   - wobei die Kommunikationsschnittstelle des ID-Token zur drahtlosen Kommunikation und zur drahtlosen Einkopplung von Energie in den ID-Token durch das Lesegerät ausgebildet ist, um den ID-Token mit der für seinen Betrieb erforderlichen elektrischen Energie zu versorgen; und/oder
   - wobei der ID-Token einen flüchtigen elektronischen Speicher aufweist, in dem die erste Attributspezifikation gespeichert wird, sodass die erste Attributspezifikation aus dem flüchtigen elektronischen Speicher gelöscht wird, wenn der ID-Token aus der Reichweite des Lesegeräts entfernt wird, und wobei die aufgrund des Schreibzugriffs der ersten und zweiten AP-Computersysteme in dem ID-Token gespeicherten ersten und zweiten Mengen der Attribute in dem nichtflüchtigen elektronischen Speicher gespeichert werden, sodass auf diese durch einen nachfolgenden weiteren Lesezugriff aufgrund einer weiteren Dienstanforderung zugegriffen werden kann; oder
   - wobei alternativ die erste Attributspezifikation und die erste und zweite Menge der Attribute in dem nicht-flüchtigen Speicher gespeichert werden.
17. Verfahren nach einem der vorhergehenden Punkte, mit: Aufforderung des Nutzers zur Eingabe einer Signatur-PIN für die Freischaltung einer Signaturfunktion des ID-Tokens für die Erzeugung einer digitalen Signatur der ersten, zweiten und/oder dritten Attributspezifikation durch das Lesegerät oder das Nutzer-Computersystem.
18. Verfahren nach einem der vorhergehenden Punkte,
   - wobei die Authentifizierung des ID-Provider-Moduls gegenüber dem ID-Token mithilfe eines Berechtigungszertifikats des ID-Provider-Moduls erfolgt, in dem Leserechte des ID-Provider-Moduls zum Lesen von Attributen aus dem ID-Token spezifiziert sind, wobei der ID-Token für die Lesezugriffe des ID-Provider-Moduls eine Prüfung der Leseberechtigung des ID-Provider-Moduls mithilfe des Berechtigungszertifikats durchführt; und
   - wobei in dem Berechtigungszertifikat Schreibrechte des ID-Provider-Moduls zum Schreiben der ersten Attributspezifikation in dem ID-Token spezifiziert sind, wobei der ID-Token für die Schreibzugriffe des ID-Provider-Moduls eine Prüfung der Schreibberechtigung des ID-Provider-Moduls mithilfe des Berechtigungszertifikats durchführt.
19. Verfahren nach einem der vorhergehenden Punkte,
   - wobei die Authentifizierung des ersten AP-Computersystems gegenüber dem ID-Token mithilfe eines Berechtigungszertifikats des ersten AP - Computersystems erfolgt, in dem Schreibrechte des ersten AP Computersystems zum Schreiben der ersten Menge der Attribute in dem ID-Token spezifiziert sind; und
   - wobei der ID-Token eine Prüfung der Schreibberechtigung des ersten AP Computersystems mithilfe des Berechtigungszertifikats durchführt bevor der ID-Token dem ersten AP-Computersystem das Schreiben der ersten Attributmenge genehmigt.
20. Verfahren nach Punkt 19, wobei das Berechtigungszertifikat des ersten AP-Computersystems:
   - dem ersten AP-Computersystem weder eine Berechtigung zum Lesen der ersten Attributspezifikation noch zum Lesen von Attributen, die in dem geschützten Speicherbereich des ID-Tokens gespeichert sind, zuweist; oder
   - dem ersten AP-Computersystem eine Berechtigung zum Lesen von nur einem bestimmten Teil der ersten Attributspezifikation, der selektiv nur Attribute einer bestimmten Attributklasse spezifiziert, zuweist.
21. Verfahren nach einem der vorhergehenden Punkte 19-20,
   - wobei der geschützte Speicherbereich des ID-Token mehrere Unterbereiche enthält, wobei jeder der Unterbereich einer Attributklasse spezifisch zugeordnet ist,
   - wobei der ID-Token einen lesenden und/oder schreibenden Zugriff des ersten AP-Computersystems auf einen der Unterbereiche nur ermöglicht, wenn das Berechtigungszertifikat des ersten AP-Computersystems einen Nachweis einer Lese- und/oder Schreibberechtigung für diesen Unterbereich beinhaltet; und
   - wobei das Berechtigungszertifikat des ersten Attribut-Provider-Computersystems dem ersten AP-Computersystem eine Berechtigung zum Schreiben der zweiten Attributmenge und optional auch zum Lesen von Attributspezifikationen nur auf denjenigen der Unterbereiche einräumt, welchem diejenige Attributklasse zugewiesen ist, zu deren Bereitstellung der erste Attribut-Provider ausgebildet ist.
22. Verfahren nach einem der vorhergehenden Punkte, wobei es sich bei dem ID-Token um ein Wert- oder Sicherheitsdokument handelt, insbesondere ein Ausweisdokument, das heißt ein ID-Dokument, insbesondere einen elektronischen Personalausweis, Reisepass, Führerschein,
   Firmenausweis oder ein Zahlungsmittel, wie zum Beispiel eine Banknote, eine Kreditkarte oder einen sonstigen Berechtigungsnachweis, wie zum Beispiel eine Eintrittskarte, einen Frachtbrief oder ein Visum, insbesondere eine Chipkarte, insbesondere mit RFID- und/oder NFC-Schnittstelle.
23. ID-Token, der einem Nutzer zugeordnet ist, wobei der ID-Token einen elektronischen Speicher mit einem geschützten Speicherbereich aufweist, in dem Attribute gespeichert sind, wobei ein Zugriff auf den geschützten Speicherbereich nur über einen Prozessor des ID-Tokens möglich ist, wobei der ID-Token eine Kommunikationsschnittstelle zur Kommunikation mit einem Lesegerät eines Nutzer-Computersystems aufweist, wobei das Nutzer-Computersystem an ein ID-Provider-Modul über ein Netzwerk gekoppelt ist, und wobei der ID-Token zur Durchführung der folgenden Schritte konfiguriert ist:
   - Gegenseitige Authentifizierung des ID-Provider-Moduls und des ID-Tokens in Interoperation mit dem ID-Provider-Modul;
   - Aufbau eines ersten geschützten Übertragungskanals mit Ende-zu-Ende-Verschlüsselung zwischen dem ID-Token und dem ID-Provider-Modul über das Netzwerk;
   - Empfang einer ersten Attributspezifikation von dem ID-Provider-Modul und Speichern der empfangenen ersten Attributspezifikation in einen geschützten Speicherbereich des ID-Tokens, wobei die erste Attributspezifikation diejenigen Attribute spezifiziert, die das Dienst-Computersystem zur Erbringung des mit der Dienstanforderung angeforderten Dienstes benötigt;
   - Gegenseitige Authentifizierung eines APV-Computersystems und des ID-Tokens;
   - Nach gegenseitiger Authentifizierung des APV-Computersystems und des ID-Tokens, Prüfung eines APV-Computersystem-spezifischen Berechtigungszertifikats um festzustellen, ob das APV-Computersystem zum Lesen der ersten Attributspezifikation von dem geschützten Speicherbereich berechtigt ist; Falls das APV-Computersystem zum Lesen der ersten Attributspezifikation berechtigt ist, Erlaubnis des Lesezugriffs zum Auslesen der ersten Attributspezifikation um dem APV-Computersystem ein Aufteilen der gelesenen ersten Attributspezifikation in zumindest eine zweite und eine dritte Attributspezifikation zu ermöglichen;
   - Gegenseitige Authentifizierung eines ersten AP-Computersystems, das zur Bereitstellung von Attributen, die in der zweiten Attributspezifikation spezifizierten Attribute ausgebildet ist, und des ID-Tokens;
   - Nach gegenseitiger Authentifizierung des ersten AP-Computersystems und des ID-Tokens, Prüfung eines ersten AP-Computersystem-spezifischen Berechtigungszertifikats um festzustellen, ob das erste AP-Computersystem zum Lesen der ersten Attributspezifikation von dem geschützten Speicherbereich berechtigt ist; Falls das erste AP-Computersystem zum Schreiben von Attributen in den geschützten Speicherbereich des ID-Tokens berechtigt ist, Erlaubnis des Schreibzugriffs des ersten AP-Computersystems auf den geschützten Speicherbereich zur Speicherung einer ersten Attributmenge in dem ID-Token, wobei die erste Menge aus Attributen besteht, die in der zweiten Attributspezifikation spezifiziert sind und von dem ersten Attribut-Provider-Computersystem ermittelt wurden.
24. ID-Token nach Punkt 23, wobei der ID-Token dazu ausgebildet ist, sich mit einem zweiten und ein oder mehreren weiteren AP-Computersystemen, die jeweils zur Bereitstellung von Attributen einer bestimmten Attributklasse ausgebildet sind, gegenseitig zu authentifizieren, wobei der ID-Token hierbei von dem sich authentifizierenden Attribut-Provider-Computersystemen ein AP-Computersystemen-spezifisches Berechtigungszertifikat empfängt und dieses zur Berechtigungsprüfung für jeden Schreibzugriff zum Schreiben von Attributmengen verwendet.
25. ID-Token nach Punkt 23 oder 24,
   - wobei die Kommunikationsschnittstelle des ID-Token zur drahtlosen Kommunikation und zur drahtlosen Einkopplung von Energie in den ID-Token durch das Lesegerät ausgebildet ist, um den ID-Token mit der für seinen Betrieb erforderlichen elektrischen Energie zu versorgen; und/oder
   - wobei der ID-Token einen flüchtigen elektronischen Speicher aufweist, in dem die erste Attributspezifikation gespeichert wird, sodass die erste Attributspezifikation aus dem flüchtigen elektronischen Speicher gelöscht wird, wenn der ID-Token aus der Reichweite des Lesegeräts entfernt wird, und wobei die aufgrund des Schreibzugriffs der ersten und zweiten AP-Computersysteme in dem ID-Token gespeicherten ersten und zweiten Mengen der Attribute in dem nichtflüchtigen elektronischen Speicher gespeichert werden, sodass auf diese durch einen nachfolgenden weiteren Lesezugriff aufgrund einer weiteren Dienstanforderung zugegriffen werden kann; oder
   - wobei alternativ die erste Attributspezifikation und die erste und zweite Menge der Attribute in dem nicht-flüchtigen Speicher gespeichert werden.
26. AP-Computersystem mit einer Netzwerk-Schnittstelle zum Zugriff auf einen ID-Token über ein Netzwerk, wobei das AP-Computersystem ein Attribut-Provider-Computersystem ist und zur Durchführung der folgenden Schritte konfiguriert ist:
   - Empfang einer zweiten Attributspezifikation, die eine Teilmenge der in einer ersten, von einem Dienst-Computersystem generierten Attributspezifikation ist, von einem APV-Computersystem, wobei das APV-Computersystem ein Attribut-Provider-Verzeichnis-Computersystem ist, das zur Teilung der ersten Attributspezifikation in die zweite und weitere Attributspezifikationen ausgebildet ist, und Empfang einer Adresse des ID-Tokens von dem APV-Computersystem;
   - In Antwort auf Empfang der zweiten Attributspezifikation und der Adresse, Ermittlung einer ersten Menge von Attributen, die in der zweiten Attributspezifikation spezifiziert sind, und Initialisierung einer gegenseitigen Authentifizierung des AP-Computersystems und des ID-Tokens unter Verwendung der Adresse;
   - Nach der gegenseitigen Authentifizierung des AP-Computersystems und des ID-Tokens, Aufbau eines geschützten Kommunikationskanals, Schreiben der ersten Attributmenge durch das AP-Computersystem über den geschützten Kommunikationskanal auf den geschützten Speicherbereich des ID-Tokens; und
   - Senden eines Bestätigungssignals, welches anzeigt ob das AP-Computersystem die erste Attributmenge vollständig bereitstellen und in den geschützten Speicher des ID-Token schreiben konnte, von dem AP-Computersystem an das APV-Computersystem.
27. AP-Computersystem nach Punkt 26, wobei das AP-Computersystem zur Durchführung der folgenden Schritte konfiguriert ist:
   - Übertragung einer Signaturanfrage an das ID-Token zur Veranlassung des ID-Tokens, die zweite Attributspezifikation digital zu signieren,
   - Empfang der Signatur der zweiten Attributspezifikation durch das AP-Computersystem von dem ID-Token;
   - Durchführung einer Signaturprüfung der signierten zweiten Attributspezifikation;
   - wobei die in der gelesenen zweiten Attributspezifikation spezifizierte erste Attributmenge nur dann von dem AP-Computersystem ermittelt und in dem ID-Token gespeichert wird, wenn die Signaturprüfung ergibt, dass die Signatur der zweiten Attributspezifikation valide ist und wobei vorzugsweise die Signaturanfrage und die Signatur über den geschützten Kommunikationskanal zwischen dem ID-Token und dem AP-Computersystem übertragen werden.
28. AP-Computersystem nach einem der Punkte 26-27, mit einem Berechtigungszertifikat zur Authentifizierung gegenüber dem ID-Token,
   - wobei in dem Berechtigungszertifikat Rechte des AP-Computersystems zum Schreiben der ersten Attributmenge in den ID-Token spezifiziert sind,
   - wobei das Berechtigungszertifikat dem AP-Computersystems vorzugsweise keinen Lesezugriff auf Attribute, die in dem ID-Token gespeichert sind, erlaubt;
   - wobei das Berechtigungszertifikat optional Rechte des AP-Computersystems zum Lesen und Schreiben verschiedener Versionen der zweiten Attributspezifikation beinhaltet; und/oder
   - wobei vorzugsweise die Lese- und/oder Schreibberechtigung sich selektiv nur auf einen Unterbereich des Speicherbereichs des ID-Tokens bezieht, der einer Attributklasse zugewiesen ist, zu deren Bereitstellung das AP-Computersystem ausgebildet ist.
29. APV-Computersystem, das über ein Netzwerk mit einem Nutzer-Computersystem, einem ersten AP-Computersystem und einem zweiten AP-Computersystem verbunden ist, wobei das Nutzer-Computersystem über ein Lesegerät an einen ID-Token gekoppelt ist, der einen nichtflüchtigen elektronischen Speicher mit einem geschützten Speicherbereich aufweist, wobei ein Zugriff auf den geschützten Speicherbereich nur über einen Prozessor des ID-Tokens möglich ist, wobei das APV-Computersystem ein Attribut-Provider-Verzeichnis-Computersystem ist und konfiguriert ist zum:
   - Empfang eines Triggersignals von dem Nutzer-Computersystem, wobei das erste Triggersignal frei ist von einer ersten Attributspezifikation und von deren Teilen und eine Adresse des ID-Tokens beinhaltet, wobei die erste Attributspezifikation nutzerbezogene Attribute spezifiziert, die ein von einem Nutzer des Nutzer-Computersystems angeforderter Dienst zu seiner Erbringung benötigt;
   - In Antwort auf Empfang des Triggersignals, gegenseitige Authentifizierung des APV-Computersystems und des ID-Tokens unter Verwendung der Adresse;
   - Nach erfolgreicher gegenseitiger Authentifizierung von APV-Computersystems und des ID-Token, Lesen der ersten Attributspezifikation aus dem geschützten Speicherbereich des ID-Tokens und Aufteilen der gelesenen ersten Attributspezifikation in zumindest eine zweite und eine dritte Attributspezifikation durch das APV-Computersystem;
   - Senden der zweiten Attributspezifikation und der Adresse von dem APV-Computersystem an ein erstes AP-Computersystem welches dazu ausgebildet ist, die in der zweiten Attributspezifikation spezifizierten Attribute bereitzustellen, wobei das erste AP-Computersystem ein erstes Attribut-Provider-Computersystem ist, und Senden der dritten Attributspezifikation und der Adresse des ID-Token von dem APV-Computersystem an das zweite AP-Computersystem welches dazu ausgebildet ist, die in der dritten Attributspezifikation spezifizierten Attribute bereitzustellen;
   - In Antwort auf einen Erhalt von Bestätigungssignalen, welche anzeigen, dass das erste, zweite und jedes weitere AP-Computersystem, das von dem APV-Computersystem eine Teilmenge der ersten Attributspezifikation erhalten hat, die von diesem AP-Computersystem jeweils zu ermittelnde Attributmenge vollständig bereitgestellt und in den geschützten Speicher des ID-Token geschrieben hat, Senden eines Terminierungs-Signals an das Nutzer-Computersystem.
30. Computersystem mit
   - einem ID-Token nach einem der vorhergehenden Punkte 23-25,
   - mit einem ersten und einem zweiten AP-Computersystem gemäß einem der Punkte 26-28,
   - einem APV-Computersystem nach Punkt 29;
   - einem Nutzer-Computersystem, das über ein Lesegerät an den ID-Token und über ein Netzwerk an ein Dienst-Computersystem und zumindest an das APV-Computersystem gekoppelt ist; und
   - einem ID-Provider-Modul, wobei das ID-Provider-Modul Bestandteil des Dienst-Computersystems ist oder an das Dienst-Computersystem über ein Netzwerk operativ gekoppelt ist.

### Bezugszeichenliste

- 100: Nutzer-Computersystem
- 101: Lesegerät
- 102: Nutzer
- 103: Dienstanforderung
- 104: Lesegerätschnittstelle
- 105, AR: erste Attributspezifikation
- 106: ID-Token
- 108: Schnittstelle
- 110: Prozessor
- 112: Programminstruktionen
- 113: flüchtiger Speicher
- 114: Netzwerk-Schnittstelle
- 116: Netzwerk
- 118: elektronischer Speicher
- 120: geschützter Speicherbereich
- 122: geschützter Speicherbereich
- 124: geschützter Speicherbereich
- 126: Speicherbereich
- 128: Prozessor
- 130: Programminstruktionen
- 131: Programminstruktionen
- 132: Programminstruktionen
- 134: Programminstruktionen
- 136: ID-Provider-Modul
- 138: Netzwerk-Schnittstelle
- 140: Speicher
- 142: privater Schlüssel
- 144: Zertifikat
- 145: Prozessor
- 146: Programminstruktionen
- 150: Dienst-Computersystem
- 152: Netzwerk-Schnittstelle
- 154: Prozessor
- 156: Programminstruktionen
- 172-174: Attribut-Provider-Computersysteme
- 175: Datenbank
- 176, 179: Attribute
- 180: zweite Nachricht
- 181: Display
- 182: Bedienelement
- 183: Speicher
- 199: Attribut-Provider-Verzeichnis-Computersystem
- AR1: zweite Attributspezifikation
- AR2: dritte Attributspezifikation
- AR3: vierte Attributspezifikation
- S1-S3: Bestätigungssignale
- A1: erste Menge Attribute gemäß AR1
- A2: zweite Menge Attribute gemäß AR2
- A3: dritte Menge Attribute gemäß AR3
- T1: Triggersignal
- 202-238: Schritte
- SM[PACE]PACE: lokaler Übertragungskanal
- SM[CA]#1: erster geschützter Übertragungskanal
- SM[CA]#2: zweiter geschützter Übertragungskanal
- SM[CA]#3: dritter geschützter Übertragungskanal
- #106: Adresse ID-Token 106
- SC[CA]#PACE: Umschaltkommando auf SM[PACE]
- SC[CA]#1: Umschaltkommando auf SM[CA]#1
- SC[CA]#2: Umschaltkommando auf SM[CA]#2
- SC[CA]#3: Umschaltkommando auf SM[CA]#3

## Patentansprüche

1. Verfahren zum Lesen von Attributen aus einem ID-Token (106), der einem Nutzer (102) zugeordnet ist, wobei der ID-Token einen nichtflüchtigen elektronischen Speicher (118) mit einem geschützten Speicherbereich (124) aufweist, wobei ein Zugriff auf den geschützten Speicherbereich nur über einen Prozessor (128) des ID-Tokens möglich ist, mit folgenden Schritten:
- Senden (302) einer Dienstanforderung (103) eines Nutzers von einem Nutzer-Computersystem (100) an ein Dienst-Computersystem (150), welches mit einem ID-Provider-Modul (136) gekoppelt ist;
- In Antwort auf den Empfang der Dienstanforderung, Senden einer ersten Attributspezifikation (105) von dem Dienst-Computersystem an das ID-Provider-Modul, wobei die erste Attributspezifikation diejenigen Attribute spezifiziert, die das Dienst-Computersystem zur Erbringung des mit der Dienstanforderung angeforderten Dienstes benötigt, und gegenseitige Authentifizierung des ID-Provider-Moduls und des ID-Tokens;
- Nach erfolgreicher gegenseitiger Authentifizierung von ID-Provider-Modul und des ID-Token, Schreiben der ersten Attributspezifikation (105) in den geschützten Speicherbereich des ID-Tokens durch das ID-Provider-Modul und Senden einer ersten Nachricht, dass die erste Attributspezifikation geschrieben wurde, von dem Dienst-Computersystem an das Nutzer-Computersystem;
- In Antwort auf den Empfang der ersten Nachricht, Senden eines Triggersignals (T1) von dem Nutzer-Computersystem an ein APV-Computersystem (199), wobei das APV-Computersystem ein Attribut-Provider-Verzeichnis-Computersystem ist, wobei das erste Triggersignal frei ist von der ersten Attributspezifikation (105) und von deren Teilen und eine Adresse (#106) des ID-Tokens (106) beinhaltet;
- In Antwort auf Empfang des Triggersignals, gegenseitige Authentifizierung des APV-Computersystems (199) und des ID-Tokens unter Verwendung der Adresse;
- Nach erfolgreicher gegenseitiger Authentifizierung von APV-Computersystems und des ID-Token, Lesen der ersten Attributspezifikation (AR) aus dem geschützten Speicherbereich des ID-Tokens und Aufteilen der gelesenen ersten Attributspezifikation in zumindest eine zweite (AR1) und eine dritte (AR2) Attributspezifikation durch das APV-Computersystem;
- Senden der zweiten Attributspezifikation (AR1) und der Adresse (#106) von dem APV-Computersystem an ein erstes AP-Computersystem (172) welches dazu ausgebildet ist, die in der zweiten Attributspezifikation spezifizierten Attribute bereitzustellen, wobei das erste AP-Computersystem ein erstes Attribut-Provider-Computersystem ist, und Senden der dritten und jeder weiteren Attributspezifikation (AR2, ..., ARn) und der Adresse (#106) des ID-Token von dem APV-Computersystem an je ein weiteres AP-Computersystem (173, 174) welches jeweils dazu ausgebildet ist, die in der dritten oder weiteren Attributspezifikation spezifizierten Attribute bereitzustellen;
- In Antwort auf Empfang der zweiten Attributspezifikation (AR1) und der Adresse durch das erste AP-Computersystem, Ermittlung einer ersten Menge (A1) von Attributen, die in der zweiten Attributspezifikation spezifiziert sind, und Initialisierung einer gegenseitigen Authentifizierung des ersten AP-Computersystems und des ID-Tokens unter Verwendung der Adresse;
- Nach der gegenseitigen Authentifizierung des ersten AP-Computersystems und des ID-Tokens, Schreiben der ersten Attributmenge (A1) durch das erste AP-Computersystem auf den geschützten Speicherbereich des ID-Tokens und Senden eines Bestätigungssignals (S1) von dem ersten Attribut-Provider-Computersystem an das Attribut-Provider-Verzeichnis-Computersystem (199);
- Nach Erhalt eines Bestätigungssignals (S2, S3, ..., Sn), welches anzeigt, dass das jeweilige AP-Computersystem die von diesem zu ermittelnde Attributmenge vollständig bereitstellen und in den geschützten Speicher des ID-Token schreiben konnte, von dem ersten und jedem der weiteren AP-Computersysteme, Senden eines Terminierungs-Signals (SAPV) von dem APV-Computersystem an das Nutzer-Computersystem;
- In Antwort auf den Empfang des Terminierungs-Signals, Senden einer zweiten (180) Nachricht von dem Nutzer-Computersystem an das Dienst-Computersystem um das Dienst-Computersystem zu veranlassen, die geschriebenen Attributmengen (A1, A2, ..., An) über das erste ID-Provider-Modul aus dem geschützten Speicherbereich auszulesen.

2. Verfahren nach Anspruch 1, wobei der ID-Token frei ist von einer software- oder hardwarebasierten Programmlogik, die dazu ausgebildet ist, in Abhängigkeit vom Inhalt des geschützten Speicherbereiches den Aufbau neuer oder die Aktivierung bestehender Kommunikationskanäle zu dem Nutzer-Computersystem, dem ID-Provider-Modul, dem APV-Computersystem und/oder dem ersten AP-Computersystem zu initiieren.

3. Verfahren nach einem der vorhergehenden Ansprüche, ferner mit:
- Nach erfolgreicher gegenseitiger Authentifizierung von ID-Provider-Modul und ID-Token, Initialisierung des Aufbaus eines ersten geschützten Übertragungskanals (SM[CA]#1) zwischen dem ID-Provider-Modul und dem ID-Token durch das ID-Provider-Modul, wobei das Schreiben der ersten Attributspezifikation (105) über den ersten geschützten Übertragungskanal erfolgt;
- Nach erfolgreicher gegenseitiger Authentifizierung von APV-Computersystems und ID-Token, Initialisierung des Aufbaus eines zweiten geschützten Übertragungskanals (SM[CA]#2) zwischen dem APV-Computersystem und dem ID-Token durch das APV-Computersystem, wobei das Lesen der ersten Attributspezifikation (AR) aus dem geschützten Speicherbereich des ID-Token über den zweiten geschützten Übertragungskanal erfolgt;
- Nach erfolgreicher gegenseitiger Authentifizierung von erstem AP-Computersystems und ID-Token, Initialisierung des Aufbaus eines dritten geschützten Übertragungskanals (SM[CA]#3) zwischen dem ersten AP-Computersystem und dem ID-Token durch das erste AP-Computersystem, wobei das Schreiben der ersten Attributmenge (A1) in den geschützten Speicherbereich des ID-Token über den dritten geschützten Übertragungskanal erfolgt;
- wobei das Schreiben aller weiteren Attributmengen (A2, ..., An), die jeweils von einem der weiteren AP-Computersysteme ermittelt werden, in den geschützten Bereich des ID-Tokens nur nach erfolgreicher gegenseitiger Authentifikation des jeweiligen weiteren AP-Computersystems und des ID-Tokens und nur über einen nach gegenseitiger Authentifikation jeweils aufgebauten weiteren geschützten Übertragungskanal (SM[CA]#4, SM[CA]#5) erfolgt,
wobei insbesondere Daten, die über den ersten, zweiten oder dritten geschützten Übertragungskanal übertragen werden, vor dem Zugriff des Nutzer-Computersystems geschützt sind.

4. Verfahren nach Anspruch 3, ferner mit:
- In Antwort auf den Empfang des Terminierungs-Signals, Senden eines Umschaltkommandos (SC[CA]#1) von dem Nutzer-Computersystem an den ID-Token um den ID-Token zu veranlassen, den ersten geschützten Übertragungskanal (SM[CA]#1) zu aktivieren;
- Auslesen der geschriebenen Attributmengen (A1, A2, ..., An) aus dem geschützten Speicherbereich durch das ID-Provider-Modul über den aktivierten geschützten ersten Übertragungskanal; und/oder
ferner mit:
- Nach erfolgtem Schreiben der ersten Attributspezifikation (AR) in dem geschützten Speicherbereich, Senden eines Umschaltkommandos (SC[PACE]) von dem APV-Computersystem an den ID-Token über den ersten geschützten Kommunikationskanal, wobei das Umschaltkommando (SC[PACE]) den ID-Token dazu veranlasst, den lokalen geschützten Übertragungskanal (SM[PACE]) zu aktivieren; und/oder
- In Antwort auf den Erhalt des Terminierungs-Signals (SAPV) durch das Nutzer-Computersystem, Senden eines weiteren Umschaltkommandos (SC[CA]#1) über den aktivierten lokalen Übertragungskanal, wobei das weitere Umschaltkommando (SC[CA]#1) den ID-Token dazu veranlasst, den ersten geschützten Übertragungskanal (SM[CA]#1) zu aktivieren
- Auslesen der geschriebenen Attributmengen (A1, A2, ..., An) aus dem geschützten Speicherbereich durch das ID-Provider-Modul über den aktivierten geschützten ersten Übertragungskanal (SM[CA]#1); und/oder
ferner mit:
- Nach erfolgtem Schreiben der ersten Attributmenge (A1) in dem geschützten Speicherbereich, Senden eines Umschaltkommandos (SC[PACE]) von dem ersten AP-Computersystem an den ID-Token über den dritten geschützten Kommunikationskanal (SM[CA]#3), wobei das Umschaltkommando (SC[PACE]) den ID-Token dazu veranlasst, den lokalen geschützten Übertragungskanal (SM[PACE]) zu aktivieren;
- Verwendung des aktivierten lokalen geschützten Übertragungskanals zur Übermittlung von Authentifizierungsdaten über den lokalen geschützten Übertragungskanal im Zuge der gegenseitigen Authentifizierung des nächstverwendeten der weiteren AP-Computersysteme und des ID-Tokens.

5. Verfahren nach Anspruch 4, ferner mit:
- Speicherung der kryptographischen Schlüssel, die zum Aufbau eines jeden der geschützten Kanäle verwendet wurden,
- wobei der ID-Token dazu konfiguriert ist, in Abhängigkeit eines Umschaltkommandos (SC[PACE], SC[CA]#1, SC[CA]#2) jeden der geschützten Übertragungskanäle zu aktivieren und zu deaktivieren, wobei eine Aktivierung die Wiederverwendung des gespeicherten kryptographischen Schlüssels des zu aktivierenden Übertragungskanals beinhaltet.

6. Verfahren nach einem der vorhergehenden Ansprüche, ferner mit:
- Analyse der ersten Attributspezifikation durch das APV-Computersystem zur Ermittlung aller Klassen von Attributen, denen zumindest eines der in der ersten Attributspezifikation spezifizierten Attribute angehört; und
- Ermitteln des ersten, zweiten und jedes weiteren der AP-Computersysteme als diejenigen AP-Computersysteme, die dazu ausgebildet sind, auf den Nutzer bezogene Attribute einer der ermittelten Attributklassen bereitzustellen; und/oder
- wobei das APV-Computersystem dazu ausgebildet ist, mehrere erste AP-Computersysteme (172; 1722) zu identifizieren, die jeweils zur Bereitstellung von Attributen einer bestimmten Attributklasse ausgebildet sind; und
- wobei das Senden der zweiten Attributspezifikation (AR1) und der Adresse (#106) selektiv an dasjenige der identifizierten ersten AP-Computersysteme erfolgt, welches hinsichtlich eines der folgenden Kriterien einen höheren Wert als die anderen identifizierten ersten AP-Computersysteme aufweist:
∘ Anzahl der in der zweiten Attributspezifikation spezifizierten Attribute, die bereitgestellt werden können;
∘ gewährtes Vertrauensniveau der bereitgestellten Attribute,
∘ Menge aktuell verfügbarer Datenverarbeitungsressourcen;
∘ Grad der bisher beobachteten Zuverlässigkeit und Verfügbarkeit des identifizierten ersten AP-Computersystems;
- wobei insbesondere jedes der identifizierten ersten Attribut-Provider-Computersysteme (172, 1722) lediglich einen Teil der in der zweiten Attributspezifikation (AR1) spezifizierten Attribute bereitstellen kann;
- wobei insbesondere das APV-Computersystem in mehreren Iterationen jeweils eines der identifizierten ersten AP-Computersysteme dazu veranlasst, möglichst viele der in der zweiten Attributspezifikation spezifizierten Attribute bereitzustellen und in dem ID-Token zu speichern und dazu veranlasst, für die nächste Iteration eine neue Version der zweiten Attributspezifikation in dem ID-Token zu speichern, wobei die neue Version selektiv nur noch diejenigen Attribute der ursprünglichen zweiten Attributspezifikation beinhaltet, die in keiner der bisher durchgeführten Iterationen bereitgestellt wurden.

7. Verfahren nach einem der vorhergehenden Ansprüche, ferner umfassend:
- Übertragung einer ersten Signaturanfrage von dem ersten AP-Computersystem (172) an den ID-Token zur Erzeugung einer digitalen Signatur der zweiten Attributspezifikation (AR1);
- Erzeugung der digitalen Signatur der zweiten Attributspezifikation durch den ID-Token;
- Übermittlung der erzeugten digitalen Signatur an das erste AP-Computersystem (172);
- Prüfung der übermittelten digitalen Signatur durch das erste AP-Computersystem mit einem öffentlichen Signaturprüfschlüssel, wobei die Ermittlung der ersten Menge Attribute gemäß der zweiten Attributspezifikation durch das erste AP-Computersystem und die Speicherung der ersten Menge Attribute in dem ID-Token nur dann erfolgt, wenn die Prüfung ergibt, dass die digitale Signatur valide ist,
wobei insbesondere in dem geschützten Speicherbereich des ID-Tokens für jeden der AP-Computersysteme (172, 1722, 1723, 173, 174) ein eigener privater Signierschlüssel gespeichert ist, der einem der AP-Computersysteme zugeordnet ist, wobei jedes der AP -Computersysteme Zugriff auf einen öffentlichen Signaturprüfschlüssel hat, welcher mit dem privaten Signierschlüssel, der dem AP-Computersystem zugeordnet ist, ein asymmetrisches kryptographisches Schlüsselpaar ausbildet, wobei der öffentliche Signaturprüfschlüssel dazu ausgebildet ist, eine von dem korrespondierenden privaten Signierschlüssels generierte digitale Signatur auf deren Validität hin zu überprüfen.

8. Verfahren nach einem der vorhergehenden Ansprüche, wobei der ID-Token eine Kommunikationsschnittstelle (108) zur Kommunikation mit einem Lesegerät (101) des Nutzer-Computersystems (100) aufweist,
- wobei die Kommunikationsschnittstelle des ID-Token zur drahtlosen Kommunikation und zur drahtlosen Einkopplung von Energie in den ID-Token durch das Lesegerät ausgebildet ist, um den ID-Token mit der für seinen Betrieb erforderlichen elektrischen Energie zu versorgen; und/oder
- wobei der ID-Token einen flüchtigen elektronischen Speicher (113) aufweist, in dem die erste Attributspezifikation gespeichert wird, sodass die erste Attributspezifikation aus dem flüchtigen elektronischen Speicher gelöscht wird, wenn der ID-Token aus der Reichweite des Lesegeräts entfernt wird, und wobei die aufgrund des Schreibzugriffs der ersten und zweiten AP-Computersysteme (172, 173) in dem ID-Token gespeicherten ersten und zweiten Mengen der Attribute in dem nichtflüchtigen elektronischen Speicher (118) gespeichert werden, sodass auf diese durch einen nachfolgenden weiteren Lesezugriff aufgrund einer weiteren Dienstanforderung zugegriffen werden kann; oder
- wobei alternativ die erste Attributspezifikation und die erste und zweite Menge der Attribute in dem nicht-flüchtigen Speicher gespeichert werden.

9. Verfahren nach einem der vorhergehenden Ansprüche,
- wobei die Authentifizierung des ID-Provider-Moduls gegenüber dem ID-Token mithilfe eines Berechtigungszertifikats (144) des ID-Provider-Moduls erfolgt, in dem Leserechte des ID-Provider-Moduls zum Lesen von Attributen aus dem ID-Token spezifiziert sind, wobei der ID-Token für die Lesezugriffe des ID-Provider-Moduls eine Prüfung der Leseberechtigung des ID-Provider-Moduls mithilfe des Berechtigungszertifikats durchführt; und
- wobei in dem Berechtigungszertifikat Schreibrechte des ID-Provider-Moduls zum Schreiben der ersten Attributspezifikation in dem ID-Token spezifiziert sind, wobei der ID-Token für die Schreibzugriffe des ID-Provider-Moduls eine Prüfung der Schreibberechtigung des ID-Provider-Moduls mithilfe des Berechtigungszertifikats durchführt.

10. Verfahren nach einem der vorhergehenden Ansprüche,
- wobei die Authentifizierung des ersten AP-Computersystems (172) gegenüber dem ID-Token mithilfe eines Berechtigungszertifikats des ersten AP -Computersystems erfolgt, in dem Schreibrechte des ersten AP Computersystems zum Schreiben der ersten Menge der Attribute (A1) in dem ID-Token spezifiziert sind; und
- wobei der ID-Token eine Prüfung der Schreibberechtigung des ersten AP Computersystems mithilfe des Berechtigungszertifikats durchführt bevor der ID-Token dem ersten AP-Computersystem das Schreiben der ersten Attributmenge genehmigt.

11. Verfahren nach Anspruch 10, wobei das Berechtigungszertifikat des ersten AP-Computersystems:
- dem ersten AP-Computersystem weder eine Berechtigung zum Lesen der ersten Attributspezifikation noch zum Lesen von Attributen, die in dem geschützten Speicherbereich des ID-Tokens gespeichert sind, zuweist; oder
- dem ersten AP-Computersystem eine Berechtigung zum Lesen von nur einem bestimmten Teil der ersten Attributspezifikation, der selektiv nur Attribute einer bestimmten Attributklasse spezifiziert, zuweist; und/oder
- wobei der geschützte Speicherbereich des ID-Token mehrere Unterbereiche enthält, wobei jeder der Unterbereich einer Attributklasse spezifisch zugeordnet ist,
- wobei der ID-Token einen lesenden und/oder schreibenden Zugriff des ersten AP-Computersystems auf einen der Unterbereiche nur ermöglicht, wenn das Berechtigungszertifikat des ersten AP-Computersystems einen Nachweis einer Lese- und/oder Schreibberechtigung für diesen Unterbereich beinhaltet; und
- wobei das Berechtigungszertifikat des ersten Attribut-Provider-Computersystems dem ersten AP-Computersystem eine Berechtigung zum Schreiben der zweiten Attributmenge und optional auch zum Lesen von Attributspezifikationen nur auf denjenigen der Unterbereiche einräumt, welchem diejenige Attributklasse zugewiesen ist, zu deren Bereitstellung der erste Attribut-Provider ausgebildet ist.

12. ID-Token, der einem Nutzer (102) zugeordnet ist, wobei der ID-Token einen elektronischen Speicher (118) mit einem geschützten Speicherbereich (124) aufweist, in dem Attribute gespeichert sind, wobei ein Zugriff auf den geschützten Speicherbereich nur über einen Prozessor (128) des ID-Tokens möglich ist, wobei der ID-Token eine Kommunikationsschnittstelle (108) zur Kommunikation mit einem Lesegerät eines Nutzer-Computersystems (100) aufweist, wobei das Nutzer-Computersystem an ein ID-Provider-Modul über ein Netzwerk gekoppelt ist, und wobei der ID-Token zur Durchführung der folgenden Schritte konfiguriert ist:
- Gegenseitige Authentifizierung des ID-Provider-Moduls und des ID-Tokens in Interoperation mit dem ID-Provider-Modul;
- Aufbau eines ersten geschützten Übertragungskanals (SM[CA]#1) mit Ende-zu-Ende-Verschlüsselung zwischen dem ID-Token und dem ID-Provider-Modul über das Netzwerk;
- Empfang einer ersten Attributspezifikation (105) von dem ID-Provider-Modul und Speichern der empfangenen ersten Attributspezifikation in einen geschützten Speicherbereich des ID-Tokens, wobei die erste Attributspezifikation diejenigen Attribute spezifiziert, die das Dienst-Computersystem zur Erbringung des mit der Dienstanforderung angeforderten Dienstes benötigt;
- Gegenseitige Authentifizierung eines APV-Computersystems und des ID-Tokens;
- Nach gegenseitiger Authentifizierung des APV-Computersystems und des ID-Tokens, Prüfung eines APV-Computersystem-spezifischen Berechtigungszertifikats um festzustellen, ob das APV-Computersystem zum Lesen der ersten Attributspezifikation von dem geschützten Speicherbereich berechtigt ist; Falls das APV-Computersystem zum Lesen der ersten Attributspezifikation berechtigt ist, Erlaubnis des Lesezugriffs zum Auslesen der ersten Attributspezifikation um dem APV-Computersystem ein Aufteilen der gelesenen ersten Attributspezifikation in zumindest eine zweite (AR1) und eine dritte (AR2) Attributspezifikation zu ermöglichen;
- Gegenseitige Authentifizierung eines ersten AP-Computersystems, das zur Bereitstellung von Attributen, die in der zweiten Attributspezifikation spezifizierten Attribute ausgebildet ist, und des ID-Tokens;
- Nach gegenseitiger Authentifizierung des ersten AP-Computersystems und des ID-Tokens, Prüfung eines ersten AP-Computersystem-spezifischen Berechtigungszertifikats um festzustellen, ob das erste AP-Computersystem zum Lesen der ersten Attributspezifikation von dem geschützten Speicherbereich berechtigt ist; Falls das erste AP-Computersystem zum Schreiben von Attributen in den geschützten Speicherbereich des ID-Tokens berechtigt ist, Erlaubnis des Schreibzugriffs des ersten AP-Computersystems auf den geschützten Speicherbereich zur Speicherung einer ersten Attributmenge (A1) in dem ID-Token, wobei die erste Menge aus Attributen besteht, die in der zweiten Attributspezifikation spezifiziert sind und von dem ersten Attribut-Provider-Computersystem ermittelt wurden.

13. ID-Token nach Anspruch 12, wobei der ID-Token dazu ausgebildet ist, sich mit einem zweiten und ein oder mehreren weiteren AP-Computersystemen (172, 1722, 1723, 173, 174), die jeweils zur Bereitstellung von Attributen einer bestimmten Attributklasse ausgebildet sind, gegenseitig zu authentifizieren, wobei der ID-Token hierbei von dem sich authentifizierenden Attribut-Provider-Computersystemen ein AP-Computersystemen-spezifisches Berechtigungszertifikat empfängt und dieses zur Berechtigungsprüfung für jeden Schreibzugriff zum Schreiben von Attributmengen verwendet, und/oder
- wobei die Kommunikationsschnittstelle des ID-Token zur drahtlosen Kommunikation und zur drahtlosen Einkopplung von Energie in den ID-Token durch das Lesegerät ausgebildet ist, um den ID-Token mit der für seinen Betrieb erforderlichen elektrischen Energie zu versorgen; und/oder
- wobei der ID-Token einen flüchtigen elektronischen Speicher (113) aufweist, in dem die erste Attributspezifikation gespeichert wird, sodass die erste Attributspezifikation aus dem flüchtigen elektronischen Speicher gelöscht wird, wenn der ID-Token aus der Reichweite des Lesegeräts entfernt wird, und wobei die aufgrund des Schreibzugriffs der ersten und zweiten AP-Computersysteme (172, 173) in dem ID-Token gespeicherten ersten und zweiten Mengen der Attribute in dem nichtflüchtigen elektronischen Speicher (118) gespeichert werden, sodass auf diese durch einen nachfolgenden weiteren Lesezugriff aufgrund einer weiteren Dienstanforderung zugegriffen werden kann; oder
- wobei alternativ die erste Attributspezifikation und die erste und zweite Menge der Attribute in dem nicht-flüchtigen Speicher gespeichert werden.

14. AP-Computersystem (172, 1722, 173, 174) mit einer Netzwerk-Schnittstelle (138) zum Zugriff auf einen ID-Token (106) über ein Netzwerk (116), wobei das AP-Computersystem ein Attribut-Provider-Computersystem ist und zur Durchführung der folgenden Schritte konfiguriert ist:
- Empfang einer zweiten Attributspezifikation (AR1), die eine Teilmenge der in einer ersten, von einem Dienst-Computersystem generierten Attributspezifikation ist, von einem APV-Computersystem, wobei das APV-Computersystem ein Attribut-Provider-Verzeichnis-Computersystem ist, das zur Teilung der ersten Attributspezifikation in die zweite und weitere Attributspezifikationen ausgebildet ist, und Empfang einer Adresse (#106) des ID-Tokens von dem APV-Computersystem;
- In Antwort auf Empfang der zweiten Attributspezifikation und der Adresse, Ermittlung einer ersten Menge (A1) von Attributen, die in der zweiten Attributspezifikation spezifiziert sind, und Initialisierung einer gegenseitigen Authentifizierung des AP-Computersystems und des ID-Tokens unter Verwendung der Adresse;
- Nach der gegenseitigen Authentifizierung des AP-Computersystems und des ID-Tokens, Aufbau eines geschützten Kommunikationskanals (SM[CA]#3), Schreiben der ersten Attributmenge (A1) durch das AP-Computersystem über den geschützten Kommunikationskanal auf den geschützten Speicherbereich des ID-Tokens; und
- Senden eines Bestätigungssignals (S2, S3, ..., Sn), welches anzeigt ob das AP-Computersystem die erste Attributmenge vollständig bereitstellen und in den geschützten Speicher des ID-Token schreiben konnte, von dem AP-Computersystem an das APV-Computersystem.

15. AP-Computersystem (172, 1722, 173, 174) nach Anspruch 14, wobei das AP-Computersystem zur Durchführung der folgenden Schritte konfiguriert ist:
- Übertragung einer Signaturanfrage an das ID-Token zur Veranlassung des ID-Tokens, die zweite Attributspezifikation digital zu signieren,
- Empfang der Signatur der zweiten Attributspezifikation (AR1) durch das AP-Computersystem von dem ID-Token;
- Durchführung einer Signaturprüfung der signierten zweiten Attributspezifikation;
- wobei die in der gelesenen zweiten Attributspezifikation spezifizierte erste Attributmenge (A1) nur dann von dem AP-Computersystem ermittelt und in dem ID-Token gespeichert wird, wenn die Signaturprüfung ergibt, dass die Signatur der zweiten Attributspezifikation valide ist und wobei vorzugsweise die Signaturanfrage und die Signatur über den geschützten Kommunikationskanal (SM[CA]#3) zwischen dem ID-Token und dem AP-Computersystem übertragen werden; und/oder
mit einem Berechtigungszertifikat zur Authentifizierung gegenüber dem ID-Token,
- wobei in dem Berechtigungszertifikat Rechte des AP-Computersystems zum Schreiben der ersten Attributmenge in den ID-Token spezifiziert sind,
- wobei das Berechtigungszertifikat dem AP-Computersystems vorzugsweise keinen Lesezugriff auf Attribute, die in dem ID-Token gespeichert sind, erlaubt;
- wobei das Berechtigungszertifikat optional Rechte des AP-Computersystems zum Lesen und Schreiben verschiedener Versionen der zweiten Attributspezifikation beinhaltet; und/oder
- wobei vorzugsweise die Lese- und/oder Schreibberechtigung sich selektiv nur auf einen Unterbereich des Speicherbereichs des ID-Tokens bezieht, der einer Attributklasse zugewiesen ist, zu deren Bereitstellung das AP-Computersystem ausgebildet ist.

16. APV-Computersystem, das über ein Netzwerk mit einem Nutzer-Computersystem, einem ersten AP-Computersystem und einem zweiten AP-Computersystem verbunden ist, wobei das Nutzer-Computersystem über ein Lesegerät an einen ID-Token gekoppelt ist, der einen nichtflüchtigen elektronischen Speicher (118) mit einem geschützten Speicherbereich (124) aufweist, wobei ein Zugriff auf den geschützten Speicherbereich nur über einen Prozessor (128) des ID-Tokens möglich ist, wobei das APV-Computersystem ein Attribut-Provider-Verzeichnis-Computersystem ist und konfiguriert ist zum:
- Empfang eines Triggersignals (T1) von dem Nutzer-Computersystem, wobei das erste Triggersignal frei ist von einer ersten Attributspezifikation (105) und von deren Teilen und eine Adresse (#106) des ID-Tokens (106) beinhaltet, wobei die erste Attributspezifikation nutzerbezogene Attribute spezifiziert, die ein von einem Nutzer des Nutzer-Computersystems angeforderter Dienst zu seiner Erbringung benötigt;
- In Antwort auf Empfang des Triggersignals, gegenseitige Authentifizierung des APV-Computersystems (199) und des ID-Tokens unter Verwendung der Adresse;
- Nach erfolgreicher gegenseitiger Authentifizierung von APV-Computersystems und des ID-Token, Lesen der ersten Attributspezifikation (AR) aus dem geschützten Speicherbereich des ID-Tokens und Aufteilen der gelesenen ersten Attributspezifikation in zumindest eine zweite (AR1) und eine dritte (AR2) Attributspezifikation durch das APV-Computersystem;
- Senden der zweiten Attributspezifikation (AR1) und der Adresse (#106) von dem APV-Computersystem an ein erstes AP-Computersystem (172) welches dazu ausgebildet ist, die in der zweiten Attributspezifikation spezifizierten Attribute bereitzustellen, wobei das erste AP-Computersystem ein erstes Attribut-Provider-Computersystem ist, und Senden der dritten Attributspezifikation (AR2) und der Adresse (#106) des ID-Token von dem APV-Computersystem an das zweite AP-Computersystem (173) welches dazu ausgebildet ist, die in der dritten Attributspezifikation spezifizierten Attribute bereitzustellen;
- In Antwort auf einen Erhalt von Bestätigungssignalen (S2, S3, ..., Sn), welche anzeigen, dass das erste, zweite und jedes weitere AP-Computersystem, das von dem APV-Computersystem eine Teilmenge der ersten Attributspezifikation erhalten hat, die von diesem AP-Computersystem jeweils zu ermittelnde Attributmenge vollständig bereitgestellt und in den geschützten Speicher des ID-Token geschrieben hat, Senden eines Terminierungs-Signals (SAPV) an das Nutzer-Computersystem.

17. Computersystem mit
- einem ID-Token nach einem der vorhergehenden Ansprüche 12-13,
- mit einem ersten und einem zweiten AP-Computersystem gemäß einem der Ansprüche 14-15,
- einem APV-Computersystem nach Anspruch 16;
- einem Nutzer-Computersystem, das über ein Lesegerät an den ID-Token und über ein Netzwerk an ein Dienst-Computersystem und zumindest an das APV-Computersystem gekoppelt ist; und
- einem ID-Provider-Modul (136), wobei das ID-Provider-Modul Bestandteil des Dienst-Computersystems (150) ist oder an das Dienst-Computersystem über ein Netzwerk (116) operativ gekoppelt ist.

## Claims

1. A method for reading attributes from an ID token (106) which is assigned to a user (102), wherein the ID token is a non-volatile electronic memory (118) with a protected memory area (124), wherein access to the protected memory area is possible only via a processor (128) of the ID token, said method comprising the following steps:
- sending (302) a service request (103) on the part of a user from a user computer system (100) to a service computer system (150) which is coupled to an ID provider module (136) ;
- in response to the receipt of the service request, sending a first attribute specification (105) from the service computer system to the ID provider module, wherein the first attribute specification specifies those attributes which the service computer system requires in order to provide the service requested by means of the service request, and mutually authenticating the ID provider module and the ID token;
- following successful mutual authentication of the ID provider module and ID token, writing the first attribute specification (105) into the protected memory area of the ID token by the ID provider module and sending a first message, confirming that the first attribute specification has been written, from the service computer system to the user computer system;
- in response to the receipt of the first message, sending a trigger signal (T1) from the user computer system to an APV computer system (199), wherein the APV computer system is an attribute provider directory computer system, wherein the first trigger signal is free from the first attribute specification (105) and from parts thereof and contains an address (#□106) of the ID token (106);
- in response to receipt of the trigger signal, mutually authenticating the APV computer system (199) and the ID token with use of the address;
- following successful mutual authentication of the APV computer system and the ID token, reading the first attribute specification (AR) from the protected memory area of the ID token and dividing the read first attribute specification into at least a second attribute specification (AR1) and a third attribute specification (AR2) by the APV computer system;
- sending the second attribute specification (AR1) and the address (#□106) from the APV computer system to a first AP computer system (172) which is designed to provide the attributes specified in the second attribute specification, wherein the first AP computer system is a first attribute provider computer system, and sending the third and any further attribute specification (AR2, ..., ARn) and the address (#□106) of the ID token from the APV computer system to a further AP computer system (173, 174) which is designed to provide the attributes specified in the third or further attribute specification;
- in response to the receipt of the second attribute specification (AR1) and of the address by the first AP computer system, determining a first amount (A1) of attributes which are specified in the second attribute specification, and initialising a mutual authentication of the first AP computer system and of the ID token with use of the address;
- following mutual authentication of the first AP computer system and the ID token, writing the first attribute amount (A1) by the first AP computer system to the protected memory area of the ID token and sending a confirmation signal (S1) from the first attribute provider computer system to the attribute provider directory computer system (199);
- once a confirmation signal (S2, S3, ..., Sn) has been obtained from the first and each of the further AP computer systems, which signal indicates that the AP computer system in question was able to fully provide the attribute amount to be determined thereby and was able to write this into the protected memory of the ID token, sending a termination signal (SAPV) from the APV computer system to the user computer system;
- in response to the receipt of the termination signal, sending a second message (180) from the user computer system to the service computer system in order to prompt the service computer system to read the written attribute amounts (A1, A2, ..., An) from the protected memory area via the first ID provider module.

2. The method according to claim 1, wherein the ID token is free of a software- or hardware-based program logic which is designed to initiate the establishment of new communication channels or the activation of existing communication channels to the user computer system, the ID provider module, the APV computer system and/or the first AP computer system depending on the content of the protected memory area.

3. The method according to either one of the preceding claims, also comprising the following steps:
- following successful mutual authentication of the ID provider module and ID token, initialising the establishment of a first protected transmission channel (SM[CA]#□1) between the ID provider module and the ID token by the ID provider module, wherein the first attribute specification (105) is written via the first protected transmission channel;
- following successful mutual authentication of the APV computer system and ID token, initialising the establishment of a second protected transmission channel (SM[CA]#□2) between the APV computer system and the ID token by the APV computer system, wherein the first attribute specification (AR) is read from the protected memory area of the ID token via the second protected transmission channel;
- following successful mutual authentication of the first AP computer system and ID token, initialising the establishment of a third protected transmission channel (SM[CA]#□3) between the first AP computer system and the ID token by the first AP computer system, wherein the first attribute amount (A1) is written into the protected memory area of the ID token via the third protected transmission channel;
- wherein all further attribute amounts (A2, ..., An) that are determined by any one of the further AP computer systems are written into the protected area of the ID token only following successful mutual authentication of the particular further AP computer system and the ID token and only via a further protected transmission channel (SM[CA]#□4, SM[CA]#□5) established following mutual authentication,
wherein in particular data transmitted via the first, second or third protected transmission channel are protected against access by the user computer system.

4. The method according to claim 3, also comprising the following steps:
- in response to the receipt of the termination signal, sending a switch command (SC[CA]#□1) from the user computer system to the ID token in order to prompt the ID token to activate the first protected transmission channel SM[CA]#□1);
- reading the written attribute amounts (A1, A2, ..., An) from the protected memory area by the ID provider module via the activated protected first transmission channel; and/or
also comprising the following steps:
- once the first attribute specification (AR) has been written in the protected memory area, sending a switch command (SC[PACE]) from the APV computer system to the ID token via the first protected communication channel, wherein the switch command (SC[PACE]) prompts the ID token to activate the local protected transmission channel (SM[PACE]); and/or
- in response to receiving the termination signal (SAPV) by the user computer system, sending a further switch command (SC[CA]#□1) via the activated local transmission channel, wherein the further switch command (SC[CA]#□1) prompts the ID token to activate the first protected transmission channel (SM[CA]#□1),
- reading the written attribute amounts (A1, A2, ..., An) from the protected memory area by the ID provider module via the activated protected first transmission channel (SM[CA]#□1); and/or
also comprising the following steps:
- once the first attribute amount (A1) has been written in the protected memory area, sending a switch command (SC[PACE]) from the first AP computer system to the ID token via the third protected communication channel (SM[CA]#□3), wherein the switch command (SC[PACE]) prompts the ID token to activate the local protected transmission channel (SM[PACE]);
- use of the activated local protected transmission channel to transmit authentication data via the local protected transmission channel during the course of the mutual authentication of the next-used of the further AP computer systems and ID token.

5. The method according to claim 4, also comprising the following steps:
- storing the cryptographic keys that were used to establish each of the protected channels,
- wherein the ID token is configured to activate and deactivate each of the protected transmission channels depending on a switch command (SC[PACE], SC[CA]#□1, SC[CA]#□2), wherein an activation includes the reuse of the stored cryptographic key of the transmission channel to be activated.

6. The method according to any one of the preceding claims, also comprising the following steps:
- analysing the first attribute specification by the APV computer system in order to determine all classes of attributes to which at least one of the attributes specified in the first attribute specification belongs; and
- determining the first, second and each further of the AP computer systems as those AP computer systems that are designed to provide user-related attributes of one of the determined attribute classes; and/or
- wherein the APV computer system is designed to identify a plurality of first AP computer systems (172; 1722) which are each designed to provide attributes of a certain attribute class; and
- wherein the second attribute specification (AR1) and the address (#□106) are sent selectively to the identified first AP computer system which, in respect of one of the following criteria, has a higher value than the other identified first AP computer systems:
∘ number of attributes, specified in the second attribute specification, which can be provided;
∘ awarded trust level of the provided attributes;
∘ amount of currently available data processing resources;
∘ degree of previously observed reliability and availability of the identified first attribute provider computer system;
- wherein in particular each of the identified first attribute provider computer systems (172, 1722) can provide merely part of the attributes specified in the second attribute specification (AR1);
- wherein in particular the APV computer system, in a number of iterations, in each case prompts one of the identified first AP computer systems to provide as many of the attributes specified in the second attribute specification as possible and to store these in the ID token and, for the next iteration, prompts the storage of a new version of the second attribute specification in the ID token, wherein the new version selectively contains only those attributes of the original second attribute specification which were not provided in any of the previously performed iterations.

7. The method according to any one of the preceding claims, further comprising:
- transmitting a first signature request from the first AP computer system (172) to the ID token in order to generate a digital signal of the second attribute specification (AR1);
- generating the digital signature of the second attribute specification by the ID token;
- transmitting the generated digital signature to the first AP computer system (172);
- verifying the transmitted digital signature by the first AP computer system using a public signature verification key, wherein the determination of the first amount of attributes according to the second attribute specification by the first AP computer system and the storage of the first amount of attributes in the ID token are performed only if the verification indicates that the digital signature is valid;
wherein, in particular in the protected memory area of the ID token, for each of the AP computer systems (172, 1722, 1723, 173, 174) a separate private signing key is stored, which is associated with one of the AP computer systems, wherein each of the AP computer systems has access to a public signature verification key, which together with the private signing key associated with the AP computer system forms an asymmetric cryptographic key pair, wherein the public signature verification key is designed to check the validity of a digital signature generated by the corresponding private signing key.

8. The method according to any one of the preceding claims, wherein the ID token has a communication interface (108) for communicating with a reader (101) of the user computer system (100),
- wherein the communication interface of the ID token is designed for wireless communication and for wireless coupling of energy into the ID token through the reader in order to supply the ID token with the electrical energy necessary for its operation; and/or
- wherein the ID token has a volatile electronic memory (113), in which the first attribute specification is stored, so that the first attribute specification is deleted from the volatile electronic memory if the ID token is moved out of range of the reader, and wherein the first and second amounts of attributes stored in the ID token on account of the write access of the first and second AP computer systems (172, 173) are stored in the non-volatile electronic memory (118) so that they can be accessed by a subsequent further read access on account of a further service request; or
- wherein alternatively the first attribute specification and the first and second amount of attributes are stored in the non-volatile memory.

9. The method according to any one of the preceding claims,
- wherein the ID provider module is authenticated to the ID token with the aid of an authorisation certificate (144) of the ID provider module in which read permissions of the ID provider module for reading attributes from the ID token are specified, wherein the ID token, for the read access of the ID provider module, verifies the read authorisation of the ID provider module with the aid of the authorisation certificate; and
- wherein write permissions of the ID provider module for writing the first attribute specification in the ID token are specified in the authorisation certificate, wherein the ID token, for the write access of the ID provider module, verifies the write authorisation of the ID provider module with the aid of the authorisation certificate.

10. The method according to any one of the preceding claims,
- wherein the first AP computer system (172) is authenticated to the ID token with the aid of an authorisation certificate of the first AP computer system in which write permissions of the first AP computer system for writing the first amount of attributes (A1) in the ID token are specified; and
- wherein the ID token verifies the write authorisation of the first AP computer system with the aid of the authorisation certificate before the ID token approves the AP computer system for writing of the first attribute amount.

11. The method according to claim 10, wherein the authorisation certificate of the first AP computer system:
- does not grant the first AP computer system authorisation to read the first attribute specification or to read attributes that are stored in the protected memory area of the ID token; or
- grants the first AP computer system authorisation to read only a certain part of the first attribute specification that selectively specifies only attributes of a certain attribute class; and/or
- wherein the protected memory area of the ID token contains a plurality of sub-areas, wherein each sub-area is associated specifically with an attribute class,
- wherein the ID token enables reading and/or writing access of the first AP computer system to one of the sub-areas only if the authorisation certificate of the first AP computer system contains proof of read and/or write authorisation for this sub-area; and
- wherein the authorisation certificate of the first attribute provider computer system grants the first AP computer system authorisation to write the second attribute amount and optionally also to read attribute specifications only in those sub-areas allocated to the attribute class which the first attribute provider is designed to provide.

12. An ID token which is assigned to a user (102), wherein the ID token has an electronic memory (118) with a protected memory area (124), in which attributes are stored, wherein access to the protected memory area is possible only via a processor (128) of the ID token, wherein the ID token has a communication interface (108) for communicating with a reader of a user computer system (100), wherein the user computer system is coupled to an ID provider module via a network, and wherein the ID token is configured to carry out the following steps:
- mutually authenticating the ID provider module and the ID token in interoperation with the ID provider module;
- establishing a first protected transmission channel (SM[CA]#□1) with end-to-end encryption between the ID token and the ID provider module via the network;
- receiving a first attribute specification (105) from the ID provider module and storing the received first attribute specification in a protected memory area of the ID token, wherein the first attribute specification specifies those attributes which the service computer system requires in order to provide the service requested by means of the service request;
- mutually authenticating an APV computer system and the ID token;
- following mutual authentication of the APV computer system and the ID token, verifying an APV computer system-specific authorisation certificate in order to determine whether the APV computer system is authorised to read the first attribute specification from the protected memory area; if the APV computer system is authorised to read the first attribute specification, allowing the read access to read the first attribute specification in order to enable the APV computer system to divide the read first attribute specification into at least a second attribute specification (AR1) and a third attribute specification (AR2);
- mutually authenticating a first AP computer system, which is designed to provide attributes that are specified in the second attribute specification, and the ID token;
- following mutual authentication of the first AP computer system and the ID token, verifying a first AP computer system-specific authorisation certificate in order to determine whether the first AP computer system is authorised to read the first attribute specification from the protected memory area; if the first AP computer system is authorised to write attributes into the protected memory area of the ID token, allowing the write access of the first AP computer system to the protected memory area in order to store a first attribute amount (A1) in the ID token, wherein the first amount consists of attributes that are specified in the second attribute specification and were determined by the first attribute provider computer system.

13. The ID token according to claim 12, wherein the ID token is designed to authenticate itself to a second and one or more further AP computer systems (172, 1722, 1723, 173, 174) which are each designed to provide attributes of a specific attribute class, wherein the ID token in this regard receives an AP computer system-specific authorisation certificate from the authenticating attribute provider computer system and uses this in order to verify authorisation for each write access for writing attribute amounts, and/or
- wherein the communication interface of the ID token is designed for wireless communication and for wireless coupling of energy into the ID token through the reader in order to supply the ID token with the electrical energy necessary for its operation; and/or
- wherein the ID token has a volatile electronic memory (113), in which the first attribute specification is stored, so that the first attribute specification is deleted from the volatile electronic memory if the ID token is removed from the range of the reader, and wherein the attributes stored in the ID token on account of the write access of the first and second AP computer systems (172, 173) are stored in the non-volatile electronic memory (118) so that they can be accessed by a subsequent further read access on account of a further service request; or
- wherein alternatively the first attribute specification and the first and second amount of attributes are stored in the non-volatile memory.

14. An AP computer system (172, 1722, 173, 174) with a network interface (138) for accessing an ID token (106) via a network (116), wherein the AP computer system is an attribute provider computer system and is configured to carry out the following steps:
- receiving a second attribute specification (AR1), which is a subset of a first attribute specification generated by a service computer system, from an APV computer system, wherein the APV computer system is an attribute provider directory computer system which is designed to divide the first attribute specification into the second and further attribute specifications, and receiving an address (#□106) of the ID token from the APV computer system;
- in response to receipt of the second attribute specification and the address, determining a first amount (A1) of attributes which are specified in the second attribute specification, and initialising a mutual authentication of the AP computer system and the ID token with use of the address;
- following the mutual authentication of the AP computer system and the ID token, establishing a protected communication channel (SM[CA]#□3), writing the first attribute amount (A1) by the AP computer system via the protected communication channel to the protected memory area of the ID token; and
- sending a confirmation signal (S2, S3, ..., Sn), which indicates whether the AP computer system was able to fully provide the first attribute amount and write it into the protected memory area of the ID token, from the AP computer system to the APV computer system.

15. The AP computer system (172, 1722, 173, 174) according to claim 14, wherein the AP computer system is configured to carry out the following steps:
- transmitting a signature request to the ID token in order to prompt the ID token to digitally sign the second attribute specification,
- receiving the signature of the second attribute specification (AR1) by the AP computer system from the ID token;
- performing a signature verification of the signed second attribute specification;
- wherein the first attribute amount (A1) specified in the read second attribute specification is determined by the AP computer system and stored in the ID token only if the signature verification indicates that the signature of the second attribute specification is valid, and wherein the signature request and the signature are preferably transmitted between ID token and the AP computer system via the protected communication channel (SM[CA]#□3); and/or
comprising an authorisation certificate for authentication to the ID token,
- wherein permissions of the AP computer system to write the first attribute amount into the ID token are specified in the authorisation certificate,
- wherein the authorisation certificate preferably does not allow read access to attributes that are stored in the ID token;
- wherein the authorisation certificate optionally contains permissions of the AP computer system to read and write different versions of the second attribute specification; and/or
- wherein the read and/or write authorisation relates preferably selectively only to a sub-area of the memory area of the ID token allocated to an attribute class which the AP computer system is designed to provide.

16. An APV computer system which is connected to a user computer system, a first AP computer system and a second AP computer system via a network, wherein the user computer system is coupled via a reader to an ID token which has a non-volatile electronic memory (118) with a protected memory area (124), wherein access to the protected memory area is possible only via a processor (128) of the ID token, wherein the APV computer system is an attribute provider directory computer system and is configured to:
- receive a trigger signal (T1) from the user computer system, wherein the first trigger signal is free from a first attribute specification (105) and from parts thereof and includes an address (#□106) of the ID token (106), wherein the first attribute specification specifies user-related attributes which are required by a service requested by a user of the user computer system in order for said service to be provided;
- in response to receipt of the trigger signal, mutually authenticating the APV computer system (199) and the ID token with use of the address;
- following successful mutual authentication of the APV computer system and the ID token, reading the first attribute specification (AR) from the protected memory area of the ID token and dividing the read first attribute specification into at least a second attribute specification (AR1) and a third attribute specification (AR2) by the APV computer system;
- sending the second attribute specification (AR1) and the address (#□106) from the APV computer system to a first AP computer system (172) which is designed to provide the attributes specified in the second attribute specification, wherein the first AP computer system is a first attribute provider computer system, and sending the third attribute specification (AR2) and the address (#□106) of the ID token from the APV computer system to the second AP computer system (173), which is designed to provide the attributes specified in the third attribute specification;
- in response to the receipt of confirmation signals (S2, S3, ..., Sn) which indicate that the first, second and any further AP computer system which received a subset of the first attribute specification from the APV computer system has fully provided the attribute amount to be determined by said AP computer system and was able to write this into the protected memory of the ID token, sending a termination signal (SAPV) to the user computer system.

17. A computer system comprising:
- an ID token according to any one of preceding claims 12-13,
- comprising a first and a second AP computer system according to any one of claims 14-15,
- an APV computer system according to claim 16;
- a user computer system which is coupled via a reader to the ID token and via a network to a service computer system and at least to the APV computer system; and
- an ID provider module (136), wherein the ID provider module is part of the service computer system (150) or is operatively coupled to the service computer system via a network (116).

## Revendications

1. Procédé de lecture d'attributs à partir d'un jeton d'identification (106), qui est associé à un utilisateur (102), le jeton d'identification présentant une mémoire (118) électronique non volatile avec une zone de mémoire (124) sécurisée, où un accès à la zone de mémoire sécurisée n'est possible que par le biais d'un processeur (128) du jeton d'identification, avec les étapes suivantes :
- l'envoi (302) d'une demande de service (103) d'un utilisateur d'un système informatique d'utilisateur (100) à un système informatique de service (150), lequel est couplé avec un module de fournisseur d'identification (136) ;
- en réponse à la réception de la demande de service, l'envoi d'une première spécification d'attributs (105) du système informatique de service au module de fournisseur d'identification, la première spécification d'attributs spécifiant les attributs en question dont le système informatique de service a besoin pour la fourniture du service demandé avec la demande de service, et l'authentification réciproque du module de fournisseur d'identification et du jeton d'identification ;
- après l'authentification réciproque réussie du module de fournisseur d'identification et du jeton d'identification, l'écriture de la première spécification d'attributs (105) dans la zone de mémoire sécurisée du jeton d'identification par le module de fournisseur d'identification et l'envoi d'une première information que la première spécification d'attributs a été écrite, par le système informatique de service au système informatique d'utilisateur ;
- en réponse à la réception de la première information, l'envoi d'un signal de déclenchement (T1) du système informatique d'utilisateur à un système informatique d'APV, le système informatique d'APV étant un système informatique d'annuaire de fournisseurs d'attributs, où le premier signal de déclenchement est exempt de la première spécification d'attributs (105) et de ses parties et contient une adresse (#106) du jeton d'identification (106) ;
- en réponse à la réception du signal de déclenchement, l'authentification réciproque du système informatique d'APV (199) et du jeton d'identification, moyennant l'emploi de l'adresse ;
- après l'authentification réciproque réussie du système informatique d'APV et du jeton d'identification, la lecture de la première spécification d'attributs (AR) à partir de la zone de mémoire sécurisée du jeton d'identification et la subdivision de la première spécification d'attributs lue en au moins une deuxième spécification d'attributs (AR1) et une troisième spécification d'attributs (AR2) par le système informatique d'APV ;
- l'envoi de la deuxième spécification d'attributs (AR1) et de l'adresse (#106) du système informatique d'APV à un premier système informatique d'AP (172), lequel est prévu pour mettre à disposition les attributs spécifiés dans la deuxième spécification d'attributs, où le premier système informatique d'AP est un premier système informatique de fournisseur d'attributs, et l'envoi de la troisième et de chaque nouvelle spécification d'attributs (AR2, ..., Arn) et de l'adresse (#106) du jeton d'identification du système informatique d'APV chaque fois à un nouveau système informatique d'AP (173, 174), lequel est prévu pour mettre à disposition les attributs spécifiés dans la troisième ou dans les nouvelles spécifications d'attributs ;
- en réponse à la réception de la deuxième spécification (AR1) et de l'adresse par le premier système informatique d'AP, la détermination d'une première quantité (A1) d'attributs qui sont spécifiés dans la deuxième spécification d'attributs, et l'initialisation d'une authentification réciproque du premier système informatique d'AP et du jeton d'identification, moyennant l'emploi de l'adresse ;
- après l'authentification réciproque du premier système informatique d'AP et du jeton, l'écriture de la première quantité d'attributs (A1) par le premier système informatique d'AP sur la zone de mémoire sécurisée du jeton d'identification et l'envoi d'un signal de confirmation (S1) du premier système informatique de fournisseur d'attributs au système informatique d'annuaire de fournisseurs d'attributs (199) ;
- après la réception d'un signal de confirmation (S2, S3, ...., Sn), lequel indique que le système informatique d'AP respectif a pu mettre à disposition la quantité d'attributs déterminée totalement par celui-ci, et a pu l'écrire dans la mémoire sécurisé du jeton d'identification, l'envoi d'un signal de planification (SAPV) du système informatique d'AP au système informatique d'utilisateur ;
- en réponse à la réception du signal de planification, l'envoi d'une deuxième information (180) du système informatique d'utilisateur au système informatique de service afin de faire en sorte que le système informatique de service lise les quantités d'attributs (A1, A2, ..., An) écrites à partir de la zone de mémoire sécurisée par le biais du premier module de fournisseur d'identification.

2. Procédé selon la revendication 1, dans lequel le jeton d'identification est exempt d'une logique de programme basée sur un logiciel ou un matériel qui est prévue, en fonction du contenu de la zone de mémoire sécurisée, pour initier l'établissement de nouveaux canaux de communication ou l'activation de canaux étant présents vers le système informatique d'utilisateur, vers le module de fournisseur d'identification, vers le système informatique d'APV et/ou vers le premier système informatique d'AP.

3. Procédé selon l'une des revendications précédentes, en outre avec :
- après l'authentification réciproque réussie du module de fournisseur d'identification et du jeton d'identification, l'initialisation de l'établissement d'un premier canal de transmission sécurisé (SM[CA]#1) entre le module de fournisseur d'identification et le jeton d'identification par le module de fournisseur d'identification, où l'écriture de la première spécification d'attributs (105) a lieu par le biais du premier canal de transmission sécurisé ;
- après l'authentification réciproque réussie du module de système informatique d'APV et du jeton d'identification, l'initialisation de l'établissement d'un deuxième canal de transmission sécurisé (SM[CA]#2) entre le système informatique d'APV et le jeton d'identification par le système informatique d'APV, où la lecture de la première spécification d'attributs (105) a lieu à partir de la zone de mémoire sécurisée du jeton d'identification par le biais du deuxième canal de transmission sécurisé ;
- après l'authentification réciproque réussie du premier système informatique d'AP et du jeton d'identification, l'initialisation de l'établissement d'un troisième canal de transmission sécurisé (SM[CA]#3) entre le premier système informatique d'AP et le jeton d'identification par le premier système informatique d'AP, où l'écriture de la première quantité d'attributs (A1) s'effectue dans la zone de mémoire sécurisée du jeton d'identification par le biais du troisième canal de transmission sécurisé ;
- où l'écriture de toutes les nouvelles quantités d'attributs (A2, ..., An) qui ont été respectivement déterminées par l'un des autres systèmes informatiques d'AP a lieu dans la zone sécurisée du jeton d'identification uniquement après une authentification réciproque réussie de l'autre système informatique d'AP respectif et du jeton d'identification et uniquement par le biais d'un autre canal de transmission sécurisé (SM[CA]#4, SM[CA]#5) établi respectivement après une authentification réciproque,
où, en particulier, des données qui sont transmises par le premier, le deuxième ou le troisième canal de transmission sécurisé sont protégées avant l'accès du système informatique d'utilisateur.

4. Procédé selon la revendication 3, avec en outre :
- en réponse à la réception du signal de planification, l'envoi d'une commande de commutation (SC[CA]#1) du système informatique d'utilisateur vers le jeton d'identification afin de faire en sorte que le jeton d'identification active le premier canal de transmission sécurisé (SM[CA]#1) ;
- la lecture des quantités d'attributs (A1, A2, ..., An) écrites à partir de la zone de mémoire sécurisée par le module de fournisseur d'identification par le biais du premier canal de transmission sécurisé activé ; et/ou
en outre avec :
- après l'écriture réussie de la première spécification d'attributs (AR) dans la zone de mémoire sécurisée, l'envoi d'une commande de commutation (SC[PACE]) du système informatique d'APV vers le jeton d'identification par le biais du premier canal de communication sécurisé, la commande de commutation (SC[PACE]) faisant en sorte que le jeton d'identification active le canal de transmission sécurisé (SM[PACE]) local ; et/ou
- en réponse à l'obtention du signal de planification (SAPV) par le système informatique d'utilisateur, l'envoi d'une nouvelle commande de commutation (SC[CA]#1) par le biais du canal de transmission local activé, la nouvelle commande de commutation (SC[CA]#1) faisant en sorte que le jeton d'identification active le premier canal de transmission sécurisé (SM[CA]#1),
- la lecture des quantités d'attributs (A1, A2, ..., An) écrites à partir de la zone de mémoire sécurisée par le module de fournisseur d'identification par le biais du premier canal de transmission sécurisé (SM[CA]#1) activé ; et/ou
en outre avec :
- après l'écriture réussie de la première quantité d'attributs (A1) dans la zone de mémoire sécurisée, l'envoi d'une commande de commutation (SC[PACE]) du premier système informatique d'AP vers le jeton d'identification par le biais du troisième canal de communication sécurisé (SM[CA]#3), la commande de commutation (SC[PACE]) faisant en sorte que le jeton d'identification active le canal de transmission sécurisé (SM[PACE]) local ;
- l'utilisation du canal de transmission sécurisé local activé pour la transmission de données d'authentification par le biais du canal de transmission sécurisé local dans le cadre de l'authentification réciproque du système informatique employé ultérieur parmi les autres systèmes informatiques d'AP et du jeton d'identification.

5. Procédé selon la revendication 4, avec en outre :
- le stockage des clés cryptographiques qui ont été employées pour l'établissement de chacun des canaux sécurisés,
- le jeton d'identification étant configuré pour, en fonction d'une commande de commutation (SC[PACE]), SC[Ca]#1, SC[CA]#2), activer et désactiver chacun des canaux de transmission sécurisés, où une activation contient la réutilisation de la clé cryptographique stockée du canal de transmission à activer.

6. Procédé selon l'une des revendications précédentes, en outre avec :
- une analyse de la première spécification d'attributs par le système informatique d'APV pour la détermination de toutes les classes d'attributs auxquelles appartient au moins un des attributs spécifiés dans la première spécification d'attributs ; et
- la détermination des premier, deuxième et de chaque nouveau systèmes informatiques d'AP en tant que systèmes informatiques d'AP qui sont conçus pour fournir des attributs se rapportant à l'utilisateur d'une des classes d'attributs déterminées ; et/ou
- le système informatique d'APV étant conçu pour identifier plusieurs premiers systèmes informatiques d'AP (172 ; 1722) qui sont prévus respectivement pour la mise à disposition d'attributs d'une classe d'attributs définie ; et
- l'envoi de la deuxième spécification d'attributs (AR1) et de l'adresse (#106) ayant lieu sélectivement vers le premier système informatique d'AP identifié en question, lequel présente une valeur plus élevée en ce qui concerne les critères suivants, par rapport aux autres premiers systèmes informatiques d'AP identifiés :
∘ un nombre d'attributs spécifiés dans la deuxième spécification d'attributs qui peuvent être fournis ;
∘ un niveau de confiance des attributs fournis octroyé,
∘ une quantité de ressources de traitement de données actuellement disponibles ;
∘ un degré de confiance observé jusqu'à présent et de disponibilité du premier système informatique de fournisseur d'attributs identifié ;
- dans lequel, en particulier, chacun des premiers systèmes informatiques de fournisseurs d'attributs (172, 1722) identifiés peut fournir simplement une partie des attributs spécifiés dans la deuxième spécification d'attributs (AR1) ;
- dans lequel, en particulier, le système informatique d'APV, en plusieurs itérations, fait en sorte que respectivement l'un des premiers systèmes informatiques d'AP identifiés mette à disposition si possible de nombreux parmi les attributs spécifiés dans la deuxième spécification d'attributs et les stocke dans le jeton d'identification et fait en sorte de stocker une nouvelle version de la deuxième spécification d'attributs dans le jeton d'identification pour la prochaine itération, la nouvelle version contenant sélectivement uniquement encore les attributs en question de la deuxième spécification d'attributs d'origine qui ont été mis à disposition dans aucune des itérations effectuées jusqu'à présent.

7. Procédé selon l'une des revendications précédentes, en outre avec :
- la transmission d'une première demande de signature du premier système informatique d'AP (172) au jeton d'identification pour la création d'une signature numérique de la deuxième spécification d'attributs (AR1) ;
- la création de la signature numérique de la deuxième spécification d'attributs par le jeton d'identification ;
- la transmission de la signature numérique créée au premier système informatique d'AP (172) ;
- la vérification de la signature numérique transmise par le premier système informatique d'AP avec une clé de vérification de signature publique, la détermination des attributs de la première quantité selon la deuxième spécification d'attributs par le premier système informatique d'AP et le stockage de la première quantité d'attributs dans le jeton d'identification n'ayant lieu que lorsque la vérification statue que la signature numérique est valide ;
où, en particulier, une clé de signature privée propre est stockée dans la zone de mémoire sécurisée du jeton d'identification pour chacun des systèmes informatiques d'AP (172, 1722, 1723, 173, 174), qui est associée à l'un des systèmes informatiques d'AP, où chacun des systèmes informatiques d'AP a accès à une clé de vérification de signature publique, laquelle est associée avec la clé de signature privée qui est associée au système informatique d'AP, formant une paire de clés cryptographiques asymétriques, où la clé de vérification de signature publique est prévue pour vérifier la validité d'une signature numérique générée par la clé de signature privée correspondante.

8. Procédé selon l'une des revendications précédentes, dans lequel le jeton d'identification présente une interface de communication (108) pour la communication avec un lecteur (101) du système informatique d'utilisateur (100),
- dans lequel l'interface de communication du jeton d'identification est prévue pour la communication sans fil et pour le couplage sans fil d'énergie dans le jeton d'identification par le lecteur afin d'alimenter le jeton d'identification avec l'énergie électrique nécessaire pour son fonctionnement ; et/ou
- dans lequel le jeton d'identification présente une mémoire électronique volatile (113) dans laquelle est stockée la première spécification d'attributs de sorte que la première spécification d'attributs est effacée de la mémoire électronique volatile lorsque le jeton d'identification est éloigné de la portée du lecteur, et dans lequel les premières et deuxièmes quantités des attributs stockées dans le jeton d'identification en raison de l'accès en écriture des premier et deuxième systèmes informatiques d'AP (172, 173), de sorte qu'on peut avoir accès à ceux-ci par un nouvel accès en lecture ultérieur en raison d'une nouvelle demande de service ; ou
- dans lequel la première spécification d'attributs et les première et deuxième quantités des attributs peuvent être stockées alternativement dans la mémoire non volatile.

9. Procédé selon l'une des revendications précédentes,
- dans lequel l'authentification du module de fournisseur d'identification vis-à-vis du jeton d'identification a lieu à l'aide d'un certificat d'autorisation (144) du module de fournisseur d'identification en ce que des droits de lecture du module de fournisseur d'identification sont spécifiés pour la lecture d'attributs à partir du jeton d'identification, dans lequel le jeton d'identification exécute une vérification de l'autorisation de lecture pour les accès en lecture du module de fournisseur d'identification à l'aide du certificat d'autorisation ; et
- dans lequel des droits d'écriture du module de fournisseur d'identification sont spécifiés dans le certificat d'autorisation pour l'écriture de la première spécification d'attributs dans le jeton d'identification, où le jeton d'identification effectue une vérification de l'habilitation en écriture du module de fournisseur d'identification pour les accès en écriture du module de fournisseur d'identification à l'aide du certificat d'autorisation.

10. Procédé selon l'une des revendications précédentes,
- dans lequel l'authentification du premier système informatique d'AP (172) vis-à-vis du jeton d'identification a lieu à l'aide d'un certificat d'autorisation du premier système informatique d'AP, dans lequel sont spécifiés des droits d'écriture du premier système informatique d'AP pour l'écriture de la première quantité des attributs (A1) dans le jeton d'identification ; et
- dans lequel le jeton d'identification exécute une vérification de l'autorisation en écriture du premier système informatique d'AP à l'aide du certificat d'autorisation avant que le jeton d'identification n'accorde l'écriture de la première quantité d'attributs au premier système informatique d'AP.

11. Procédé selon la revendication 10, dans lequel le certificat d'autorisation du premier système d'AP :
- n'attribue au premier système informatique d'AP l'autorisation ni pour la lecture de la première spécification d'attributs, ni pour la lecture d'attributs qui sont stockés dans la zone de mémoire sécurisée du jeton d'identification ; ou
- attribue au premier système informatique d'AP une autorisation uniquement pour la lecture d'une partie définie de la première spécification d'attributs qui spécifie sélectivement uniquement des attributs d'une classe d'attributs définie ; et/ou
- dans lequel la zone de mémoire sécurisée du jeton d'identification contient plusieurs zones secondaires, dans lequel, à chacune des zones secondaires est attribuée une classe d'attributs de manière spécifique,
- dans lequel le jeton d'identification ne permet un accès en lecture et/ou en écriture du premier système informatique d'AP sur l'une des zones secondaires que lorsque le certificat d'autorisation du premier système informatique d'AP contient une indication d'une autorisation de lecture et/ou d'écriture pour cette zone secondaire ; et
- dans lequel le certificat d'autorisation du premier système informatique de fournisseur d'attributs établit au premier système informatique d'AP une autorisation pour l'écriture de la deuxième quantité d'attributs et éventuellement également une autorisation pour la lecture de spécifications d'attributs uniquement dans les zones secondaires en question auxquelles la classe d'attributs en question est attribuée pour la fourniture de laquelle le premier fournisseur d'attributs est prévu.

12. Jeton d'identification qui est associé à un utilisateur (102), où le jeton d'identification présente une mémoire électronique (118) avec une zone de mémoire (124) sécurisée, dans laquelle sont stockés des attributs, où un accès à la zone de mémoire sécurisée n'est possible que par le biais d'un processeur (128) du jeton d'identification, et où le jeton d'identification présente une interface de communication (108) destinée à la communication avec un lecteur d'un système informatique d'utilisateur (100), où le système informatique d'utilisateur est couplé à un module de fournisseur d'identification par le biais d'un réseau, et où le jeton d'identification est configuré pour l'exécution des étapes suivantes :
- l'authentification réciproque du module de fournisseur d'identification et du jeton d'identification en interopération avec le module de fournisseur d'identification ;
- l'établissement d'un premier canal de transmission (SM[CA]#1) sécurisé avec un cryptage de bout en bout entre le jeton d'identification et le module de fournisseur d'identification par le biais du réseau ;
- la réception d'une première spécification d'attributs (105) du module de fournisseur d'identification et le stockage de la première spécification d'attributs reçue dans une zone de mémoire sécurisée du jeton d'identification, la première spécification d'attributs spécifiant les attributs en question dont a besoin le système informatique de service pour la délivrance du service demandé avec la demande de service ;
- l'authentification réciproque d'un système informatique d'APV et du jeton d'identification ;
- après l'authentification réciproque du système informatique d'APV et du jeton d'identification, la vérification d'un certificat d'autorisation spécifique au système informatique d'APV afin de constater si le système informatique d'APV est autorisé à la lecture de la première spécification d'attributs à partir de la zone de mémoire sécurisée ; dans le cas où le système informatique d'APV est autorisé pour la lecture de la première spécification d'attributs, l'autorisation à l'accès en lecture de la première spécification d'attributs, afin de permettre au système informatique d'APV de subdiviser la première spécification d'attributs lue en au moins une deuxième spécification d'attributs (AR1) et une troisième spécification d'attributs (AR2) ;
- l'authentification réciproque d'un premier système informatique d'AP qui est prévu pour la mise à disposition d'attributs, qui sont des attributs spécifiques à la deuxième spécification d'attributs, et du jeton d'identification ;
- après l'authentification réciproque du système informatique d'APV et du jeton d'identification, la vérification d'un certificat d'autorisation spécifique au premier système informatique d'AP afin de constater si le système informatique d'AP est autorisé à la lecture de la première spécification d'attributs à partir de la zone de mémoire sécurisée ; dans le cas où le système informatique d'AP est autorisé pour l'écriture d'attributs dans la zone de mémoire sécurisée du jeton d'identification, l'autorisation d'un accès en écriture du premier système informatique d'AP à la zone de mémoire sécurisée pour le stockage d'une première quantité d'attributs (A1) dans le jeton d'identification, la première quantité étant constituée d'attributs qui sont spécifiés dans la deuxième spécification d'attributs et qui ont été déterminés par le premier système informatique de fournisseur d'attributs.

13. Jeton d'identification selon la revendication 12, où le jeton d'identification est prévu pour s'authentifier de manière réciproque avec un deuxième et un ou plusieurs nouveaux systèmes informatiques d'AP (172, 1722, 1723, 173, 174) qui sont respectivement prévus pour la mise à disposition d'attributs d'une classe d'attributs définie, où le jeton d'identification reçoit à cette occasion un certificat d'autorisation spécifique à un système informatique d'AP du système informatique de fournisseur d'attributs s'authentifiant et emploie celle-ci pour la vérification d'autorisation pour chaque accès en écriture pour l'écriture de quantités d'attributs, et/ou
- dans lequel l'interface de communication du jeton d'identification est prévue pour la communication sans fil et le couplage sans fil d'énergie dans le jeton d'identification par le lecteur afin d'approvisionner le jeton d'identification en énergie électrique nécessaire pour son fonctionnement ; et/ou
- dans lequel le jeton d'identification présente une mémoire électronique volatile (113), dans laquelle est stockée la première spécification d'attributs de sorte que la première spécification d'attributs est effacée de la mémoire électronique volatile lorsque le jeton d'identification est éloigné de la portée du lecteur, dans lequel les première et deuxième quantités d'attributs stockées dans le jeton d'identification en raison de l'accès en écriture des premier et deuxième systèmes informatiques d'AP (172, 173) sont stockées dans la mémoire électronique (118) non volatile de sorte qu'on puisse avoir accès à celles-ci par un nouvel accès en lecture ultérieur en raison d'une nouvelle demande de service ; ou
- dans lequel la première spécification d'attributs et les première et deuxième quantités d'attributs sont stockées alternativement dans la mémoire non volatile.

14. Système informatique d'AP (172, 1722, 173, 174) doté d'une interface de réseau (138) pour l'accès à un jeton d'identification (106) par le biais d'un réseau (116), le système informatique d'AP étant un système informatique de fournisseur d'attributs et étant configuré pour l'exécution des étapes suivantes :
- la réception d'une deuxième spécification d'attributs (AR1) qui est une partie de la première spécification d'attributs générée par le système informatique de service à partir d'un système informatique d'APV, le système informatique d'APV étant un système informatique d'annuaire de fournisseurs d'attributs qui est prévu pour la division de la première spécification d'attributs en la deuxième et les autres spécifications d'attributs et pour la réception d'une adresse (#106) du jeton d'identification provenant du système informatique d'APV ;
- en réponse à la réception de la deuxième spécification et de l'adresse, la détermination d'une première quantité (A1) d'attributs qui sont spécifiés dans la deuxième spécification d'attributs, et l'initialisation d'une authentification réciproque du système informatique d'AP et du jeton d'identification, moyennant l'emploi de l'adresse ;
- après l'authentification réciproque du système informatique d'AP et du jeton d'identification, l'établissement d'un canal de communication sécurisé (SM[CA]#3), l'écriture de la première quantité d'attributs (A1) par le système informatique d'AP sur la zone de mémoire sécurisée du jeton d'identification par le biais du canal de communication sécurisé ; et
- l'envoi d'un signal de confirmation (S2, S3, ...., Sn), lequel indique que le système informatique d'AP a pu mettre à disposition la première quantité d'attributs totalement, et a pu l'écrire dans la mémoire sécurisé du jeton d'identification, du système informatique d'AP au système informatique d'APV.

15. Système informatique d'AP (172, 1722, 173, 174) selon la revendication 14, où le système informatique d'AP est configuré pour l'exécution des étapes suivantes :
- la transmission d'une demande de signature au jeton d'identification pour que le jeton d'identification signe numériquement la deuxième spécification d'attributs,
- la réception de la signature de la deuxième spécification d'attributs (AR1) par le système informatique d'AP à partir du jeton d'identification ;
- l'exécution d'une vérification de signature de la spécification d'attributs signée ;
- où la première quantité d'attributs (A1) spécifiée dans la deuxième spécification d'attributs lue n'est déterminée par le système informatique d'AP et n'est stockée dans le jeton d'identification que si la vérification de signature a pour résultat que la signature de la deuxième spécification d'attributs est valide et où de préférence, la demande de signature et la signature sont transmises entre le jeton d'identification et le système informatique d'AP par le biais du canal de transmission sécurisé (SM[CA]#3) ; et/ou
doté d'un certificat d'autorisation pour l'authentification vis-à-vis du jeton d'identification,
- où des droits du système informatique d'AP pour l'écriture de la première quantité d'attributs dans le jeton d'identification sont spécifiés dans le certificat d'autorisation,
- où le certificat d'autorisation ne permet de préférence au système informatique d'AP aucun accès en lecture d'attributs qui sont stockés dans le jeton d'identification ;
- où le certificat d'autorisation contient en option des droits du système informatique d'AP pour la lecture et l'écriture de différentes versions de la deuxième spécification d'attributs ; et/ou
- où, de préférence, l'autorisation de lecture et/ou d'écriture ne concerne sélectivement qu'une zone secondaire de la zone de mémoire du jeton d'identification qui est associée à une classe d'attributs pour la fourniture de laquelle le système informatique d'AP est prévu.

16. Système informatique d'APV, qui est relié par le biais d'un réseau avec un système informatique d'utilisateur, un premier système informatique d'AP et un deuxième système informatique d'AP, le système informatique d'utilisateur étant couplé par le biais d'un lecteur à un jeton d'identification qui présente une mémoire électronique non volatile (118) dotée d'une zone de mémoire (124) sécurisée, où un accès à la zone de mémoire sécurisée n'est possible que par le biais d'un processeur (128) du jeton d'identification, où le système informatique d'APV est un système informatique d'annuaire de fournisseurs d'attributs et est configuré pour :
- la réception d'un signal de déclenchement (T1) du système informatique d'utilisateur, où le premier signal de déclenchement est exempt d'une première spécification d'attributs (105) et de ses parties et contient une adresse (#106) du jeton d'identification (106) ;
où la première spécification d'attributs spécifie des attributs associés à l'utilisateur dont a besoin un service sollicité par un utilisateur du système informatique d'utilisateur pour sa réalisation ;
- en réponse à la réception du signal de déclenchement, l'authentification réciproque du système informatique d'APV (199) et du jeton d'identification, moyennant l'emploi de l'adresse ;
- après l'authentification réciproque réussie du système informatique d'APV et du jeton d'identification, la lecture de la première spécification d'attributs (AR) à partir de la zone de mémoire sécurisée du jeton d'identification et la subdivision de la première spécification d'attributs lue en au moins une deuxième spécification d'attribut (AR1) et une troisième spécification d'attributs (AR2) par le système informatique d'APV ;
- l'envoi de la deuxième spécification d'attributs (AR1) et de l'adresse (#106) du système informatique d'APV à un premier système informatique d'AP (172), lequel est prévu pour mettre à disposition les attributs spécifiés dans la deuxième spécification d'attributs, où le premier système informatique d'AP est un premier système informatique de fournisseur d'attributs, et l'envoi de la troisième spécification d'attributs (AR2) et de l'adresse (#106) du jeton d'identification du système informatique d'APV au deuxième système informatique d'AP (173), lequel est prévu pour mettre à disposition les attributs spécifiés dans la troisième spécification d'attributs ;
- en réponse à la réception de signaux de confirmation (S2, S3, ...., Sn), lesquels indiquent que le premier, le deuxième et chaque nouveau système informatique d'AP a reçu une partie de la première spécification d'attributs par le système informatique d'APV, la quantité d'attributs à déterminer respectivement par ce système informatique d'AP a été totalement mise à disposition et a été écrite dans la mémoire sécurisée du jeton d'identification, l'envoi d'un signal de planification (SAPV) au système informatique d'utilisateur.

17. Système informatique doté
- d'un jeton identification selon l'une des revendications précédentes 12 et 13,
- doté d'un premier et d'un deuxième système informatique d'AP selon l'une des revendications 14 et 15,
- d'un système informatique d'APV selon la revendication 16 ;
- d'un système informatique d'utilisateur qui est couplé au jeton d'identification par le biais d'un lecteur et à un système informatique de service par le biais d'un réseau et au moins au système informatique d'APV ; et
- d'un module de fournisseur d'identification (136), où le module de fournisseur d'identification fait partie intégrante du système informatique de service (150) ou est couplé fonctionnellement au système informatique de service par le biais d'un réseau (116).
